# EUROPEAN PATENT APPLICATION

(11) **EP 1 235 380 A1**
(43) Date of publication of application: **28.08.2002**
(21) Application number: 01976764.9
(22) Date of filing: 19.10.2001
(51) Int. Cl.: H04L 9/00, G11B 27/00, G11B 20/10

(54) **DATA REPRODUCING/RECORDING APPARATUS / METHOD AND LIST UPDATING METHOD**

(30) Priority: 20.10.2000 JP 2000320804
(71) Applicant: Sony Corporation, Tokyo 141-0001 (JP)
(72) Inventor: AKISHITA, Toru, c/o SONY CORPORATION, Tokyo 141-0001 (JP); ISHIBASHI, Yoshihito, c/o SONY CORPORATION, Tokyo 141-0001 (JP); YOSHINO, Kenji, c/o SONY CORPORATION, Tokyo 141-0001 (JP); SHIRAI, Taizo, c/o SONY CORPORATION, Tokyo 141-0001 (JP)
(74) Representative: Pilch, Adam John Michael
(86) International application number: JP0109182
(87) International publication number: WO02033880

(57) **Abstract**

Identifiers for both media and contents which are difference categories are stored in a revocation list, and also version information is set. Further, the list is capable of being set up in a memory interface, and can be continuously used at the time of mounting media and at the time of reproducing contents. Upon reading out contents, the version of the revocation list which the device holds is verified, and in the event that the version of the revocation list held is older, reading out of contents is cancelled. Also, the configuration allows unauthorized contents and unauthorized media to be revoked by performing collation with a media identifier at the time of mounting media, and collation with a contents identifier at the time of using contents.

## Description

### Technical Field

The present invention relates to a data reproducing device, data recording device, and data reproducing method, data recording method, list updating method, and program providing medium. The present invention particularly relates to a data reproducing device, data recording device, and data reproducing method, data recording method, list updating method, and program providing medium, which enables version managing of revocation lists generated in order to revoke unauthorized media, unauthorized contents, etc., and also enables efficient reference and usage of revocation lists.

### Background Art

The rapid spread of the Internet in recent years, along with widespread use of mobile type miniature players, game devices, etc., has led to a rapid increase in distribution of various types of soft data such as music data, game programs, image data, and so forth (hereafter referred to as contents) via networks such as the Internet or the like or recording media such as DVDs, CD, memory cards, and the like. These distributed contents may be subjected to contents playing processing or program execution by being received from a network by a PC (personal computer) owned by a user, a dedicated reproducing device, or a game device, and stored in a recording medium, or mounting a recording medium such as a memory card, CD, DVD, etc., storing the contents, to a dedicated reproducing device or game device.

A device which is recently often used as a contents recording device is flash memory. Flash memory is a sort of non-volatile memory which can be electrically rewritten, called EEPROM (Electrically Erasable Programmable ROM). Conventional EEPROM has one bit configured with two transistors, so the area occupied by one bit is great, and there has been limits to the extent of increasing integration, but flash memory enables one bit to be realized with one transistor, by block erasing for all bits. There are hopes for flash memory to replace recording media such as magnetic disks, optical disks, and so forth.

Memory cards wherein flash memory is configured so as to be detachable from data recording/reproducing devices are also known. Using such memory cards allows digital audio recording/reproducing devices to be realized using memory cards instead of disk-formed media such as conventional CDs (Compact Disk: a registered trademark) and MDs (Mini-Disk: a registered trademark) and the like.

In the event of using contents storing device using flash memory with personal computers (PC), reproducing device, or the like, a file managing system called FAT (File Allocation Table) is commonly used as an access information table. With a FAT system, upon a necessary file being defined, parameters necessary therein are set in order from the head of the file. Consequently, the file size can be made to be variable, and one file can be configured of one or multiple managing units (sectors, clusters, etc.). Items related to the managing units is written to the table called a FAT. This FAT system allows files to be readily structured, regardless of the physical properties of the recording medium. Accordingly, the FAT system can be employed with not only floppy disks and hard disk, but with magneto-optical disks, as well. FAT systems are being employed with the above-described memory cards, also.

The various kinds of contents such as music data, image data, programs, etc., are called up from the above-described flash memory for example, based on the above-described FAT, by user instructions from a reproducing device, game device, information device main unit such as a PC or the like, used as reproducing equipment, or user instructions via connected input means, and then reproduced through the information device main unit, or connected displays, speakers, etc.

Further, with many software contents such as the game programs, music data, image data, etc., generally, the creator and distributor hold the rights to distribution. Accordingly, with regard to distribution of these contents, it is common that use of software is permitted only for certain usage restrictions, i.e., for a valid user, and steps are taken so that unpermitted copying and the like does not occur, i.e., the configuration takes security into consideration.

One technique for realizing usage restrictions for users is encrypting processing of distribution contents. That is, various types of contents such as audio data, image data, game programs, etc., that have been encrypted are distributed via the Internet, for example, while means for decrypting the distributed encrypted contents, i.e., a decrypting key, is provided only to individuals who are recognized as being a valid user.

Encrypted data can be restored to usable decrypted data (plaintext) by decryption processing according to predetermined procedures. Encryption and decryption methods using encryption keys for such encryption processing information of information, and using decryption keys for decryption processing, have been conventionally well known.

The revocation list has been proposed as a method for revoking unauthorized media and unauthorized contents, in contents recording/reproducing devices. Devices which execute recording and reproducing of contents perform collation between an identifier of contents storing contents at the time of reproducing contents, for example, and a contents identifier listed in a revocation list, and in the event that matching identifiers are found, processing for canceling the reproduction processing is performed since the contents are unauthorized, thereby enabling unauthorized contents usage to be revoked.

However there has been the possibility that processing might be performed to enable reproducing of unauthorized contents and the like, by tampering with the revocation list, or performing processing such as replacing the list sent to the device with an unauthorized revocation list. For example, a case might be conceived wherein an attacker holding invalid unauthorized media or contents does not update an old revocation list wherein the unauthorized media or contents are not invalid. This would enable usage of unauthorized media and reading of unauthorized contents that are supposed to be invalid.

Also, processing has been performed wherein the revocation list is stored in internal memory in a recording/reproducing device, for example, and reference processing is executed wherein the list is called up from the internal memory as necessary and used. For example, the device has repeatedly executed processing such as, in the event of reproducing contents, for example, reference processing is executed by reading a revocation list storing unauthorized contents identifiers from internal memory, and in the case of processing targeted at revoking unauthorized media, reference processing is executed by reading a revocation list storing unauthorized media identifiers from internal memory, and so forth. The reading processing of these revocation lists are necessary each time a new media is mounted or new contents are processed, leading to complication in processing.

Further, conventionally, in the case of processing targeted at revoking unauthorized contents, a revocation list storing unauthorized contents identifier is used, and in the case of processing targeting revoking unauthorized media, a revocation list storing unauthorized media identifiers is used, and the revocations to make reference to have been differentiated according to the usage thereof. In this case, the device side requires processing for selecting one revocation list from multiple stored revocation list, and collation with a contents or media identifier is performed following this selection. This revocation list selection processing is repeatedly necessary each time mounting new media or processing new contents, leading to complication in processing.

### Disclosure of the Invention

The present invention provides a configuration of revoking such unauthorized tampering and updating of revocation lists, and specifically, it is an object thereof to provide a data reproducing device, data recording device, and data reproducing method, data recording method, list updating method, and program providing medium, capable of revoking unauthorized use of contents due to abuse of unauthorized revocation lists, by setting a version in a revocation list, and comparing the version of a revocation list held in a device with a valid revocation list within the header of contents at the time of reading the contents out, and performing processing such as enabling processing of contents under the conditions that the version of the held list is not old.

Further, it is an object of the present invention to provide a data reproducing device, data recording device, and data reproducing method, data recording method, and program providing medium, capable of resolving the complexity of such processing, by setting a revocation list in a memory interface of a device such that after setting, revocation of unauthorized media and unauthorized contents can be performed consecutively using a revocation list at the memory interface, thereby realizing efficiency of processing.

Further, it is an object of the present invention to provide a data reproducing device, data recording device, and data reproducing method, data recording method, and program providing medium, capable of resolving the complexity of such processing, by storing identifiers of media and contents, which are different categories, in a single revocation, thereby enabling a shared revocation list to be applied to both media and contents to perform revocation of unauthorized media and unauthorized contents without the device selecting a revocation list, thereby realizing efficiency of processing.

According to a first aspect of the present invention,
a data reproducing device for executing reproducing processing of contents stored in data storing means comprises:
internal memory for storing a revocation list which is a list storing an identifier of at least one of data storing means or contents which are the object of forbidding processing, the list having version information indicating the newness of the list; and
a controller for executing comparison processing between a valid revocation list version stored in header information of contents which are the object of reproducing, and the version of a revocation list stored in the internal memory, and performs processing accompanying the reproducing of the contents which are the object of reproducing, under the condition of confirmation that the version of the revocation list stored in the internal memory is not older than the version set in the header information of the contents which are the object of reproducing.

Further, according to an embodiment of the data reproducing device according to the present invention, the controller has a configuration for executing, as processing accompanying the reproducing, comparison processing between an identifier of at least one of data storing means or contents stored in a revocation list stored in the internal memory and an identifier of contents which are the object of reproducing, or an identifier of data storing means storing the contents which are the object of reproducing; and is of a configuration of executing processing for canceling data reproduction in the event that an identifier of at least one of data storing means or contents stored in a revocation list and an identifier of contents which are the object of reproducing, or an identifier of data storing means storing the contents which are the object of reproducing, match in the comparison processing.

Further, according to an embodiment of the data reproducing device according to the present invention, the controller has a memory interface for executing accessing to the data storing means, and a control unit for executing control of the memory interface; and the memory interface is of a configuration for executing comparison processing between a version-of a valid revocation list stored in the header information of the contents which are the object of reproducing, and the version of a revocation list stored in the internal memory, based on a data reproduction request command from the control unit.

Further, according to an embodiment of the data reproducing device according to the present invention, the controller has a configuration for executing comparison processing between the version of an updating revocation list which is externally received, and the version of a revocation list which has already been stored in the internal memory, and executing updating processing of the revocation list by the updating revocation list under the condition of confirmation that the version of the revocation list stored in the internal memory is newer than the updating revocation list.

Further, according to an embodiment of the data reproducing device according to the present invention, the controller has a configuration for executing a data tampering check with regard to an externally received updating revocation list, based on a data integrity check value (ICV), and for executing updating processing of the revocation list by the updating revocation list, based on a no data tampering judgment.

According to a second aspect of the present invention,
a data recording device for executing recording processing of contents to be stored in data storing means comprises:
internal memory for storing a revocation list which is a list storing an identifier of at least one of data storing means or contents which are the object of forbidding processing, the list having version information indicating the newness of the list; and
a controller for executing processing for setting a setting value specifying reproduction processing execution by non-reference to the revocation list, as a valid revocation list version to be stored in header information of contents which are the object of recording, and executing contents storing processing to the data storing means.

Further, according to an embodiment of the data recording device according to the present invention, the controller has a memory interface for executing access to the data storing means, and a control unit for executing control of the memory interface; wherein the memory interface is of a configuration for executing processing for setting the version of a valid revocation list to be stored in the header information of contents which are the object of recording, as a setting value capable of reproduction executing by non-reference to the revocation list, based on a header information generating command accompanying data recording from the control unit.

Further, according to an embodiment of the data recording device according to the present invention, the controller has a configuration for executing comparison processing between the version of an updating revocation list which is externally received, and the version of a revocation list which has already been stored in the internal memory, and executing updating processing of the revocation list by the updating revocation list under the condition of confirmation that the version of the revocation list stored in the internal memory is newer than the updating revocation list.

Further, according to an embodiment of the data recording device according to the present invention, the controller has a configuration for executing a data tampering check with regard to an externally received updating revocation list, based on a data integrity check value (ICV), and for executing updating processing of the revocation list by the updating revocation list, based on a no data tampering judgment.

According to a third aspect of the present invention,
a data reproducing method with a data reproducing device for executing reproducing processing of data stored in data storing means comprises:
a comparing step for executing comparison processing between a valid revocation list version stored in header information of contents which are the object of reproducing, and the version of a revocation list stored in internal memory of the data reproducing device; and
a reproduction-related processing executing step for performing processing accompanying the reproducing of the contents which are the object of reproducing, under the condition of confirmation that the version of the revocation list stored in the internal memory is not older than the version set in the header information of the contents which are the object of reproducing.

Further, according to an embodiment of the data reproducing method according to the present invention, the reproduction-related processing executing step contains a step for executing comparison processing between an identifier of at least one of data storing means or contents stored in a revocation list stored in the internal memory and an identifier of contents which are the object of reproducing, or an identifier of data storing means storing the contents which are the object of reproducing; and a step for executing processing for canceling data reproduction in the event that an identifier of at least one of data storing means or contents stored in the revocation list and an identifier of contents which are the object of reproducing, or an identifier of data storing means storing the contents which are the object of reproducing, match in the comparison processing.

Further, according to an embodiment of the data reproducing method accoiding to the present invention, the data reproducing device has a memory interface for executing accessing to the data storing means, and a control unit for executing control of the memory interface, the data reproducing method further comprising: a step for transmitting a data reproduction request command to the memory interface from the control unit; and a step for executing comparison processing between a version of a valid revocation list stored in the header information of the contents which are the object of reproducing, and the version of a revocation list stored in the internal memory, based on reception of the data reproduction request command at the memory interface.

Further, according to a fourth aspect of the present invention,
a data recording method for executing recording processing of contents to be stored in data storing means comprises:
a step for executing processing for setting a setting value specifying reproduction processing execution by non-reference to the revocation list, as a valid revocation list version to be stored in header information of contents which are the object of recording;
and a step for executing-contents storing processing to the data storing means.

Further, according to a fifth aspect of the present invention,
a list updating method for a data processing device, storing in internal memory a revocation list which is a list storing an identifier of at least one of data storing means or contents which are the object of forbidding processing, the list having version information indicating the newness of the list; wherein comparison processing between the version of an updating revocation list which is externally received, and the version of a revocation list which has already been stored in the internal memory, is executed, and updating processing of the revocation list by the updating revocation list is executed under the condition of confirmation that the version of the revocation list stored in the internal memory is newer than the updating revocation list.

Further, an embodiment of the list updating method according to the present invention further comprises a step for executing a data tampering check with regard to an externally received updating revocation list, based on a data integrity check value (ICV), wherein updating processing of the revocation list by the updating revocation list is executed, based on a no data tampering judgment.

Further, a sixth aspect of the present invention is
a program providing medium for providing a computer program for causing execution on a computer system of data reproducing processing for a data reproducing device which executes reproducing processing of data stored in data storing means, wherein the computer program comprises:
a comparing step for executing comparison processing between a valid revocation list version stored in header information of contents which are the object of reproducing, and the version of a revocation list stored in internal memory of the data reproducing device; and
a reproduction-related processing executing step for performing processing accompanying the reproducing of the contents which are the object of reproducing, under the condition of confirmation that the version of the revocation list stored in the internal memory is not older than the version set in the header information of the contents which are the object of reproducing.

Further, according to a seventh aspect of the present invention,
with a data reproducing device for executing reproducing processing of contents stored in data storing means;
the data reproducing device is of a configuration for reading a revocation list holding identifier data of at least one of data recording means or contents which are the object of forbidding processing into a memory interface which performs access to data storing means, and holding the revocation list in a referable state in consecutively differing processing within the memory interface.

Further, an embodiment of the data reproducing device according to the present invention further comprises a control unit for executing transmitting processing of a revocation list set command, which is a set command for the revocation list holding identifier data of at least one of data storing means or contents which are the object of forbidding processing as to the memory interface, as processing at the time of activation; wherein the memory interface is of a configuration for reading the revocation list into the memory interface in response to reception of the revocation list set command, and executing revocation list set processing to enable reference processing within the memory interface.

Further, according to an embodiment of the data reproducing device according to the present invention, the memory interface is of a configuration for executing a data tampering check based on a data integrity check value (ICV) for the revocation list read into the memory interface, and executing revocation list set processing which enables reference processing within the memory interface, under the condition that a no data tampering judgment has been made.

Further, according to an embodiment of the data reproducing device according to the present invention, the memory interface is of a configuration wherein a data storing means identifier is received from data storing means wherein data which is the object of reproducing is recorded, collation is executed between the received data storing means identifier and an identifier listed in the revocation list set in the memory interface, and in the event that the identifiers mutually match, the data reproducing processing is cancelled.

Further, according to an embodiment of the data reproducing device according to the present invention, the memory interface is of a configuration wherein an identifier of contents which are the object of reproducing is obtained from header information of the contents stored in the data storing means, collation is executed between the obtained contents identifier and an identifier listed in the revocation list set in the memory interface, and in the event that the identifiers mutually match, the data reproducing processing is cancelled.

Further, according to an embodiment of the data reproducing device according to the present invention, the revocation list is of a configuration having identifier data for both the data storing means identifier which is the object of forbidding processing and contents which are the object of forbidding processing.

Further, according to an eighth aspect of the present invention,
with a data recording device for executing recording processing of contents to be stored in data storing means;
the data recording device is of a configuration for reading in a revocation list holding identifier data of at least one of data storing means or contents which are the object of forbidding processing into a memory interface which performs access to data storing means, and holding the revocation list in a referable state in consecutively differing processing within the memory interface.

Further, an embodiment of the data recording device according to the present invention, further comprises a control unit for executing transmitting processing of a revocation list set command, which is a set command for the revocation list holding an identifier data of at least one of data storing means or contents which are the object of forbidding processing as to the memory interface, as processing at the time of activation; wherein the memory interface is of a configuration for reading the revocation list into the memory interface in response to reception of the revocation list set command, and executing revocation list set processing to enable reference processing within the memory interface.

Further, according to an embodiment of the data recording device according to the present invention, the memory interface is of a configuration for executing a data tampering check based on a data integrity check value (ICV) for the revocation list read into the memory interface, and executing revocation list set processing which enables reference processing within the memory interface, under the condition that a no data tampering judgment has been made.

Further, according to an embodiment of the data recording device according to the present invention, the memory interface is of a configuration wherein a data storing means identifier is received from data storing means wherein data which is the object of recording is recorded, collation is executed between the received data storing means identifier and an identifier listed in the revocation list set in the memory interface, and in the event that the identifiers mutually match, the data recording processing is cancelled.

Further, according to an embodiment of the data recording device according to the present invention, the revocation list is of a configuration having identifier data for both the data storing means identifier which is the object of forbidding processing and contents which are the object of forbidding processing.

Further, according to a ninth aspect of the present invention,
a data reproducing method for executing reproducing processing of contents stored in data storing means comprises:
a step for reading a revocation list holding identifier data of at least one of data storing means or contents which are the object of forbidding processing into a memory interface which performs access to data storing means;
a step for holding the revocation list in a referable state in consecutively differing processing within the memory interface; and
a step for making reference to the revocation list set in the memory interface and judging whether data reproduction processing is permissible or impermissible.

Further, an embodiment of the data reproducing method according to the present invention further comprises: a step for executing transmitting processing of a revocation list set command, which is a set command for the revocation list holding an identifier data of at least one of a data recording device or contents which are the object of forbidding processing, as to the memory interface which performs access to data storing means, from a control unit, as processing at the time of activation; and a step at the memory interface for reading the revocation list into the memory interface in response to reception of the revocation list set command, and executing revocation list set processing to enable reference processing within the memory interface.

Further, according to an embodiment of the data reproducing method according to the present invention, a data tampering check is executed based on a data integrity check value (ICV) for the revocation list read into the memory interface, and wherein revocation list set processing which enables reference processing within the memory interface is executed under the condition that a no data tampering judgment has been made.

Further, an embodiment of the data reproducing method according to the present invention, further comprises, at the memory interface, a step for receiving a data storing means identifier from data storing means wherein data which is the object of reproducing is recorded, collation is executed between the received data storing means identifier and an identifier listed in the revocation list set in the memory interface, and in the event that the identifiers mutually match, canceling the data reproducing processing.

Further, an embodiment of the data reproducing method according to the present invention further comprises, at the memory interface, a step for obtaining an identifier of contents which are the object of reproducing from header information of the contents stored in the data storing means, executing collation between the obtained contents identifier and an identifier listed in the revocation list set in the memory interface, and in the event that the identifiers mutually match, canceling the data reproducing processing.

Further, according to a tenth aspect of the present invention,
a data recording method for executing recording processing of contents to be recorded in data storing means comprises:
a step for reading in a revocation list holding identifier data of at least one of data storing means or contents which are the object of forbidding processing into a memory interface which performs access to data storing means;
a step for holding the revocation list in a referable state in consecutively differing processing within the memory interface; and
a step for making reference to the revocation list set in the memory interface and judging whether data recording processing is permissible or impermissible.

Further, an embodiment of the data recording method according to the present invention further comprises: a step for executing transmitting processing of a revocation list set command, which is a set command for the revocation list holding identifier data of at least one of data storing means or contents which are the object of forbidding processing, as to the memory interface, which performs access to data storing means, from a control unit, as processing at the time of activation; a step at the memory interface for reading the revocation list into the memory interface in response to reception of the revocation list set command, and executing revocation list set processing to enable reference processing within the memory interface; and a step for making reference to the revocation list set in the memory interface and judging whether data recording processing is permissible or impermissible.

Further, with an embodiment of the data recording method according to the present invention, a data tampering check is executed based on a data integrity check value (ICV) for the revocation list read into the memory interface, and revocation list set processing which enables reference processing within the memory interface is executed under the condition that a no data tampering judgment has been made.

Further, an embodiment of the data recording method according to the present invention further comprises, at the memory interface, a step for receiving a data storing means identifier from data storing means wherein data which is the object of reproducing is recorded, collation is executed between the received data storing means identifier and an identifier listed in the revocation list set in the memory interface, and in the event that the identifiers mutually match, canceling the data recording processing.

Further, an eleventh aspect of the present invention is a program providing medium for providing a computer program for causing execution on a computer system for reproduction processing of contents stored in data storing means, wherein the computer program comprises:
a step for reading a revocation list holding identifier data of at least one of data storing means or contents which are the object of forbidding processing into a memory interface which performs access to data storing means;
a step for holding the revocation list in a referable state in consecutively differing processing within the memory interface; and
a step for making reference to the revocation list set in the memory interface and judging whether data reproduction processing is permissible or impermissible.

Further, a twelfth aspect of the present invention is a program providing medium for providing a computer program for causing execution on a computer system for recording processing for contents to be recorded in data storing means, wherein the program comprises:
a step for reading in a revocation list holding identifier data of at least one of data storing means or contents which are the object of forbidding processing into a memory interface which performs access to data storing means;
a step for holding the revocation list in a referable state in consecutively differing processing within the memory interface; and
a step for making reference to the revocation list set in the memory interface and judging whether data recording processing is permissible or impermissible.

According to a thirteenth aspect of the present invention,
a data reproducing device for executing reproducing processing of contents stored in data storing means has:
a memory interface for executing accessing to the data storing means, and a control unit for executing control of the memory interface;
the memory interface having
internal memory storing a revocation list holding identifier data for each of data storing device and contents which are the object of forbidding processing;
wherein the memory interface has a configuration
wherein a data storing means identifier is received from data storing means wherein data which is the object of reproducing is recorded, collation is executed between the received data storing means identifier and an identifier listed in the revocation list, and in the event that the identifiers mutually match, the data reproducing processing is cancelled;
and wherein an identifier of contents which are the object of reproducing is obtained from header information of the contents stored in the data storing means, collation is executed between the obtained contents identifier and an identifier listed in the revocation list, and in the event that the identifiers mutually match, the data reproducing processing is cancelled.

Further, according to an embodiment of the data reproducing device according to the present invention, the memory interface receives an identifier of data storing means which are media, based on a media recognition command from the control unit, and executes collation processing between the received data storing means identifier and an identifier listed in the revocation list.

Further, according to an embodiment of the data reproducing device according to the present invention, the memory interface performs mutual authentication processing with data storing means which are media, based on a media recognition command from the control unit, receives a data storing means identifier in the mutual authentication processing, and executes collation processing between the received data storing means identifier and an identifier listed in the revocation list.

Further, according to an embodiment of the data reproducing device according to the present invention, the memory interface obtains a contents identifier stored in header information of contents to be reproduced, based on a data reproduction request command from the control unit, and executes collation processing between the obtained contents identifier and an identifier listed in the revocation list.

Further, according to an embodiment of the data reproducing device according to the present invention, the memory interface has a configuration for executing a data tampering check based on a data integrity check value (ICV) with regard to an updating revocation list which is externally received, whereby a no data tampering judgment is made; and wherein comparison processing between the version of an updating revocation list which is externally received, and the version of a revocation list which has already been stored in the internal memory, is executed, and updating processing of the revocation list by the updating revocation list is executed under the condition of confirmation that the version of the revocation list stored in the internal memory is newer than the updating revocation list.

Further, according to a fourteenth aspect of the present invention,
a data recording device for executing recording processing of contents stored in data storing means has:
a memory interface for executing accessing to the data storing means, and a control unit for executing control of the memory interface;
the memory interface having internal memory storing a revocation list holding identifier data for each of data storing device and contents which are the object of forbidding processing;
wherein the memory interface has a configuration
wherein a data storing means identifier which is the object of recording data is received, collation is executed between the received data storing means identifier and a list identifier in the revocation list, and in the event that the identifiers mutually match, the data recording processing is cancelled.

Further, according to an embodiment of the data recording device according to the present invention, the memory interface receives an identifier of data storing means which are media, based on a media recognition command from the control unit, and executes collation processing between the received data storing means identifier and an identifier listed in the revocation list.

Further, according to an embodiment of the data recording device according to the present invention, the memory interface performs mutual authentication processing with data storing means which are media, based on a media recognition command from the control unit, receives a data storing means identifier in the mutual authentication processing, and executes collation processing between the received data storing means identifier and an identifier listed in the revocation list.

Further, according to a fifteenth aspect of the present invention,
with a data reproducing method for executing reproducing processing of contents stored in data storing means;
at a memory interface for executing accessing to the data storing means, a data storing means identifier is received from data storing means wherein data which is the object of reproducing is recorded, collation is executed between the received data storing means identifier and an identifier listed in the revocation list, and in the event that the identifiers mutually match, the data reproducing processing is cancelled;
and an identifier of contents which are the object of reproducing is obtained from header information of the contents stored in the data storing means, collation is executed between the obtained contents identifier and an identifier listed in the revocation list, and in the event that the identifiers mutually match, the data reproducing processing is cancelled.

Further, an embodiment of the data reproducing method according to the present invention has a configuration wherein the memory interface receives an identifier of data storing means which are media, based on a media recognition command from a control unit, and executes collation processing between the received data storing means identifier and an identifier listed in the revocation list.

Further, according to an embodiment of the data reproducing method according to the present invention, the memory interface performs mutual authentication processing with data storing means which are media, based on a media recognition command from a control unit, receives a data storing means identifier in the mutual authentication processing, and executes collation processing between the received data storing means identifier and an identifier listed in the revocation list.

Further, according to an embodiment of the data reproducing method according to the present invention, the memory interface obtains a contents identifier stored in header information of contents to be reproduced, based on a data reproduction request command from a control unit, and executes collation processing between the obtained contents identifier and an identifier listed in the revocation list.

Further, according to a sixteenth aspect of the present invention,
with a data recording method for executing recording processing of contents stored in data storing means;
at a memory interface for executing accessing to the data storing means, an identifier of the data storing means which is the object of recording data is received, collation is executed between the received data storing means identifier and a list identifier in the revocation list, and in the event that the identifiers mutually match, processing for canceling data recording is executed.

Further, according to an embodiment of the data recording method according to the present invention, the memory interface receives an identifier of data storing means which are media, based on a media recognition command from a control unit, and executes collation processing between the received data storing means identifier and an identifier listed in the revocation list.

Further, according to an embodiment of the data recording method according to the present invention, the memory interface performs mutual authentication processing with data storing means which are media, based on a media recognition command from the control unit, receives a data storing means identifier in the mutual authentication processing, and executes collation processing between the received data storing means identifier and an identifier listed in the revocation list.

Further, a seventeenth aspect of the present invention is
a program providing medium for providing a computer program for causing execution on a computer system for reproducing processing of contents stored in data storing means, wherein the computer program comprises:
a step for, at a memory interface for executing accessing to the data storing means, receiving a data storing means identifier from data storing means wherein data which is the object of reproducing is recorded, executing collation between the received data storing means identifier and an identifier listed in the revocation list, and in the event that the identifiers mutually match, canceling the data reproducing processing; and
a step for obtaining an identifier of contents which are the object of reproducing from header information of the contents stored in the data storing means, executing collation between the obtained contents identifier and an identifier listed in the revocation list, and in the event that the identifiers mutually match, canceling the data reproducing processing.

Further, a eighteenth aspect of the present invention is
a program providing medium for providing a computer program for causing execution on a computer system for recording processing of contents to be stored in data storing means, wherein the computer program comprises:
a step for, at a memory interface for executing accessing to the data storing means, receiving an identifier of the data storing means which is the object of recording data, executing collation between the received data storing means identifier and a list identifier in the revocation list, and in the event that the identifiers mutually match, canceling the data recording.

Now, the program providing medium relating to the present invention is a medium for providing a computer program in a computer-readable format to a general-purpose computer system capable of executing various types of program code, for example. The medium is not particularly restricted in form, such as to recording media such as CDs, FDs, MOs, or the like, or to transfer media such as networks or the like.

Such a program providing medium defines the structural or functional cooperative relation between the computer program and providing medium, for realizing the functions of a particular computer program on a computer system. In other words, installing a computer program in a computer system through the providing medium causes the cooperative operations to be manifested on the computer system, so operations the same as the other aspects of the present invention can be obtained.

Other objects, characteristics, and advantages of the present invention will become more apparent from detailed description based on the later-described embodiments of the present invention and the attached drawings.

### Brief Description of the Drawings

Fig. 1 is a diagram explaining the concept of use of the data processing device according to the present invention.
Fig. 2 is a diagram illustrating the configuration of the device and media of the data processing device according to the present invention.
Fig. 3 is a diagram illustrating the memory storage data configuration of the data processing device according to the present invention.
Fig. 4 is a diagram illustrating the detailed configuration of a memory interface of the device of the data processing device according to the present invention.
Fig. 5 is a diagram illustrating the data configuration in a status register in the memory interface with the data processing device according to the present invention.
Fig. 6 is a diagram illustrating the detailed configuration of data stored in media with the data processing device according to the present invention.
Fig. 7 is a diagram explaining the configuration of a security header set corresponding to the contents stored in media with the data processing device according to the present invention.
Fig. 8 is a diagram illustrating two forms of data encryption with the data processing device according to the present invention.
Fig. 9 is a diagram illustrating the configuration of a revocation list with the data processing device according to the present invention.
Fig. 10 is a diagram explaining a block permission table (BPT) with the data processing device according to the present invention.
Fig. 11 is a diagram illustrating the BPT storing processing flow at the time of manufacturing media 1, with the data processing device according to the present invention.
Fig. 12 is a diagram illustrating the BPT storing processing flow at the time of manufacturing media 2, with the data processing device according to the present invention.
Fig. 13 is a diagram describing a specific example of a block permission table (BPT) with the data processing device according to the present invention.
Fig. 14 is a diagram explaining a integrity check value generating processing configuration with the data processing device according to the present invention.
Fig. 15 is a diagram explaining a integrity check value validating processing flow with the data processing device according to the present invention.
Fig. 16 is a diagram illustrating a flow at the time of activating the device with the data processing device according to the present invention.
Fig. 17 is a diagram explaining a configuration example of a file allocation table with the data processing device according to the present invention.
Fig. 18 is a diagram illustrating a flow (part 1) at the time of recognizing media 1 with the data processing device according to the present invention.
Fig. 19 is a diagram illustrating a flow (part 2) at the time of recognizing media 1 with the data processing device according to the present invention.
Fig. 20 is a diagram illustrating a flow (part 1) at the time of recognizing media 2 with the data processing device according to the present invention.
Fig. 21 is a diagram illustrating a flow (part 2) at the time of recognizing media 2 with the data processing device according to the present invention.
Fig. 22 is a diagram illustrating a mutual authentication processing sequence executed between device and media with the data processing device according to the present invention.
Fig. 23 is a diagram illustrating a mutual authentication / key sharing processing flow (part 1) with the data processing device according to the present invention.
Fig. 24 is a diagram illustrating a mutual authentication / key sharing processing flow (part 2) with the data processing device according to the present invention.
Fig. 25 is a diagram illustrating a file read-out processing flow with the data processing device according to the present invention.
Fig. 26 is a diagram illustrating a file writing processing flow with the data processing device according to the present invention.
Fig. 27 is a diagram explaining a form of encryption processing of data stored in memory with the data processing device according to the present invention.
Fig. 28 is a diagram explaining triple DES capable of application as a form of encryption processing of data stored in memory with the data processing device according to the present invention.
Fig. 29 is a diagram explaining a form of encryption processing of data stored in memory with the data processing device according to the present invention.
Fig 30 is a diagram explaining a form of encryption processing of data stored in memory with the data processing device according to the present invention.
Fig. 31 is a diagram explaining a form of storage processing of integrity check values according to sector, with the data processing device according to the present invention.
Fig. 32 is a diagram explaining an example of encryption processing of contents keys corresponding to sector and other keys, with the data processing device according to the present invention.
Fig. 33 is a diagram explaining an example of decryption processing of contents keys corresponding to sector and other keys, with the data processing device according to the present invention.
Fig. 34 is a diagram explaining an example of processing of contents keys corresponding to sector and other keys, between device and media, with the data processing device according to the present invention.
Fig. 35 is a diagram illustrating the decryption read-out processing flow (part 1) of a file, with the data processing device according to the present invention.
Fig. 36 is a diagram illustrating the decryption read-out processing flow (part 2) of a file, with the data processing device according to the present invention.
Fig. 37 is a diagram illustrating a decryption processing flow of contents keys and others, with the data processing device according to the present invention.
Fig. 38 is a diagram illustrating a decryption processing flow of contents keys and others by a media storing key, with the data processing device according to the present invention.
Fig. 39 is a diagram illustrating the decryption processing flow (part 1) of sector data, with the data processing device according to the present invention.
Fig. 40 is a diagram illustrating the decryption processing flow (part 2) of sector data, with the data processing device according to the present invention.
Fig. 41 is a diagram illustrating the encryption writing processing flow (part 1) of a file, with the data processing device according to the present invention.
Fig. 42 is a diagram illustrating the encryption writing processing flow (part 2) of a file, with the data processing device according to the present invention.
Fig. 43 is a diagram illustrating a encryption processing flow of contents keys and others, with the data processing device according to the present invention.
Fig. 44 is a diagram illustrating an encryption processing flow of contents keys and others by a media storing key, with the data processing device according to the present invention.
Fig. 45 is a diagram illustrating the encryption processing flow (part 1) of sector data, with the data processing device according to the present invention.
Fig. 46 is a diagram illustrating the encryption processing flow (part 2) of sector data, with the data processing device according to the present invention.
Fig. 47 is a diagram illustrating a revocation list updating processing flow with the data processing device according to the present invention.

### Best Mode for Carrying Out the Invention

The following is a description of embodiments of the present invention.

### [System Configuration]

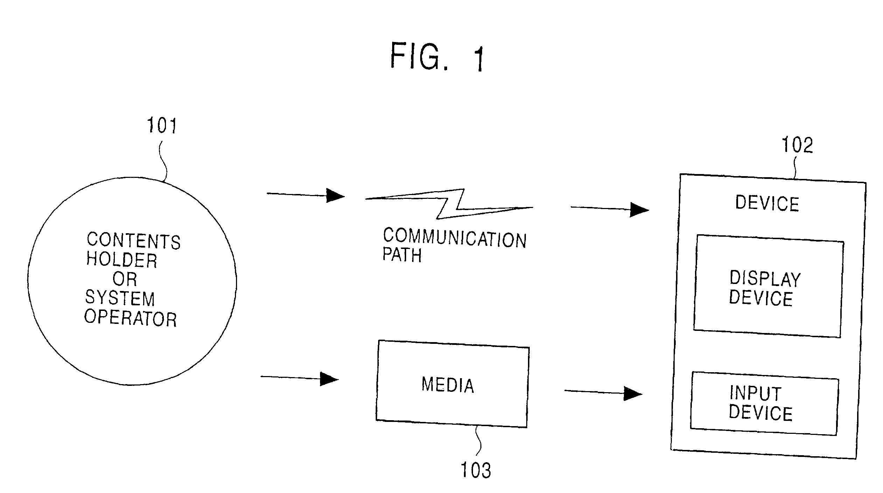

Fig. 1 illustrates a contents distribution system configuration to which the data processing device according to the present invention can be applied. Contents such as, for example, music data, image data, and various types of programs and the like are sent via a network such as the Internet or t-he like, or stored in media 103 which is one of various types of recording media such as a CD, DVD, or memory card or the like mounting flash memory, and received or mounted at the device 102, and executed. The device is, a device having contents reproducing functions, for example, a personal computer (PC), a dedicated reproducing device, a game device, etc., and has, for example, a display device for displaying the image contents, and the input device for inputting instructions from a user.

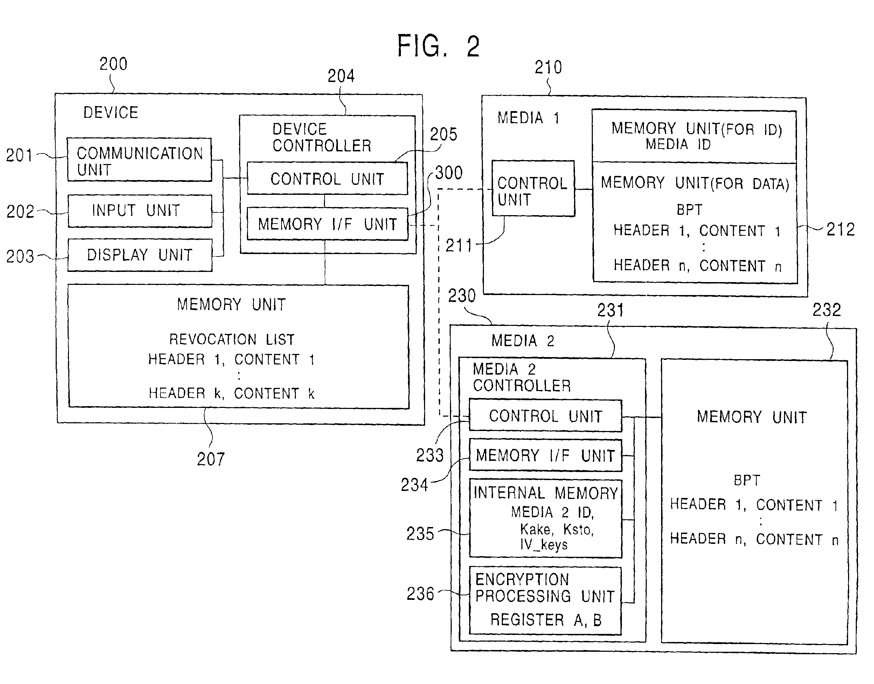

In the configuration of such a contents distribution system, the detailed configuration of the device reproducing the contents and the media storing the contents is shown in Fig. 2.

Fig. 2 illustrates the detailed configuration of the device 200, media 1210, and media 2230. The media 1210 is media having a control unit for supporting only simple data read-out and writing processing, while the media 2230 is media having a controller for executing mutual authentication processing with the device mounting the media, and also executing encryption processing of the contents to be stored in the media. Both the media 1210 and the media 2230 can be mounted to the device 200.

The device 200 shown in Fig. 2 has a communication unit 201 for executing data transmission/reception processing via data communication means such as the Internet or the like, and input unit 202 for inputting various types of instructions, a display unit 203 for executing display of messages, contents, etc., a device controller 204 having a control unit 205 for executing control of these and the memory interface (I/F) unit 300 having interfacing functions for data input/output processing with media, and the memory unit 207 serving as internal memory storing a contents file group and revocation lists of unauthorized media and contents as invalid information. Note that data files such as revocation lists and the like stored in the internal memory have a configuration so as to be capable of being managed and read out by a file allocation table.

At the time of reproducing the contents, the device 200 performs reproduction upon making confirmation that the contents which are the object of reproduction do not correspond to the invalid media or invalid contents stored in the revocation list. In the event that the contents which the object of reproduction are listed in the revocation list, a reproduction error occurs, and reproducing processing is not executed. Revocation lists, and reproduction processing applying a revocation a list, will be described in detail later.

The media 1210 has a control unit 211 for controlling data input/output, and the memory unit 212 for storing contents, wherein the memory unit 212 not only stores contents along with corresponding header information, but also stores media ID which is identification information unique to each medium, and further stores a BPT (Block Permission Table) which is an access permission table describing memory access control information.

Following recognizing the media, the file system of the device 200 reads in the BPT which is the access permission table from the media, transfers the BPT to the memory interface unit 300 which performs direct access to the media, where it is managed. Upon receiving the BPT, the memory interface unit 300 and performs validation of the integrity check value (ICV) with regard to the received BPT. The BPT is stored as being valid only in the event that the ICV is judged to be authenticated. In the event of receiving a command for accessing the memory of the media, the memory interface unit 300 only executes access which is based on the BPT of the media. The configuration of a BPT and processing using a BPT will be described in detail later.

The media 2230 is configured of a controller 231 and a memory unit 232, wherein the memory unit 232 stores contents along with corresponding header information, and further stores a BPT (Block Permission Table) which is an access permission table. The controller 231 has a memory interface (I/F) unit 234 serving as a data storing or data read-out interface for the memory unit 232, and media 2 ID serving as an identifier for media, internal memory 235 storing an authentication key Kake applied to mutual authentication processing, a storing key Ksto which is an encryption key used at the time of storing contents to the memory unit 232, and further, the initial value IV_keys at the time of encrypting keys which are the object of encryption, and so forth, and encryption processing unit 236 having a register, for executing authorization processing or encryption/decryption processing of contents, and a control unit 233 for controlling these components.

### [Memory configuration in media]

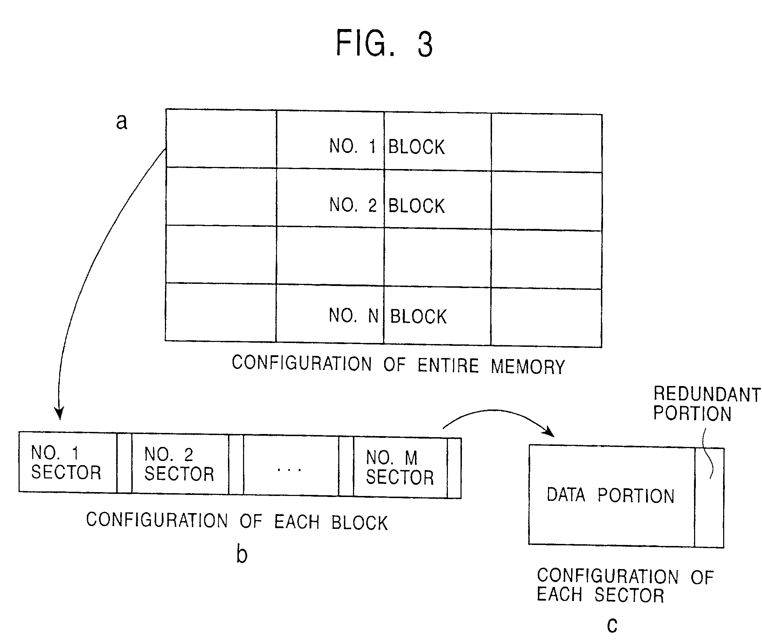

Next, the data storing configuration of the memory units of the media 1210 and the media 2230 are shown in Fig. 3. The memory unit is, for example, flash memory which is a sort of non-volatile memory that is electrically rewritable, called EEPROM (Electrically Erasable Programmable ROM), and data erasing is performed by batch erasing in increments of blocks.

As shown in Fig. 3 (a), the flash memory has multiple blocks, No. 1 through N, each block being configured by multiple sectors No. 1 through M as shown in (b), and each sector being configured of the data portion containing actual data, and a redundant portion containing redundant data such as an error correction code and so forth, as shown in (c). Though described in detail later, an ICV serving as a sector data integrity check value within the data portion of each sector may be stored in the redundant portion.

### [Primary commands]

Next, in the device 200 shown in Fig. 2 the primary commands issued at the control unit 205, and the memory interface (I/F) Unit 300, will be described.

First, commands from the control unit 205 to the memory interface (I/F) unit 300 include the following.

### • Status read-out command

Reads out the state of the status register which is set the current status in the memory interface. The memory interface (I/F) units 300 returns the contents of the status register.

### • Sector read-out command

A data read-out processing command for a specified sector.

### • Sector write-in command

A data writing processing command to a specified sector.

### • Sector decryption read-out command

A command for executing processing for decrypting encrypted data of a specified sector and reading it out, based on information in a set header.

### • Sector encryption write-in command

A command for executing processing for encrypting data and writing it to a specified sector, based on information in a set header.

### • Header generating command

A command for executing processing for generating a header, based on specified parameters.

### • Header set command

A command for executing processing for setting a header within the memory interface.

### • BPT set command

a command for executing processing for setting a BPT within a memory interface.

### • Revocation list set command

A command for executing processing for setting a revocation list which is a list of unauthorized media and unauthorized contents, within the memory interface.

### • Updating revocation list check command

A command for executing processing for checking whether or not it is acceptable to update the current revocation list to an updating revocation list.

### • Media 1 recognition command

A command for executing processing to read out the media identifier (ID) of a connected media 1, and to check whether or not the ID is valid.

### • Media 2 recognition command

A command for executing processing to perform mutual authentication with the connected media 2, and check whether or not the media identifier (ID) is valid.

### • File allocation table call-up command

A command for executing processing for reading out a file allocation table within memory.

### • File allocation table updating command

A command for executing processing for updating a file allocation table, to the memory.

Commands from the memory interface (I/F) unit 300 to the media 1 include the following.

### • ID read-out command

A command for executing processing for reading it out the ID which the media 1 has.

### [Detailed configuration of memory interface within device]

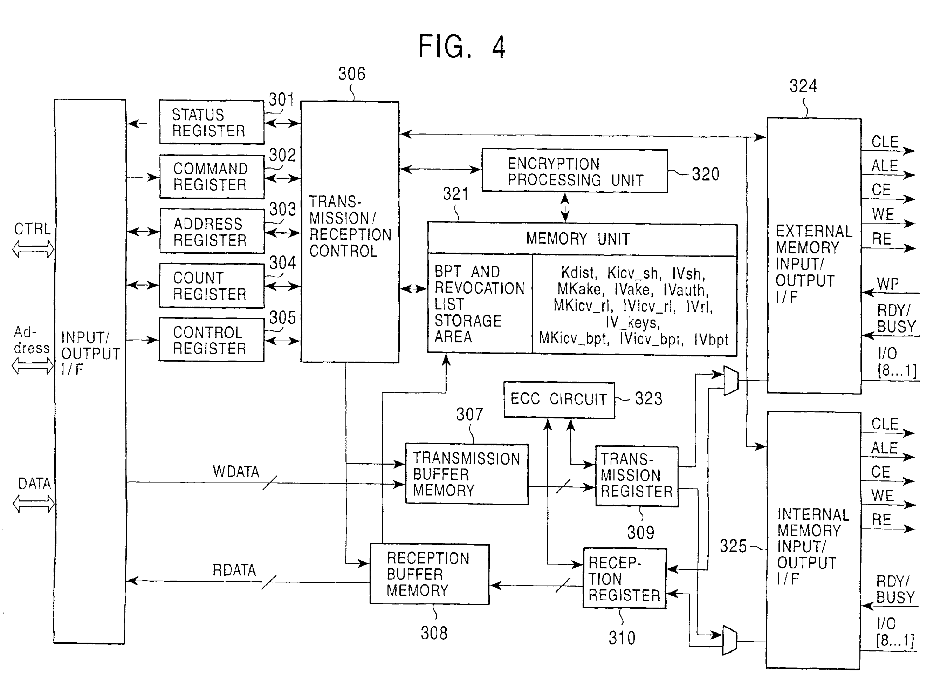

Next, the detailed configuration of the memory interface (I/F) unit 300 within the device 200 is shown in Fig. 4. The functions of the components thereof will be described.

### • Status register 301

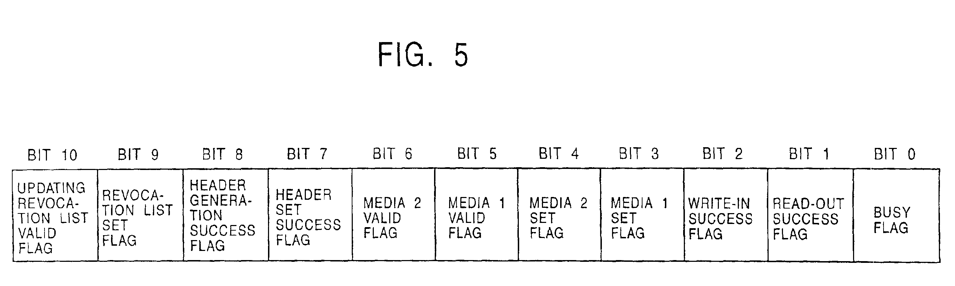

A register for storing the internal status of the memory interface. The configuration example of the status register 301 is shown in Fig. 5. Each of the bits have the following meanings.

### • Bit 0: busy flag (1: busy, 0: ready)

Bit for judging whether or not the memory interface is performing internal processing.

### • Bit 1: read-out success flag (1: success, 0: fail)

A bit for judging whether or not reading out of data from memory has succeeded.

### • Bit 2: write-in success flag (1: success, 0: fail)

A bit for judging whether or not writing data to the memory has succeeded.

### • Bit 3: media 1 set flag (1: set, 0: not set)

A bit for judging whether or not the connected media 1 is usable.

### • Bit 4: media 2 set flag (1: set, 0: not set)

A bit for judging whether or not the connected media 2 is usable.

### • Bit 5: media 1 valid flag (1: valid (OK), 0: invalid (no good)

A bit for judging whether or not the identifier (ID) of the connected media 1 is not the object of media to be revoked within the revocation list.

### • Bit 6: media 2 valid flag (1: valid (OK), 0: invalid (no good)

A bit for judging whether or not the identifier (ID) of the connected media 2 is not the object of media to be revoked within the revocation list.

### • Bit 7: header set success flag (1: success, 0: fail)

A bit for judging whether or not a header has been successfully set within the memory interface.

### • Bit 8: header generation success flag (1: success, 0: fail)

A bid for judging whether or not generating of a header has been successful.

### • Bit 9: revocation list set flag (1: set, 0: not set)

A bit for judging whether or not the revocation list has been successfully set in the memory interface.

### • Bit 10: updating revocation list valid flag (1: valid (OK), 0: invalid (no good)

A bit for judging whether or not an updating revocation list is valid.

The status register 301 hold status information of these interface (I/F) units 300.

Returning to Fig. 4, let us continue the description of the functions of the components.

### • Command register 302

Register for storing commands transmitted from the control unit

### • Address register 303

Register for setting the data transfer start sector

### • Count register 304

Register for setting the total number of sectors of data to be transferred

Note that reading and writing data to and from external memory and internal memory is executed by setting a sector address for starting reading or writing in an address register, setting the total number of sectors to be read or written in the count register, and setting a sector read/write command in the command register.

### • Control register 305

Register for setting the actions of the memory interface.

### • Transmission/reception control unit 306

Performs control of the memory interface, such as the various registers and transmission/reception buffer.

### • Transmission buffer memory 307

Buffer for storing transmission data

### • Reception buffer memory 308

Buffer for storing reception data

### • Transmission register 309

Register for transmitting data within the transmission buffer memory 307

### • Reception register 310

Register for storing the received data and transferring it to the buffer memory 308

### • Encryption processing unit 320

Performs various types of encryption processing on data within the transmission buffer memory 307 and the reception buffer memory 308.

### • Memory unit 321

An area for storing and saving key information necessary for encryption processing by the encryption processing unit 320, revocation lists read in from internal memory, and block permission tables (BPT) serving as access permission tables that are read in from external memory. In the event that both the revocation list and a block permission table (BPT) are set as a valid within the memory interface, and in the event that the transmission/reception control unit 306 receives media recognition commands from the control unit or read/write commands for data in external memory, and so forth, processing is executed with reference to the set revocation list and block permission table (BPT). Such processing will be described in detail later with reference to flowcharts.

Further, the following data is stored in the memory unit 321 as key information necessary to encryption processing.

Kdist: A distributing key contained in the security header of contents other than contents stored in the media 2. The contents ICV generating key Kicv_cont and contents key Kc are encrypted.

Kicv_sh: A security header ICV generating key used at the time of generating an ICV for a security header.

Ivsh: An initial value (IV: initial value) used for generating an ICV for a security header.

Mkake: A master key for mutual authentication.

Ivake: An initial value (IV: initial value) for application to the generating processing of a key for mutual authentication.

Ivauth: An initial value (IV: initial value) for generating data for mutual authentication.

Mkicvr_rl: A master key for generating an ICV key for a revocation list.

Ivicv_rl: An initial value (IV: initial value) for when generating an ICV key for a revocation list.

Ivrl: An initial value (IV: initial value) used when generating an ICV for a revocation list.

IV_keys: An initial value (IV: initial value) for when encrypting a contents encryption key at the media 2.

Mkicv_bpt: A master key for generating an ICV key for a BPT (Block Permission Table) which is access permission information.

IVicv_bpt: An initial value (IV: initial value) for when generating an ICV key for a BPT (Block Permission Table) which is access permission information.

IVbpt: An initial value (IV: initial value) for a BPT (Block Permission Table) which is access permission information.

### • ECC circuit 323

A dedicated block for performing ECC checks for data in the transmission register 309 and the reception register 310.

### • External memory input/output interface 324

An input/output interface for external memory (media 1 and 2). Examples of eternal memory are memory cards mounting flash memory, and so forth. Contents, header information accompanying recording/reproducing of the contents, and further block permission tables (BPT), for example, are input and output via this external memory input/output interface.

### • Internal memory input/output interface 325

An input/output interface for internal memory. Input and output is executed for revocation lists, for example, stored in internal memory, via the interface.

The following signals are output to the external memory (media 1 and 2) or internal memory from the external memory input/output interface 324 and internal memory input/output interface 325, corresponding to the processing.
- CLE:: Command Latch Enable
- ALE:: Address Latch Enable
- CE:: Chip Enable
- WE:: Write Enable
- RE:: Read Enable

Also, as signals from external memory (media 1 and 2), or from internal memory,
- WP:: Write Protect (applied only to external memory (media 1 and 2))
- RDY/BUSY:: Ready/Busy
these signals are input.

### [Configuration of contents stored in memory]

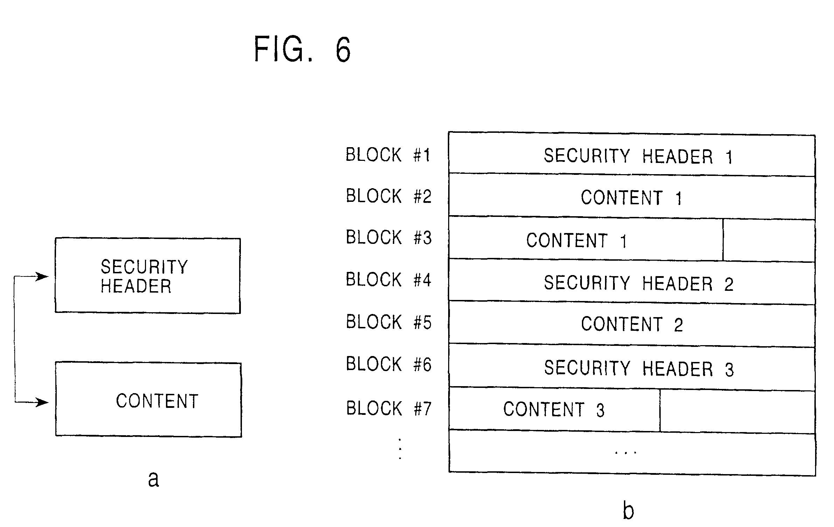

Next, the configuration of contents stored in the flash memory of the media will be described with reference to Fig. 6. As shown in Fig. 6(a), the contents of such as music data, and image data, etc., are configured of a security header made up of various types of attributes information, and contents which are the actual data portions.

As shown in Fig. 6(b), pairs of security header portions of multiple contents and contents portions are stored in the flash memory of the media. As described above, the flash memory is erased in units of blocks, so one block stores a security header portion relating to the same contents or the contents portion, and processing wherein different contents are stored in one block is not performed except for cases wherein the batch erasing processing is permitted.

### [Configuration of security header]

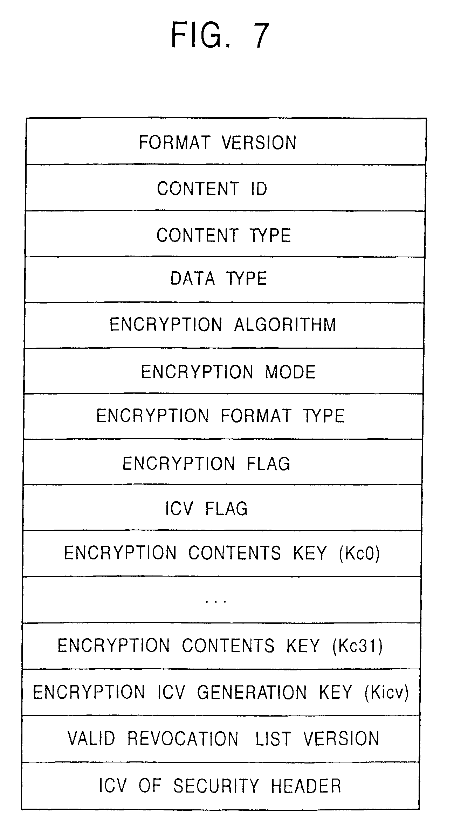

The security header is attributes information regarding the contents. The data configuration of a security header is shown in Fig. 7. The contents of it each piece of data will be described.

### • Format Version

Indicates the format version of the security header.

### • Content ID

Indicates an identifier (ID) of contents.

### • Content Type

Indicates the type of contents. For example, contents stored in media 1 or media 2, or broadcast contents, etc.

### • Data Type

Indicates that attributes of the contents, for example, whether data such as music, images, etc., or whether a program, and so forth.

### • Encryption Algorithm

Indicates the encryption processing algorithm using the contents key (Kc) of the contents. For example, indicates whether the encryption is by DES, Triple-DES, and so forth.

### • Encryption Mode

Indicates the encryption mode with regard to the algorithm specified by Encryption Algorithm. For example, indicates whether ECB mode or CBC mode, etc.

### • Encryption Format Type

Indicates the encryption format of contents.

A type wherein the entire contents are encrypted with one contents key Kc is Type 1, and a form wherein the contents are encrypted by a different key Ksec_n being applied to each sector of the contents is Type 2.

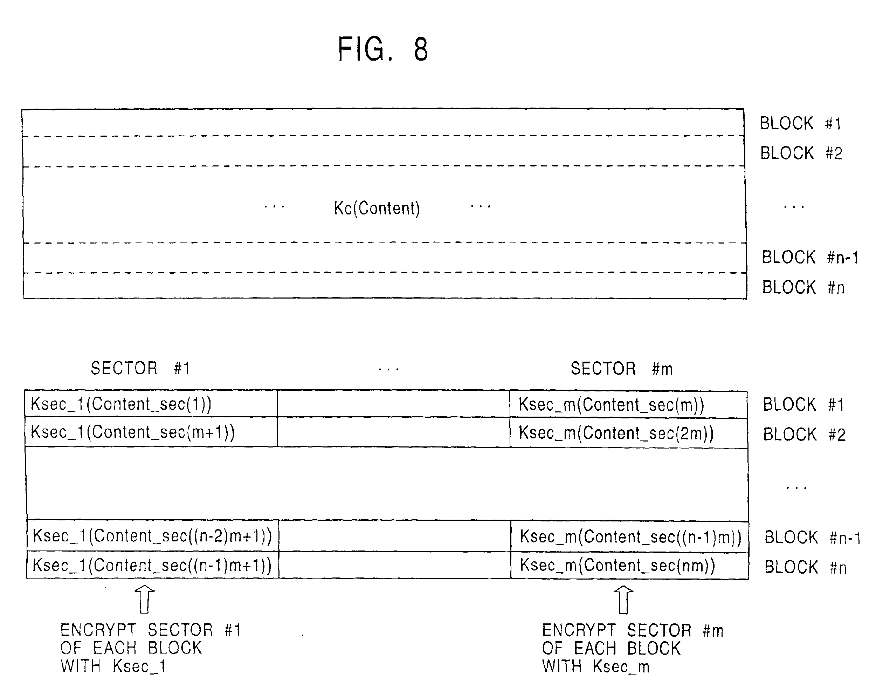

Fig. 8 shows the encryption format configuration for either type. Fig. 8(a) shows the memory storage configuration of the contents encrypted by the Type 1 encryption format, and Fig. 8(b) shows the memory storage configuration of the contents encrypted by the Type 2 encryption format.

The Type 1 encryption format shown in Fig. 8(a) is a configuration wherein all contents are encrypted with one contents key Kc and stored in memory, i.e., sector non-dependent encryption processing. The Type 2 encryption format shown in Fig. 8(b) is a configuration wherein different sector keys Ksec_1 through Ksec_m are applied to each sector of the flash memory and the encrypted contents are stored, i.e., sector-dependent encryption processing. For example, with Sector 1 of the flash memory in Fig. 8 (b), Ksec_1 is set as an encryption key corresponding to Sector 1, and contents to be stored in Sector 1 are all subjected to encryption processing applying Ksec_1, and stored in each block. With Sector m of the flash memory, Ksec_m is set as an encryption key corresponding to Sector m, and contents to be stored in Sector m are all subjected to encryption processing applying Ksec_m, and stored.

In this way, with the configuration of the present invention, contents encryption processing is applied wherein different encryption keys are applied for each sector. Further, the various encryption forms can be applied to the processing form applying a different encryption key to each sector, such as single DES processing wherein one key is applied to one sector, processing by triple DES wherein multiple keys are applied to one sector, and so forth. These processing forms will be described in detail later.

Now, let us return to Fig. 7 and continue description of the configuration of a security header.

### • Encryption Flag

A flag indicating encryption /non-encryption of each sector within a block. There are as many flags as the number of sectors in the block (e.g., 32 sectors). For example, 0: non-encrypted sector, 1: encrypted sector. In the present embodiment, one block is 32 sectors.

### • ICV Flag

A flag indicating ICV addition/non-addition for each sector within the block. There are as many flags as the number of sectors in the block (e.g., 32 sectors). For example, 0: no ICV, 1: ICV added.

### • Encrypted contents key (Kc_Encrypted 0-31)

Storage area for encrypted contents keys (32).

### • Encrypted ICV generating key (Kicv_cont_encrypted)

Storage area for key for creating ICV for encrypted contents.

### • Valid Revocation List version

The version of the of revocation list validly applied for contents reproduction.

In the event that the version of the set revocation list is older than this at the time of reproducing contents, reproduction is not permitted. Also, 0 is set for contents wherein there is no need to apply reference to a revocation list, such as reproduction processing of data stored is within own device, and so forth.

### • ICV of Security Header

Integrity check value (ICV) of security header

### [Revocation list]

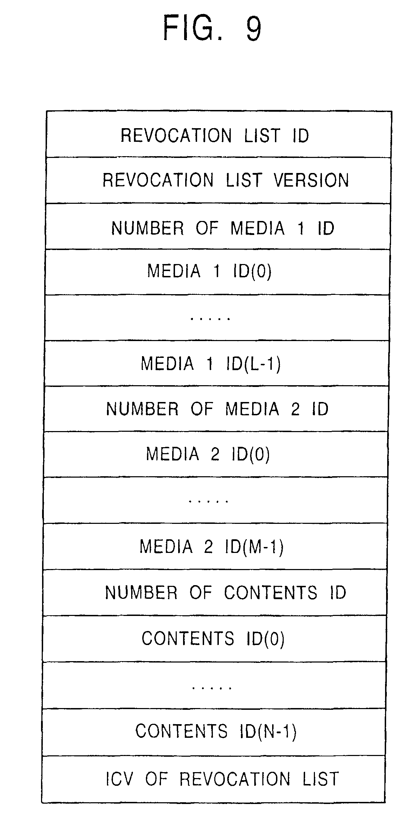

Next, the configuration of a revocation list which is invalid information of unauthorized media and contents, will be described. Fig. 9 shows the configuration of a revocation list. The following is a description of each type of data.

### • Revocation List ID

An ID serving as an identifier unique to the revocation list.

### • Revocation List Version

Indicates the version of the revocation list. The revocation list is updated, and invalid information of unauthorized media and contents are newly added at the time of updating.

With the configuration of the present invention, version information is set in the revocation list, and version information of valid revocation list is set in the header of the contents. At the time of reading out the contents, the version of the revocation list which the device currently holds, and the version of the valid revocation list in the header of the contents, are compared. At this time, in the event that the version of the revocation list currently being held is older, reading out of the contents is cancelled. Consequently, the contents cannot be read out unless the revocation list is updated.

Also, at the time of updating the revocation list, the memory interface unit compares the version information of the current revocation list and the version information of the updating revocation list, and only in the event that judgement is made that the revocation list is new, is updating of the revocation list permitted.

New/old comparison processing of the revocation list using version information, and examples of specific processing of the updating processing, will be described in detail later with reference to processing flowcharts.

### • Number of Media1 ID

The total number of invalid media 1 (Media1 ID).

### • Media1 ID(0) through Media1 ID(L-1)

A list of identifiers of invalid media 1.

### • Number of Media2 ID

The total number of invalid media 2 (Media2 ID).

### • Media2 ID(0) through Media2 ID(M-1)

A list of identifiers of invalid media 2.

### • Number of Contents ID

The total number of invalid contents IDs

### • Contents ID(0) through Contents ID(N-1)

A list of invalid contents identifiers.

### • ICV of Revocation List

ICV for tampering check for revocation list.

As described above, a revocation list according to the present invention is configured of identifiers (ID) of multiple types (media, contents). In this way, multiple contents and media can be revoked with a single revocation list, by providing multiple types of IDs which are the object of revoking, i.e., media ID and contents ID, in a revocation list which is invalid information of contents and media, and collation thereof is performed as differing operations. Use of unauthorized media and reading out of unauthorized contents can be forbidden by executing collation between the identifier (ID) of the media used or contents used, and IDs listed in the revocation list at the memory interface unit, at the time of inserting the media or reading out the contents.

In this way, due to the configuration wherein multiple IDs of contents and media are set in a single revocation list, multiple types of media and contents can be revoked with a single revocation list. The validation processing of media based on a revocation list at the time of activating the media, and specific processing of the contents validating processing at the time of processing the contents, will be described later.

Also, with the configuration of the present invention, the revocation list is set up to a memory interface which directly accesses external memory and the like, and following the set up can be consecutively used at the memory interface when mounting media or when reproducing contents, which does away with the need for processing such as repeatedly reading out from the internal memory at the time of using contents, so processing is efficiently executed.

### [Block Permission Table (BPT)]

Next the configuration of the Block Permission Table (BPT) used as an access permission table will be described. Conventionally, in the event of executing reproduction of contents on a personal computer or the like, for example, the file system of the operating system of the personal computer subjectively reads in and manages an access information table (e.g., a File Allocation Table; FAT) stored in the recording media, and the file system has been capable of freely rewriting the contents of the access information table. Accordingly, even in the event that there is a recording medium storing an access information table set to forbid writing, there is the possibility that the data within the recording medium might be rewritten by the file system reading that access information table and rewriting it.

The block permission table (BPT) employed with the data processing device according to the present invention is an access permission table of the media itself stored in a block wherein rewriting by a device is forbidden. In the event that the device executes data processing such as rewriting contents data or the like using the media storing the BPT, the block permission table (BPT) is set in the memory interface unit of the device which directly accesses the media, so regardless of which program the control unit of the devices executing, memory access is performed following the permission information set in the block permission table (BPT) which is the access permission table of the media.

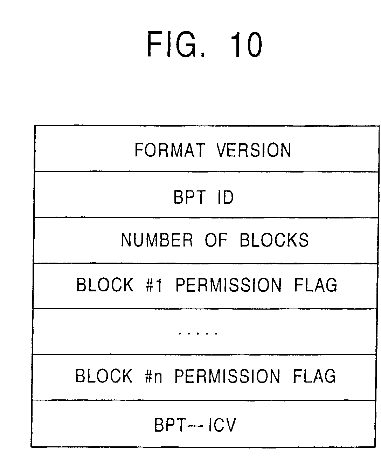

Fig. 10 shows the configuration of a block permission table (BPT). Each set of data will be described now.

### • Format Version

Indicates the format version of the BPT (Block Permission Table). There are various formats for the BPT itself as well, and this is data for identifying which of these it is.

### • BPT identifier (BPT ID)

An identifier (ID) of the block permission table (BPT: Block Permission Table)

### • Block number (Number of Blocks)

Indicates the total number of blocks handled by the BPT (Block Permission Table). As described above, the flash memory is erased in increments of blocks. This indicates the number of blocks managed by the BPT.

### • Block #1 through #n Permission Flag

Indicates that access restriction flags for each block. For example, this indicates that the block of flag 0 is a non-erasable block, and the block of flag 1 is an erasable block.

### • BPT-ICV (ICV of BPT)

The ICV for tampering check of the BPT (Block Permission Table)

Following recognition of the device, the file system of the device reads then the block permission table (BPT) from and media such as a memory card or the like mounted with flash memory, for example, transfers the BPT to the memory interface which directly accesses the media, and causes the BPT to perform managing as the access permission table for that media. The memory interface unit receives the access permission table and sets the BPT (e.g., the memory unit 321 shown in Fig. 4). Upon receiving a command to access the memory of the media, the memory interface only executes access based on the access permission table of this media.

Settings are made in the block permission table (BPT), such as processing forms permitted in increments of blocks of the flash memory of the media, specifically, settings regarding, for example, erasable blocks, non-erasable blocks, reproducible blocks, non-reproducible blocks, and so forth. The memory interface determines whether or not processing is permissible, following the BPT settings. Details of such processing will be described later in further detail.

Also, an integrity check value ICV is set in the block permission table (BPT) for preventing tampering, and at the time of setting the BPT to the memory interface, an ICV check is executed, and in the event that judgement is made that there has been tampering, the BPT setting processing is not executed. Accordingly, creating and using an unauthorized access permission table can be prevented. The ICV of the BPT is generated based on the media identifier (ID). Accordingly, even in the event that the access permission table is copied to another media, that media cannot be used. The generation of an ICV will be described later.

The block permission table (BPT) is written to a predetermined block of the memory (e.g., flash memory) at the time of manufacturing thereof, and shipped. At this time, block non-erasable settings are described in the block permission table (BPT) for the block within the memory where the block permission table (BPT) is stored. With the device according to the present invention, in the processing of the erasing data stored in the media, reference is made to the BPT and reference is made to whether or not erasing of each block is permissible as set in the BPT, following which only erasable blocks are erased, so erasing and rewriting of the BPT is prevented for media wherein the BPT storing block is set as being non-erasable. Writing and reproducing processing for files using the BPT within the media will be described later.

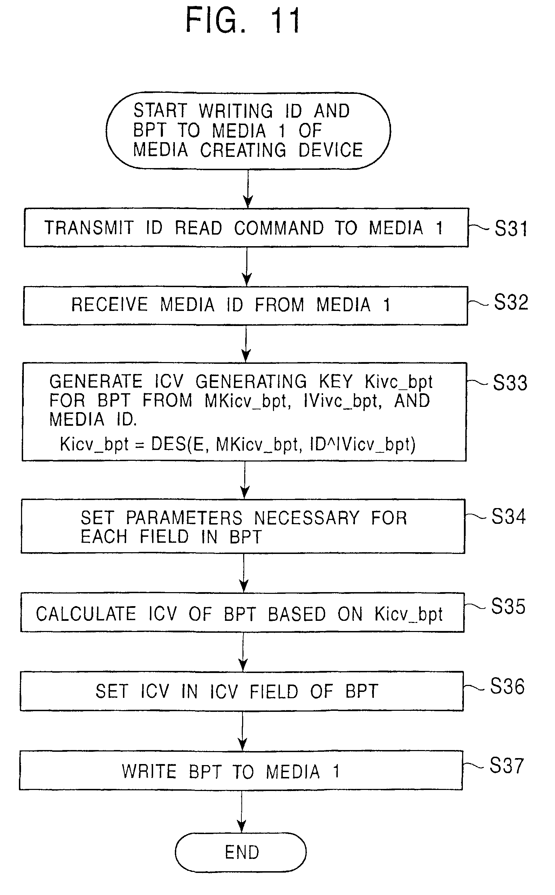

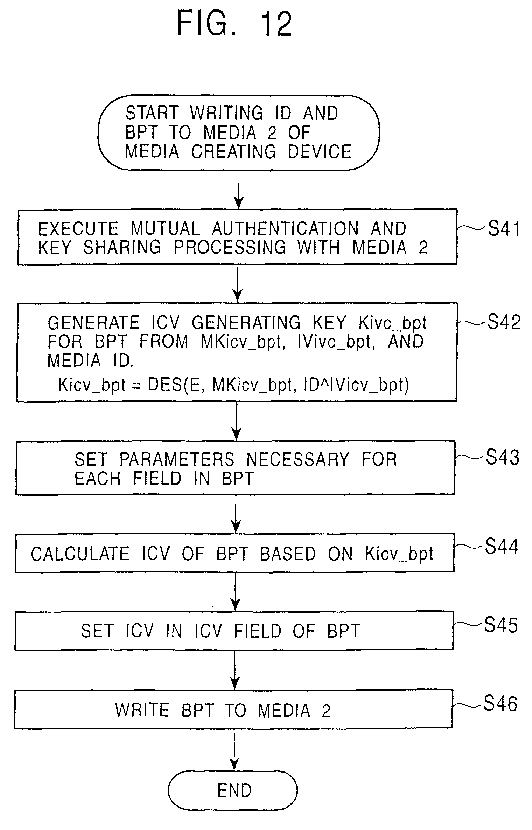

Fig. 11 and Fig. 12 illustrate the flow for setting the block permission table (BPT) at the time of manufacturing the media (data recording medium mounting flash memory). Here, let us assume that generation of the media identifier (ID) and writing of the BPT are performed as a continuous operation through a media creating device wherein command communication can be made with the media.

Fig. 11 is a setting flowchart of the block permission table (BPT) which is executed by the media creating device for the type of media 1 which does not have mutual authentication processing functions. Each process will be described. First, an ID read-out command is sent to a media wherein initializing settings have not yet been performed (S31), and upon receiving an ID stored in the media beforehand (S32), and an ICV generating key Kicv_bpt is generated (S33) based on the ID. The ICV generating key Kicv_bpt is generated based on a master key MKicv_bpt, an initial value IVicv_bpt, and the BPT identifier (ID). Specifically, this is generated based on ICV generating key Kicv_bpt = DES (E, MKicv_bpt, ID^IVicv_bpt). What this equation means is that encryption processing is executed in the DES mode with the master key MKicv_bpt, on the exclusive-OR of the ID of the BPT and the initial value IVicv_bpt.

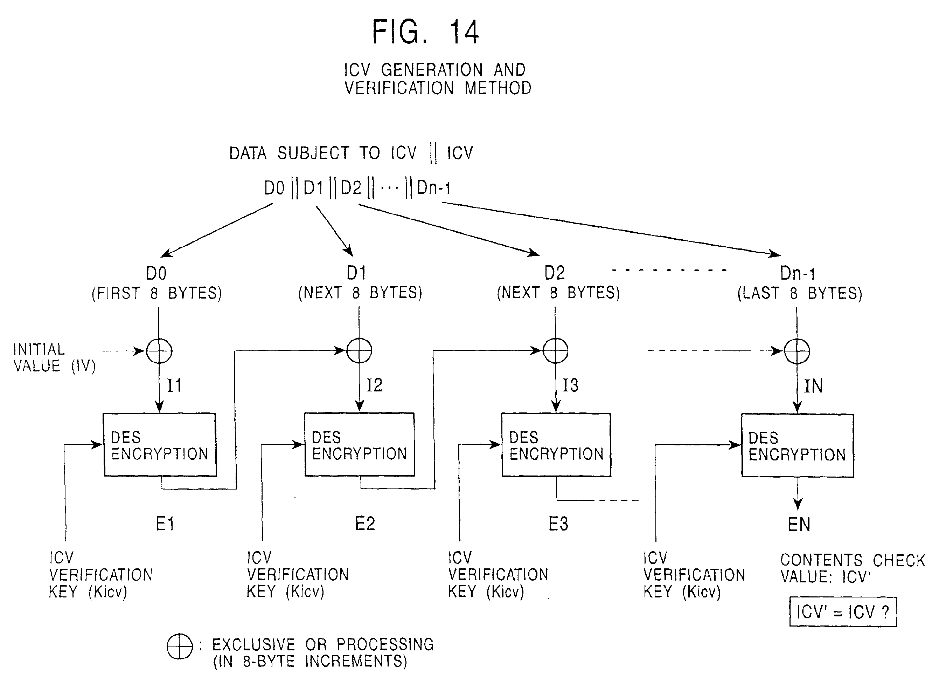

Next, necessary parameters are set in the fields of the BPT (S34), and an ICV is generated based on the BPT where the parameters are set (applying the configuration described later with reference to Fig. 14) (S35), and the generated ICV is set in the ICV field of the BPT (S36). The block permission table (BPT) thus configured is written to the media 1(S37). As described above, the block where the BPT is written is made to be a block set in the BPT as a non-erasable area.

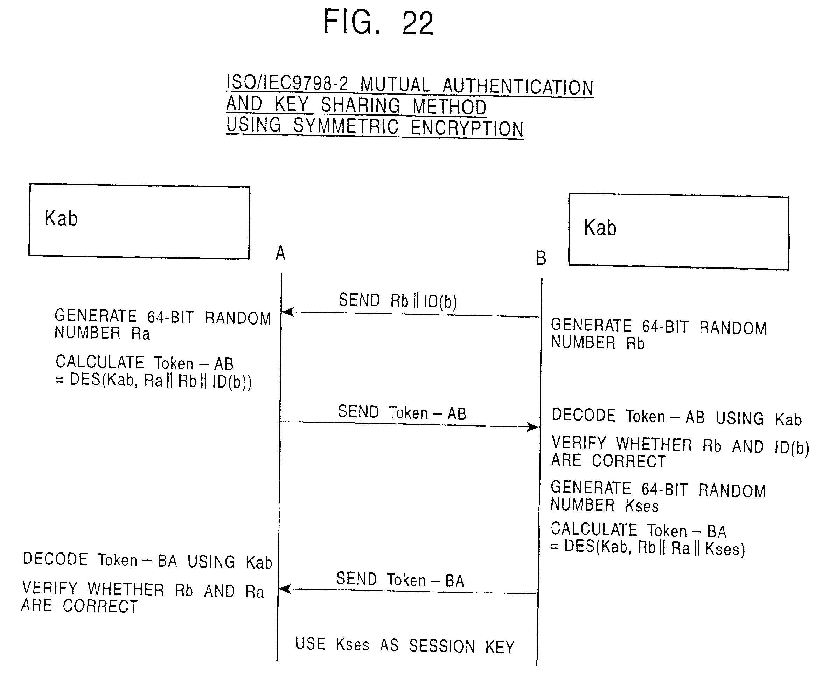

Fig. 12 is a flowchart for setting the block permission table (BPT) executed by a media creating device for the media 2 type having mutual authentication processing functions. Each of the processes will be described. First, mutual authentication processing and session key sharing (see the processing shown in Fig. 22 described later, for these processes) is executed with the media 2 regarding which initialization setting has not yet been performed.

Upon the mutual authentication and key sharing processing ending, an ID read-out command is sent to the media 2(S41), the ID is read out, and an ICV generating key Kicv_bpt is generated based on the ID (S42). The ICV generating key Kicv_bpt is generated based on a master key MKicv_bpt, an initial value IVicv_bpt, and the BPT identifier (ID). Specifically, this is generated based on ICV generating key Kicv_bpt = DES (E, MKicv_bpt, ID^IVicv_bpt). What this equation means is that encryption processing is executed in the DES mode with the master key MKicv_bpt, on the exclusive-OR of the ID of the BPT and the initial value IVicv_bpt.

Next, necessary parameters are set in the fields of the BPT (S45), and an ICV is generated based on the BPT where the parameters are set (applying the configuration described later with reference to Fig. 14) (S46), and the generated ICV is set in the ICV field of the BPT (S47). The block permission table (BPT) thus configured is written to the media 1 (S48). As described above, the block where the BPT is written is made to be a block set in the BPT as a non-erasable area.

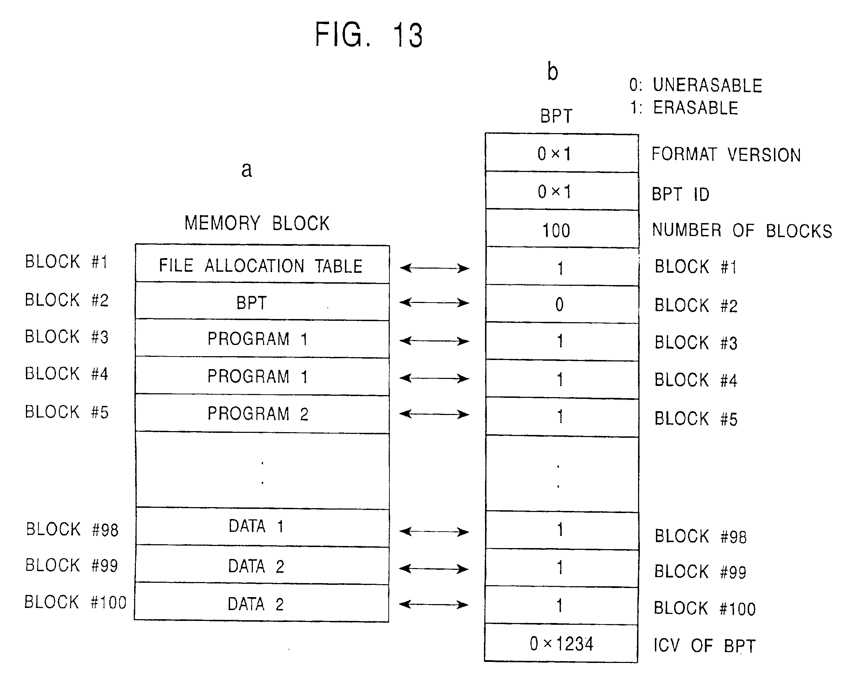

Fig. 13 shows a specific configuration example of a block permission table (BPT). Fig. 13 (a) is the block configuration of the flash memory of the media 1 and media 2, and Fig. 13 (b) is a block permission table (BPT). The block permission table (BPT) has a configuration wherein, following the format version, BPT ID, and number of blocks, whether each of the blocks are erasable (1), or non-erasable (0), is set, and finally the integrity check value of the BPT (ICV of BPT) is stored. The BPT storage block (block #2 in the example in Fig. 13) of the memory is set in the block permission table (BPT) as a non-erasable area, thereby providing a configuration wherein erasing by the device is prevented, and rewriting of BPT is not executed.

Now the configuration example of a block permission table (BPT) shown in Fig. 13 is a configuration where only whether each of the blocks are erasable (1) or non-erasable (0) is set, but an arrangement may be made wherein reading (reproduction) is permitted or not permitted, instead of a configuration wherein only access permission is set for erasing processing. For example, settings may be made such as reproduction and erasing not permitted (11), reproducible or non-erasable (10) non-reproducible but erasable (01), and reproducible and erasable (00).

Now, as shown in Fig. 2, and the media 2 has a control unit 231 within the media, such that the state whether or not the block permission table (BPT) is set can be stored, so a configuration may be used wherein rewriting of the BPT is prevented with the configuration wherein new BPT writing commands come from the device in the state that the BPT is set, these are not accepted.

Note that BPT writing in the above example has been described with regard to configuration executed through the media creating device which can perform command communication with the media, but the configuration may be such that writing of the BPT to the media is performed by a BPT created by a simple memory writer directly being written in, instead. However, in this case as well, the BPT storing block of the memory is set in the block permission table (BPT) as a non-erasable area.

### [Tampering check by integrity check value (ICV)]

Next, description will be made regarding the tampering check processing with the integrity check value (ICV: Integrity Check Value). In the configuration of the present invention, the integrity check value (ICV) is added to the contents, block permission table, revocation list, and so forth, stored in the data storing means, and is applied for data tampering check processing for each. The integrity check value with regard to the contents is of a configuration which can be added in increments of sector data. The specific form of the ICV processing added to the contents, block permission table, revocation list, and so forth, will be described later.

An example of generating an integrity check value (ICV) using a DES encryption processing configuration is shown in Fig. 14. As shown in the configuration-in Fig. 14, a message configuring the tampering check data which is the object is divided into eight-bite units (hereafter, the divided message is referred to as D0, D1, D2, ···, Dn-1). The tampering check data may be the contents itself, for example, or may be the configuration data of the BPT which is the above-described access permission table, or may be the configuration data of the revocation list.

First, the exclusive-OR is obtained from an initial value (Initial Value (hereafter, IV)) and D0 (the results thereof are taken as I1). Next, I1 is placed in the DES encryption unit, and encryption is performed using the integrity check value (ICV) generating key Kicv (the output thereof is taken as E1). Next, the exclusive-OR of E1 and D1 is obtained, the output I2 thereof is placed in the DES encryption unit, and encryption is performed using the integrity check value (ICV) generating key Kicv (output E2). Subsequently, this is repeated, and encryption processing is performed on all of the message. The EN which is output at the end is taken as a contents check value ICV'.

In the event that the sameness of an authorized ICV guaranteed not to be tampered with, for example, one generated at the time of generating contents, and the ICV' newly generated based on the contents, is proved, i.e., in the event that ICV' = ICV, an input message such as the contents, BPT, or revocation lists, for example, are guaranteed to be untampered with, but in the event that ICV' ≠ ICV holds, judgement is made that there has been tampering.

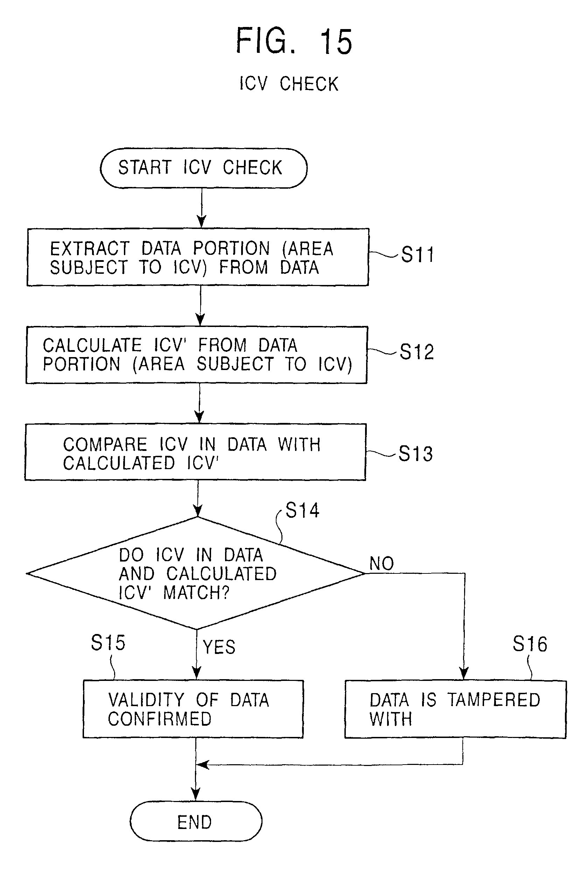

Fig. 15 shows a data tampering check processing flow using ICV. First, data which is the object of the tampering check is extracted (S11), and the ICV' is calculated by the DES encryption processing configuration shown in Fig. 14 for example, based on the extracted data (S12). As a result of the calculations, the calculated ICV' and ICV stored in the data are compared (S13), and in the event that these match, judgement is made that there has been no tampering with a data and that the data is valid (S14 through S15), and in the event that these do not match, judgement is made that there has been tampering with the data (S14 through S16).

The integrity check value (ICV) generating key Kicv_rl for tampering checking of the revocation list is generated based on the master key MKicv_rl for generating the ICV key for the revocation list stored within the memory unit 321 (see Fig. 4) of the memory interface unit 300 of the device beforehand, the initial value IVicv_rl for when generating the ICV of a revocation list, and the revocation list version contained in the attributes information of the revocation list. Specifically, this is generated based on the integrity check value (ICV) generating key Kicv_rl = DES (E, MKicv_rl, Version^IVicv_rl). What this equation means is that encryption processing is executed in the DES mode with the master key MKicv_rl, on the exclusive-OR of the Version and the initial value (IVicv_rl). The integrity check value of the revocation list is executed by the ICV generating configuration shown in Fig. 15 applying the integrity check value (ICV) generating key Kicv_rl thus generated, using this initial value IVrl (stored in the memory unit 321).

Also, the integrity check value (ICV) generating key Kicv_bpt for tampering checking of the block permission table (BPT) is generated based on the master key MKicv_bpt for generating the ICV key for the BPT stored within the memory unit 321 (see Fig. 4) of the memory interface unit 300 of the device beforehand, the initial value IVicv_bpt for when generating the ICV key of a BPT and the BPT identifier (ID) contained in the BPT attributes information. Specifically, this is generated based on the integrity check value (ICV) generating key Kiev_bpt = DES (E, MKicv_bpt, ID^IVicv_bpt). What this equation means is that encryption processing is executed in the DES mode with the master key MKicv_bpt, on the exclusive-OR of the BPT ID and the initial value (IVicv_bpt). The integrity check value of the block permission table (BPT) is executed by the ICV generating configuration shown in Fig. 15 applying the integrity check value (ICV) generating key Kicv_bpt thus generated, using this initial value IVbpt (stored in the memory unit 321). Further, the ICV stored as accessory information to the BPT is generated based on data within the BPT and data containing the identifier (ID) of the media storing the BPT. Accordingly, the ICV check of the BPT functions not only to verify whether or not there has been tampering with the data of the BPT, but also that the BPT is uniquely valid to the media, i.e., that this is not a BPT copied to a separate media.

Also, the integrity check value (ICV) generating key Kicv_cont for tampering checking of the contents in increments of sectors is encrypted and stored in the header (security header) of the contents, and is obtained as necessary by the encryption processing unit 320 (see Fig. 4) of the memory interface or by the decryption processing by the DES-CBC mode executed by the controllers 231 of the media 2 executed following mutual authentication with the media 2. These processes will be described in detail in the description using the flowcharts.

In the event that, as a result of such a data tampering check, tampering with a revocation list, for example, becomes apparent, reproduction and the like of contents based on reference processing to the revocation list is forbidden, and in the event that judgement is made such that there has been tampering with the BPT which is the access permission table, processing is executed so that accessing data of the media based on the BPT is forbidden. These processes will be described in detail later.

### [Data read-out, write-in processing]

The following is a description of the processing in the event of a device reading out data from media, and the case of a device storing data in media, with the data processing device according to the present invention.

### (Processing at the time of device activation)

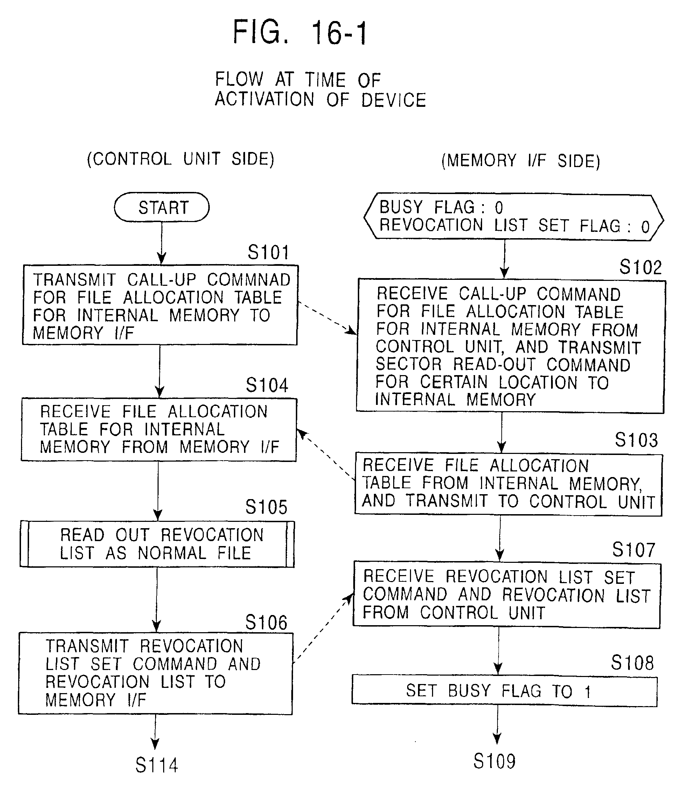

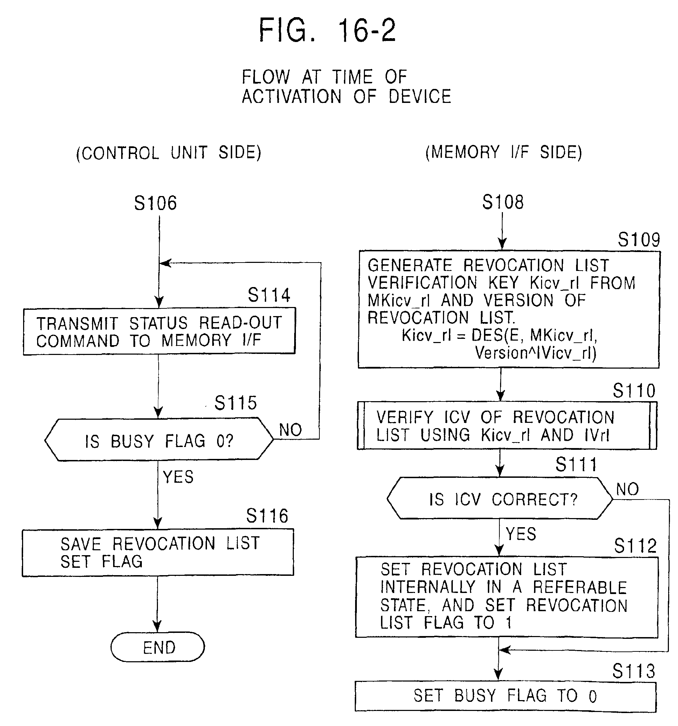

First, processing in the event of activating the device will be described with reference to Fig. 16. Fig. 16 shows the processing of the control unit 205 of the device 200 shown in Fig. 2 on the left side, and the processing of the memory interface unit 300 on the right side. The state of the status register of the memory interface unit 300 at the point of starting the processing is; busy flag: 0 (ready), revocation list set flag: 0 (not set).

First, upon the device being activated, the control unit transmits a file allocation table call-up command in the internal memory to the memory interface unit (S101). The memory interface unit transmits a file allocation table read-out command to the internal memory of the device (S102), receives the file allocation table from the internal memory, and transmits this to the control unit (S103).

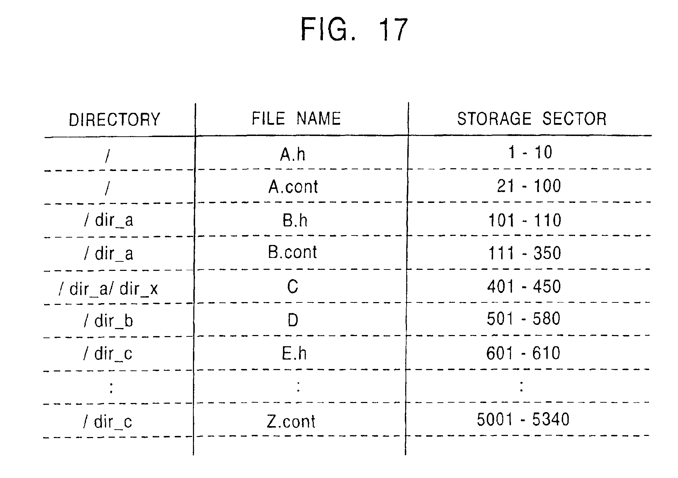

Now, the file allocation table is a table which performs directory management of data stored in internal memory accessible by the device and external memory, for example, various types of data files such as various types of contents, revocation lists, etc., and as shown in Fig. 17, has a configuration wherein directories, file names, and stored sectors, are correlated. The device accesses various files, based on the file allocation table.

Upon receiving the file allocation table corresponding to the data stored in the internal memory (S104), the control unit executes read-out processing of the revocation list based on the table (S105), and transmits a revocation list set command and a revocation list to the memory interface (S106). The set processing of a revocation list is executed only in the event that the revocation list is valid, and upon the list being set, comparison processing is executed with the contents or media identifiers listed in the revocation list at the time of processing contents, such as reading contents out from the media, etc. These processes will be described later.

Upon receiving the revocation list set command and the revocation list from the control unit (S107), the memory interface sets the busy flag of the status register to 1 (busy) (S108), and generates the integrity check value (ICV) generating key Kicv_rl for tampering checking of a revocation list (S109).

The integrity check value (ICV) generating key Kicv_rl for tampering checking of the revocation list is generated based on the master key MKicv_rl for generating the ICV key for the revocation list stored within the device beforehand, the initial value IVicv_rl for when generating the ICV key of a revocation list, and the revocation list version contained in the attributes information of the revocation list. Specifically, this is generated based on the integrity check value (ICV) generating key Kicv_rl = DES (E, MKicv_rl, Version^IVicv_rl). What this equation means is that encryption processing is executed in the DES mode with the master key MKicv_rl, on the exclusive-OR of the Version and the initial value (IVicv_rl).

Next, the memory interface generates an ICV' of the revocation list using the generated integrity check value (ICV) generating key Kicv_rl, and executes collation processing (ICV' = ICV?) with the correct ICV stored in the revocation list beforehand (S110). The generating processing of the ICV' is performed by processing applying the integrity check value (ICV) generating key Kicv_rl, using the initial value IVrl, based on the DES mode described with the above Fig. 14.

In the event that ICV' = ICV holds (Yes in S111), judgement is made that the revocation list is valid with no tampering, and this is set to a referable state for processing such as reading out contents and the like, and the revocation list set flag is set to 1 (set) (S112). The revocation list is stored in memory (e.g., the memory unit 321 (see Fig. 4)) within the memory interface, and upon the transmission/reception control unit 306 receiving a media recognition command from the control unit 205 (see Fig. 2), collation is executed between the media identifier of the revocation list that has been set, and the media identifier of the media that has been mounted to the device, and upon the transmission/reception control unit 306 receiving a header set command accompanying read-out processing of contents from the control unit 205, collation is executed between the contents identifier in the revocation list that has been set, and a contents identifier of the contents which are the object of being read out.

In this way, the revocation list is set up in the memory interface which directly accesses external memory and the like, and following the set up, is of a configuration which is continuously usable at the memory interface for when mounting media and reproducing contents, so processing for repeatedly reading out from the internal memory when using contents becomes unnecessary, and processing is efficiently executed.

Description of the flowchart in Fig. 16 will be continued. In the event that ICV' ≠ ICV holds (No in S111), judgement is made that the revocation list has been tampered with, and processing of contents based on the list reference processing is forbidden, and the processing ends. Due to the above processing ending, the busy flag is set to 0.

On the other hand, the control unit side transmits a status read-out command to the memory interface (S114), and saves a revocation list set flag (S116) under the condition that the busy flag is 0 (S115). In the event that judgement is made that there has been no tampering with the list, the revocation set flag to be saved is set to 1 which indicates that the list has been set to valid, and otherwise is set to 0.

### (Processing at the time of recognizing media)

Next, description will be made regarding processing executed at the time of recognizing media, such as confirmation of the validity of the media in the event that media is mounted to the device. As described above, there are two types of media, media 1 of the type wherein mutual authentication processing is not executed with the device, and media 2 of the type wherein mutual authentication processing not executed with the device. Upon each type being mounted to the device, the device executes processing for confirming whether or not there is permission to execute contents processing using the media, specifically, whether there is no registration in the revocation list as unauthorized media, sets the BPT (Block Permission Table) which is an access permission table stored in the media into the memory interface under the condition that the mounted media is not listed in the revocation list and is confirmed to be validly usable media, and executes processing enabling memory access with reference to the BPT.

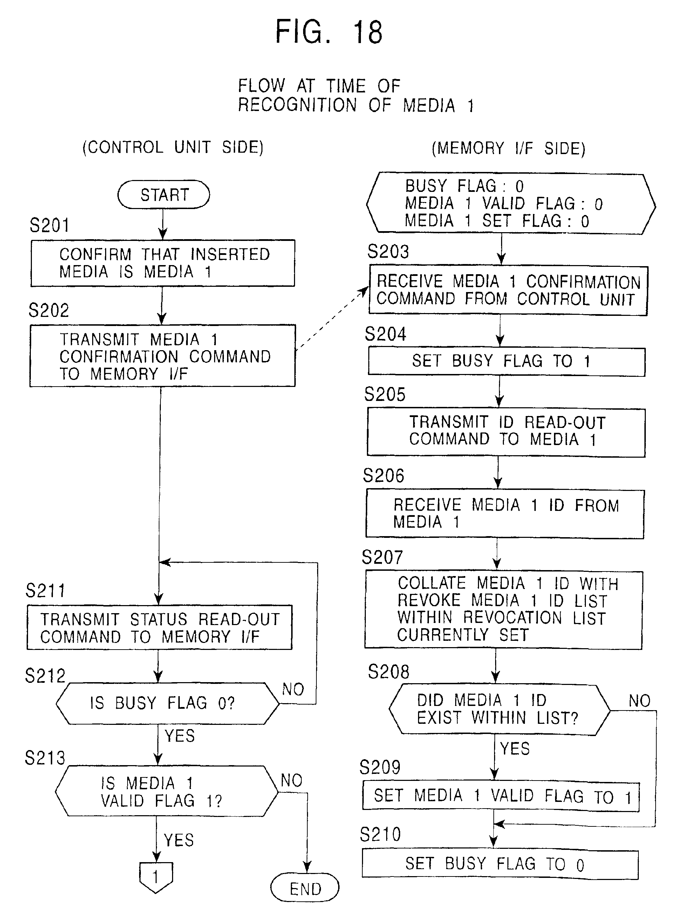

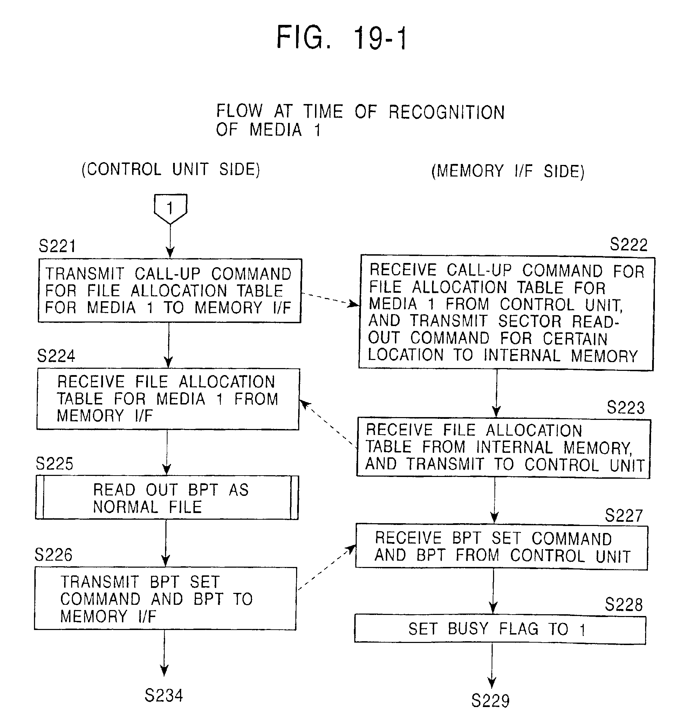

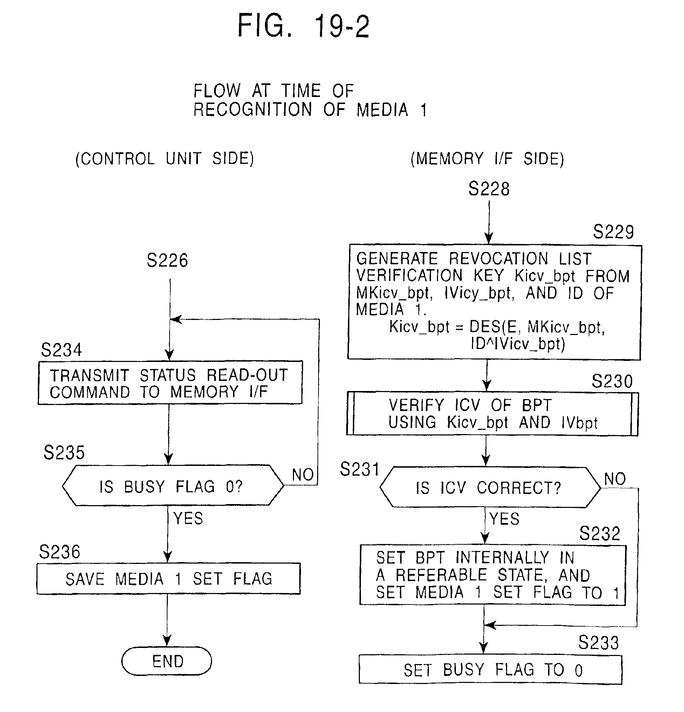

First, the media confirmation processing in the event that the media 1 is mounted will be described with reference to Fig. 18 and Fig. 19.

Fig. 18 and Fig. 19 also show the processing of the control unit 205 of the device 200 shown in Fig. 2 on the left side, and the processing of the memory interface unit 300 on the right side. The state of the status register of the memory interface unit 300 at the point of starting the processing is; busy flag: 0 (ready), media 1 valid flag: 0 (invalid), and media 1 set flag: 0 (not set).

First, the control unit recognizes whether the media mounted to the device is a media 1 (S201). Media identification is performed based on mechanical information based on a media form set beforehand or based on communication information between the device and media. Upon recognition that this is a media 1, the control unit transmits a media 1 recognition command to the memory interface (S202).

Upon receiving the media 1 recognition command from the control unit (S203), the memory interface unit sets the busy flag of the status register to 1 (busy) (S204), and transmits a read-out command for the identifier (ID) of the media 1 to the media 1 (S205), and receives (S206). Further, comparison collation is executed between the received ID of the media 1 and the list of revoked media 1 already set in the revocation list (S207). As described in the flowchart for activation with Fig. 16 above, the revocation list is set up in the memory interface at the time of activation, and following the set up, is continuously usable at the memory interface for when mounting media and reproducing contents.

In the event that there is no ID in the list matching the received ID, judgment is made that the mounted media 1 is not media which is the object of revocation, but is a validly usable media (No in S208), so the media 1 valid flag of the status register is set to 1 (valid) (S209), and the busy flag is set to 0 (ready) (S210). In the event that there is an ID in the list matching the received ID (Yes in S208), judgment is made that the mounted media 1 is media which is the object of revocation, and is not validly usable media, so validating processing of the valid flag in step S209 is not executed, but the busy flag is set to 0 (ready) in step S210, and the processing ends.

On the other hand, in step S211 the control unit side transmits a status read-out command to the memory interface, and following confirmation that the busy flag is 0 (ready) (S212), confirms the media flag state and continues processing only in the event that this is valid (flag: 1) (Yes in S213), and ends the processing in the event that this is invalid (flag: 0) (No in S213).

Next, the flow proceeds to Fig. 19, the control unit transmits a file allocation table call-up command relating to media 1 to the memory interface unit (S221), the memory interface transmits a sector read-out command where the file allocation table is stored to the media 1 (S222), receives the file allocation table from the media 1, and transmits this to the control unit (S223).

Upon receiving the file allocation table corresponding to the data stored in the media 1 (S224), read-out processing of the block permission table (BPT) is executed based on the table (S225), and a BPT set command and the BPT are transmitted to the memory interface (S226). The set processing of the BPT is executed only in the event that the BPT is valid, and upon the BPT being set, judgment is made regarding whether or not erasing in units of blocks is possible with reference to the BPT at the time of contents processing, such as processing for writing contents from the media, and so forth. Data writing processing actually referring to a BPT will be described later.

Upon receiving the block permission table (BPT) set command and the BPT from the control unit (S227), the memory interface sets the busy flag of the status register to 1 (busy) (S228), and generates the integrity check value (ICV) generating key Kicv_bpt for tampering checking of the BPT (S229).

The integrity check value (ICV) generating key Kicv_bpt for tampering checking of the BPT is generated based on the master key MKicv_bpt for generating the ICV key for the BPT stored within the device beforehand, the initial value IVicv_bpt for when generating the ICV of the BPT, and the media ID. Specifically, this is generated based on the integrity check value (ICV) generating key Kicv_bpt = DES (E, MKicv_bpt, mediaID^IVicv_bpt). What this equation means is that encryption processing is executed in the DES mode with the master key MKicv_bpt, on the exclusive-OR of the media 1 ID and the initial value (IVicv_bpt).

Next, the memory interface generates an ICV' of the BPT using the generated integrity check value (ICV) generating key Kicv_bpt, and executes collation processing (ICV' = ICV?) with the correct ICV value stored in the BPT beforehand (S230). The generating processing of the ICV' is performed by processing applying the generated integrity check value (ICV) generating key Kicv_bpt, using the initial value IVbpt, based on the DES mode described with the above Fig. 14. Further, the ICV stored as accessory information to the BPT is generated based on data containing the identifier (ID) of the media. Accordingly, the ICV check functions not only to verify whether or not there has been tampering with the data of the BPT, but also that the BPT is uniquely valid to the media, i.e., that this is not a BPT copied to a separate media.

In the event that ICV' = ICV holds (Yes in S231), judgement is made that the BPT is valid with no tampering that is stored in valid media, and this is set to a referable state for contents processing and the like, and the media 1 set flag is set to 1 (set) (S232). In the event that ICV' ≠ ICV holds (No in S231), judgement is made that the BPT has been tampered with, processing of contents based on BPT reference processing is forbidden, and the processing ends. Due to the above processing ending, the busy flag is set to 0 (S233).

On the other hand, the control unit side transmits a status read-out command to the memory interface (S234), and saves a media 1 set flag (S236) under the condition that the busy flag is 0 (Yes in S235). In the event that judgement is made that there has been no tampering with the list, the media 1 set flag to be saved is set to 1 which indicates that the list has been set to valid, and otherwise is set to 0.

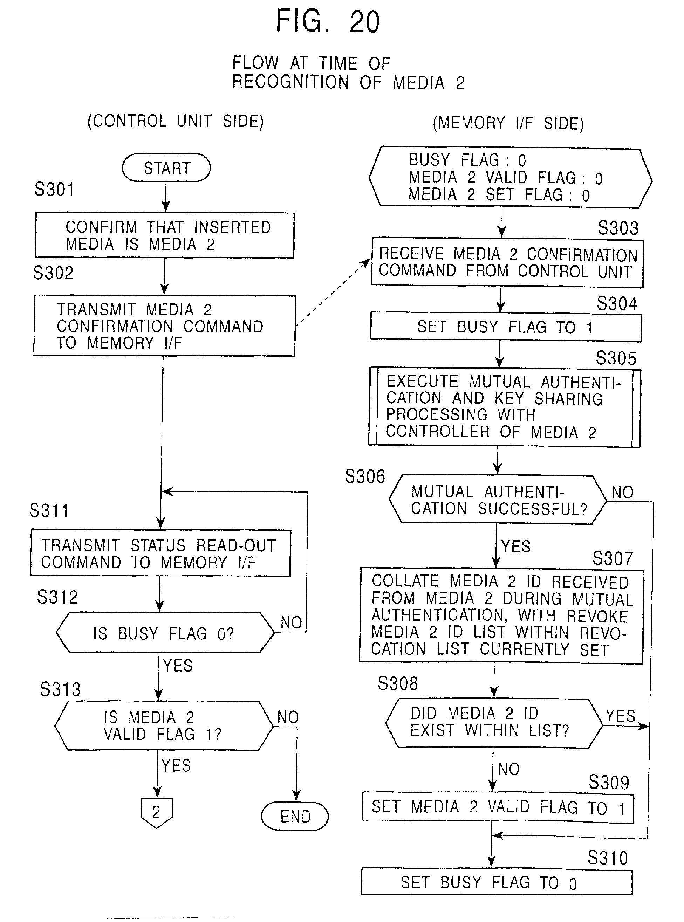

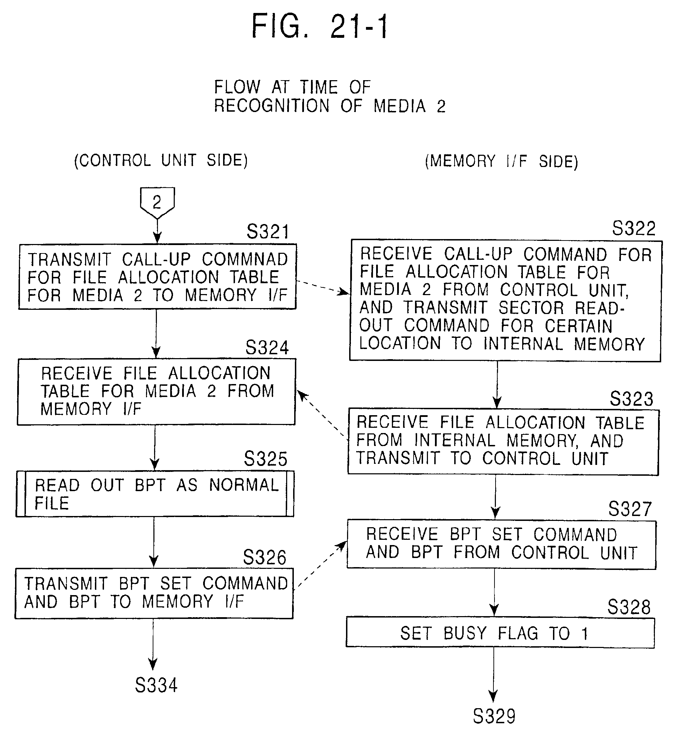

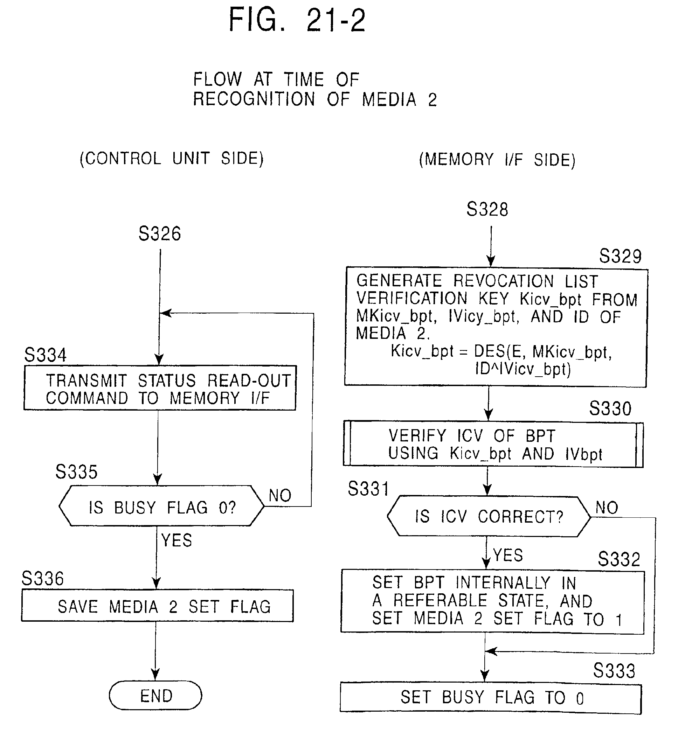

Next, media 2 confirmation processing performed at the time that a media 2 is mounted to the device will be described with reference to Fig. 20 and Fig. 21. As described with reference to Fig. 2, the media 2 is a media which executes mutual authentication with the device.

The steps in Fig. 20 from step S301 through S304 are the same as step S201 through S204 in the media 1 confirmation processing, so description thereof will be omitted.

In step S305, the memory interface executes mutual authentication processing with the media 2.

Fig. 22 illustrates a processing sequence for a mutual authentication method (ISO/IEC 9798-2) using a shared key encryption method. In Fig. 22, DES is used as this shared key encryption method, but other methods may be used as well as long as they are a shared key encryption method. In Fig. 22, first, B generates a 64-bit random number Rb, and transmits the Rb and its own ID which is ID(b) to A. A, upon receiving this, generates a new 64-bit random number Ra, and encrypts data using a key Kab in the DES CBC mode, in the order of Ra, Rb, and ID(b), and returns this to B. Note that the key Kab is the secret key and authentication key shared by A and B. The encryption processing with the key Kab using the DES CBC mode takes the exclusive-OR of the initial value and Ra in the processing using DES for example, performs encryption at the DES encryption unit using the key Kab, generates ciphertext E1, then subsequently takes the exclusive-OR of the ciphertext E1 and Rb, performs encryption at the DES encryption unit using the key Kab, generates ciphertext E2, and further takes the exclusive-OR of the ciphertext E2 and ID(b), performs encryption at the DES encryption unit using the key Kab, and generates ciphertext E3, thereby generating transmission data (Token-AB).

Upon receiving this, B decrypts the received data with the key Kab (authentication key) stored in each of the recording devices also as a shared secret key. As for the method for decrypting the received data, first, the ciphertext E1 is decrypted with the authentication key Kab, and obtains the exclusive-OR thereof with the initial value, thereby obtaining the random number Ra. Next, the ciphertext E2 is decrypted with the authentication key Kab, the exclusive-OR of the results thereof and E1 is obtained, thereby obtaining Rb. Finally, the ciphertext E3 is decrypted with the authentication key Kab, the exclusive-OR of the results thereof and E2 is obtained, thereby obtaining ID(b). Of the Ra, Rb, and ID(b) thus obtained, verification is made regarding whether Rb and ID(b) match that which B has transmitted. In the event that this verification is passed, B authenticates A as being valid.

Next, B generates a session key (Kses) to be used following authentication, with the random number. Then, encryption is performed in the DES CBC mode using the authentication key Kab, in the order of Rb, Ra, and Kses, and this is returned to A.

Upon receiving this, A decrypts the received data with an authentication key Kake. The decryption method of the received data is the same as the decryption processing of B. Of the Rb, Ra, and Kses thus obtained, verification is made regarding whether Rb and Ra match that which A has transmitted. In the event that this verification is passed, A authenticates B as being valid. Following mutually authenticating the other, the session key Kses is used as a shared key for secret communication following authentication.

In the event that a malfeasance or mismatch is discovered at the time of verifying the received data, the mutual authentication is taken to have failed, and subsequently mutual data communication processing is forbidden.

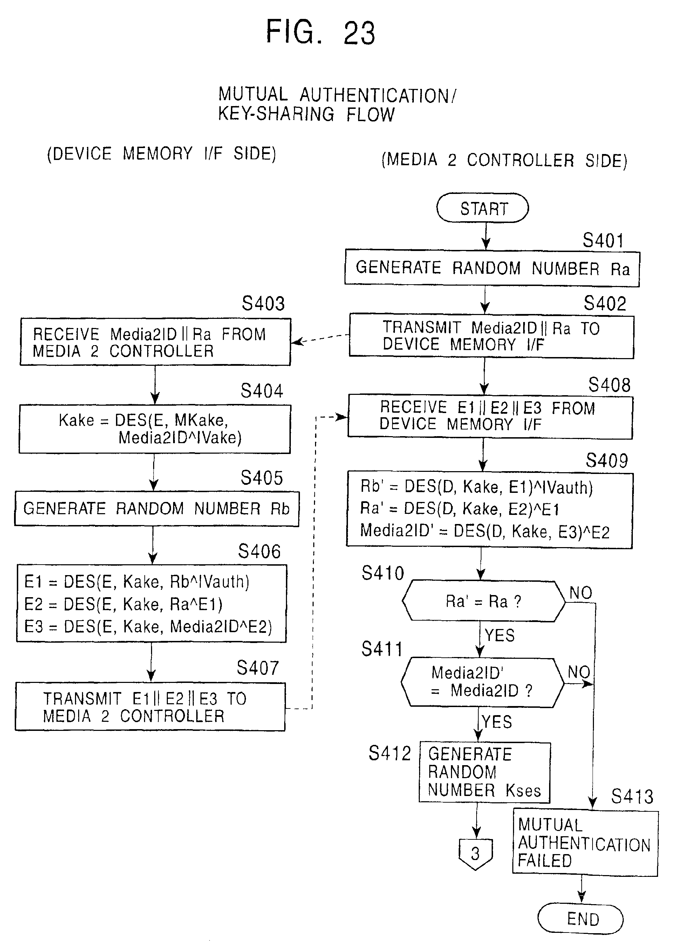

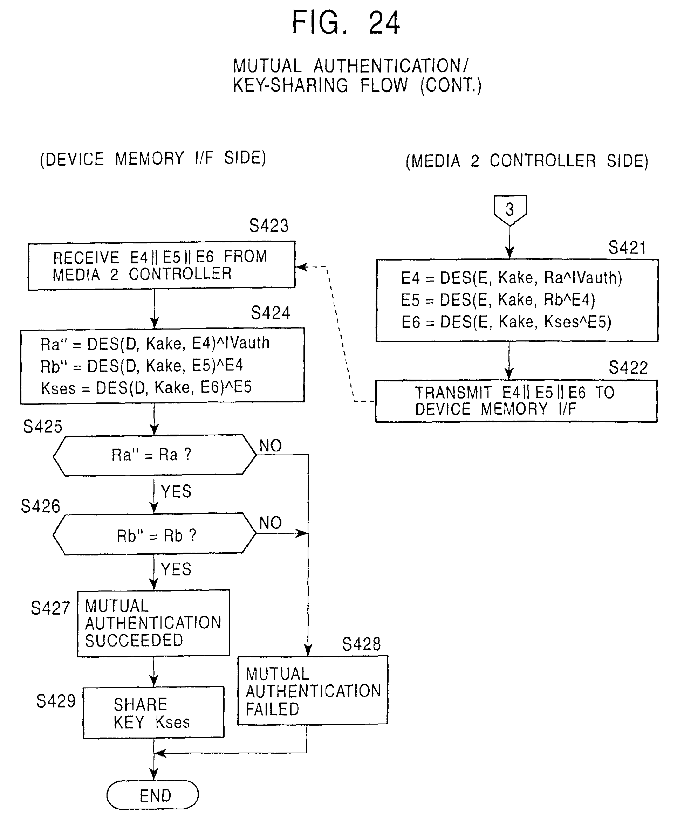

Fig. 23 and Fig. 24 show a flowchart for mutual authentication and key (session key) sharing processing between the device according to the present invention and the media. In Fig. 23 and Fig. 24, the left side is the memory interface of the device, and the right side is the processing at the controller of the media 2.

First, the media 2 controller generates a random number Ra (S401), and transmits the media 2 ID which is its own ID to the device memory interface (S402). Upon receiving this (S403), the device memory interface performs DES encryption processing by applying the authentication key generating master key MKake which it owns to the exclusive-OR of the received media 2 ID and an initial value (IV_ake), thereby generating an authentication key Kake (S404). Further, the device memory interface newly generates a random number Rb (S405), takes the exclusive-OR of an initial value IV/auth and Rb, encrypts this using the key Kake, generates the ciphertext E1, subsequently takes the exclusive-OR of E1 and Ra, encrypts this using the key Kake to generate the ciphertext E2, further takes the exclusive-OR of E2 and media 2 ID, encrypts this using the key Kake to generate the ciphertext E3 (S406), transmits the generated data E1 || E2 || E3 to the media 2 controller (S407). Note that [||] implies junction of the data.

Upon receiving this (S408), the media 2 controller decrypts the received data with the authentication key Kake (S409). As for the decryption method of the received data, first, the ciphertext E1 is decrypted with the authentication key Kake, and the exclusive-OR thereof with the initial value is obtained to obtain the random number Rb'. Next, the ciphertext E2 is decrypted with the authentication key Kake, and the exclusive-OR of the results thereof and E1 is obtained to obtain Ra'. Finally, the ciphertext E3 is decrypted with the authentication key Kake, and the and the exclusive-OR of the results thereof and E2 is obtained to obtain the media 2 ID'. Of the Ra', Rb', and media' 2 ID' thus obtained, verification is performed whether Ra' and media 2 ID' match that which the media 2 has transmitted (S410 and S411). In the event that this verification is passed, the media 2 authenticates the device as being valid. In the event that Ra' and the media 2 ID' do not match the transmitted data, mutual authentication is taken to have failed (S413), and subsequent data communication is cancelled.

Next, the media 2 controller generates a random number to serve as a session key (Kses) to be used following authentication (S412). Next, in step S421 in Fig. 24, encryption is performed in the DES CBC mode using the authentication key Kake, in the order of Ra, Rb, and Kses, and this is transmitted to the device memory interface (S422).

Upon receiving this (S423), the device memory interface decrypts the received data with the authentication key Kake. Of the Ra", Rb", and Kses thus obtained, verification is made regarding whether Ra" and Rb" match--that which the device has transmitted (S425 and S426). In the event of passing this verification, the device authenticates the media 2 as valid (S427). Following mutually authenticating each other, the session key Kses is shared (S429), and is used as a shared key for secret communication following authentication. In the event that Ra" and Rb" do not match the transmitted data, the mutual authentication is taken to have failed (S428), and subsequent data communication is cancelled.

Returning to Fig. 20, description of the media 2 recognition processing will be continued. The above-described mutual authentication and key sharing processing is executed in step S305, and upon confirmation in step S306 that the mutual authentication has succeeded, comparison collation is executed between the ID of the media 2 received during the mutual authentication processing and the list of revoked media 2 in the revocation list already set (S307).

In the event that there is no ID in the list matching the received ID, judgment is made that the mounted media 2 is not media which is the object of revocation, but is a validly usable media (No in S308), so the media 2 valid flag of the status register is set to 1 (valid) (S309), and the busy flag is set to 0 (ready) (S310). In the event that there is an ID in the revocation list matching the received ID (Yes in S308), judgment is made that the mounted media 2 is media which is the object of revocation, and is not validly usable media, so validating processing of the valid flag in step S309 is not executed, but the busy flag is set to 0 (ready) in step S310, and the processing ends.

On the other hand, in step S311 the control unit transmits a status read-out command to the memory interface, and following confirmation that the busy flag is 0 (ready) (S312), confirms the media flag state and continues processing only in the event that this is valid (flag: 1) (Yes in S313), and ends the processing in the event that this is invalid (flag: 0) (No in S313).

Next, the flow proceeds to Fig. 21, the control unit transmits a file allocation table call-up command relating to the media 2 to the memory interface (S321), the memory interface transmits a sector read-out command where the file allocation table is stored to the media 2 (S322), receives the file allocation table from the media 2, and transmits this to the control unit (S323).

Upon receiving the file allocation table corresponding to the data stored in the media 2 (S324), the control unit executes read-out processing of the block permission table (BPT) based on the table (S325), and transmits a BPT set command and the BPT to the memory interface (S326). The set processing of the BPT is executed only in the event that the BPT is valid, and upon the BPT being set, judgment is made regarding whether or not erasing in units of blocks is possible with reference to the BPT at the time of contents processing, such as processing for writing contents from the media, and so forth. Data writing processing actually referring to a BPT will be described later.

Upon receiving the block permission table (BPT) set command and the BPT from the control unit (S327), the memory interface sets the busy flag of the status register to 1 busyy (S328), and generates the integrity check value (ICV) generating key Kicv_bpt for tampering checking of the BPT (S329).

The integrity check value (ICV) generating key Kicv_bpt for tampering checking of the BPT is generated based on the master key MKicv_bpt for generating the ICV key for the BPT stored within the device beforehand, the initial value IVicv_bpt for when generating the ICV of the BPT, and the media 2 ID. Specifically, this is generated based on the integrity check value (ICV) generating key Kicv_bpt = DES (E, MKicv_bpt, media2ID^IVicv_bpt). What this equation means is that encryption processing is executed in the DES mode with the master key MKicv_bpt, on the exclusive-OR of the media 2 ID and the initial value (IVicv_bpt).

Next, the memory interface generates an ICV' of the BPT using the generated integrity check value (ICV) generating key Kicv_bpt, and executes collation processing (ICV' = ICV?) with the correct ICV value stored in the BPT beforehand (S330). The generating processing of the ICV' is performed by processing applying the generated integrity check value (ICV) generating key Kicv_bpt, using the initial value IVbpt, based on the DES mode described with the above Fig. 14. Further, the ICV stored as accessory information to the BPT is generated based on data containing the media 2 ID, and accordingly, the ICV check functions not only to verify whether or not there has been tampering with the data of the BPT, but also that the BPT is uniquely valid to the media, i.e., that this is not a BPT copied to a separate media.

In the event that ICV' = ICV holds (Yes in S331), judgement is made that the BPT is valid with no tampering and is stored in valid media, and this is set to a referable state for contents processing, and the media 2 set flag is set to 1 (set) (S332). In the event that ICV' ≠ ICV holds (No in S331), judgement is made that the BPT has been tampered with, processing of contents based on BPT reference processing is forbidden, and the processing ends. Due to the above processing ending, the busy flag is set to 0 (S333).

On the other hand, the control unit side transmits a status read-out command to the memory interface (S334), and saves a media 2 set flag (S336) under the condition that the busy flag is 0 (Yes in S335). In the event that judgement is made that there has been no tampering with the BPT, the media 2 set flag to be saved is set to 1 which indicates that the list has been set to valid, and otherwise is set to 0.

### (Data file read-out processing)

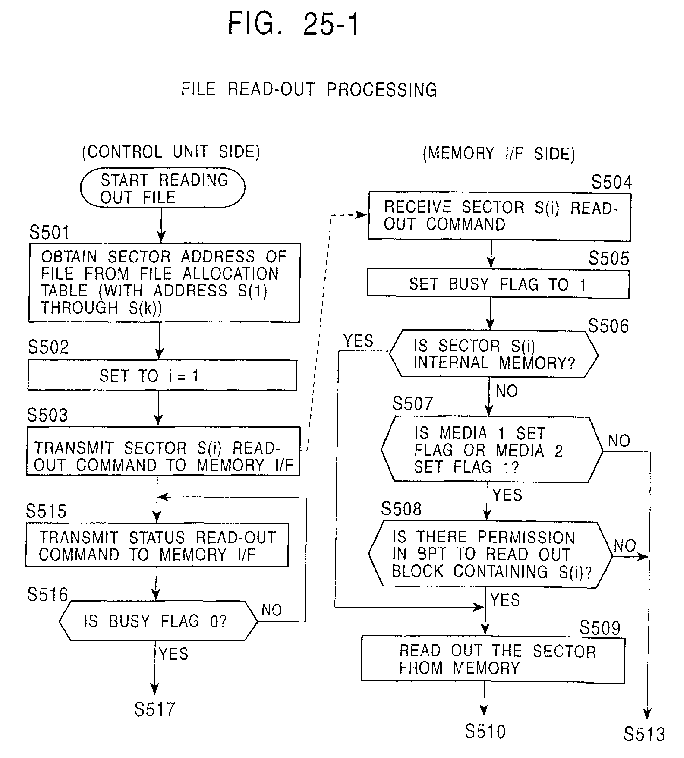

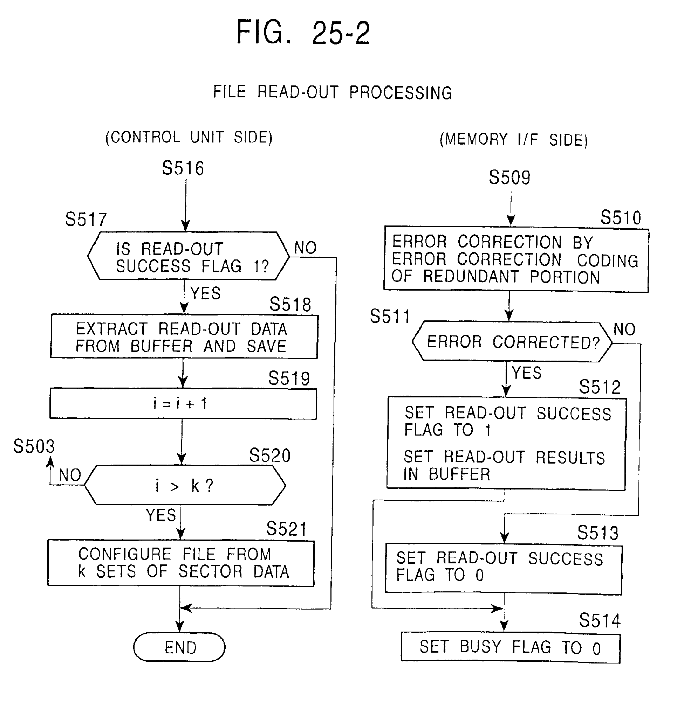

Next, the processing for reading out data files will be described with reference to the flowchart in Fig. 25. Data files include music data, image data, and other such contents data files, and also the above-described revocation list. The flowchart shown in Fig. 25 is the processing flow common to reading out data files stored in any of the internal memory or external memory (media 1 and media 2). In Fig. 25, the left side is the control unit of the device, and the right side is the processing at the memory interface of the device.

First, the control unit obtains sector addresses (S(1) through S(k)) of data to be read out (S501) from the file allocation table (see Fig. 17), and sequentially transmits obtained sector S(i) read-out commands to the memory interface (S502, S503). Upon receiving the sector S(i) read-out commands (S504), the memory interface sets the busy flag to 1 (busy) (S505), judges whether the received sector S(i) is internal memory or external memory (S506), and in the event that this is external memory, judges whether the set flag of the media 1 or media 2 is 1 (indicating that the media is set to valid) (S507), and in the event that the set flag is 1, further makes reference to the block permission table (BPT), and judges whether or not the BPT has this sector S(i) which is the object of reading out to set as a block regarding which reading out is permitted (S508). In the event that there is the read-out permission block setting in the BPT, the data at this sector is read out from the external memory (S509).

Now, in the event that the data to be read out is data in the internal memory which is not managed by the BPT, the steps S507 and S508 are skipped. In the event that the judgment made in steps S507 and S508 is No, i.e., in the event that the set flag of the media storing this sector S(i) is not 1, or in the event that a read-out permission is not set in the BPT for the sector S(i), the flow proceeds to step S513, and the read-out success flag is set to 0, as a read-out error.

In the event that judgement is made in the judgment blocking in steps S506 through S508 that reading out of the object sector S(i) is executable, this sector is read out from the memory, error correction processing based on the error correction code in a redundant portion set corresponding to the sector is executed (S510), confirmation is made that that error correction has succeeded (S511), the read-out success flag is set to 1 (successful), the read-out results are stored in the buffer (S512), and the busy flag is set to 0 (ready) (S513). In the event that error correction has failed, the read-out success flag is set to 0 (fail) (S513), and the processing ends.

Also, in steps S515 through S520, the control unit reads out the status of the memory interface, and in the state that the busy flag is 0, the read-out data is extracted from the buffer and saved under the condition that the read-out success flag is 1, the addresses are sequentially incremented, thereby repeatedly executing the processing for sequentially extracting the data from the buffer and saving it, and following saving all the sectors which are the object of reading out, the file is configured of all sectors that have been read out, and the processing ends.

### (File write-in processing)

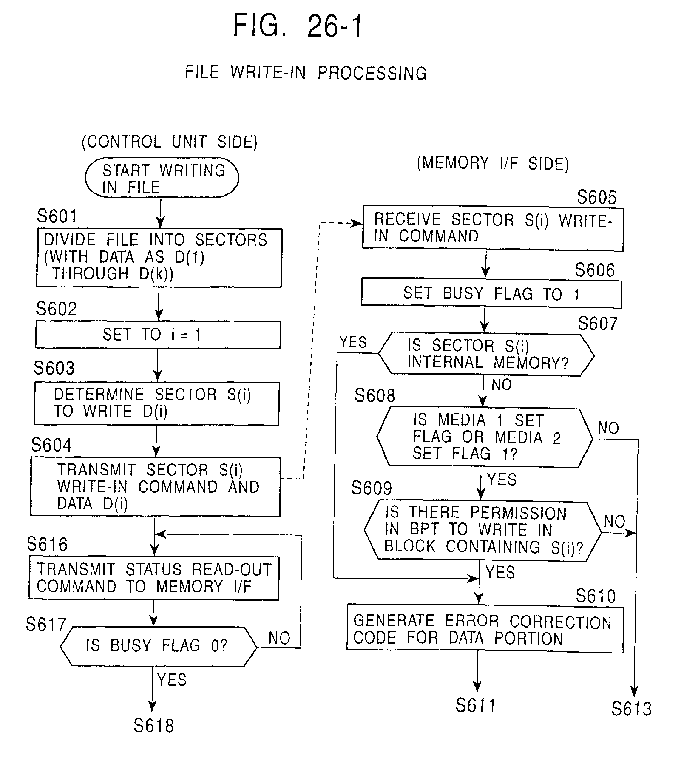

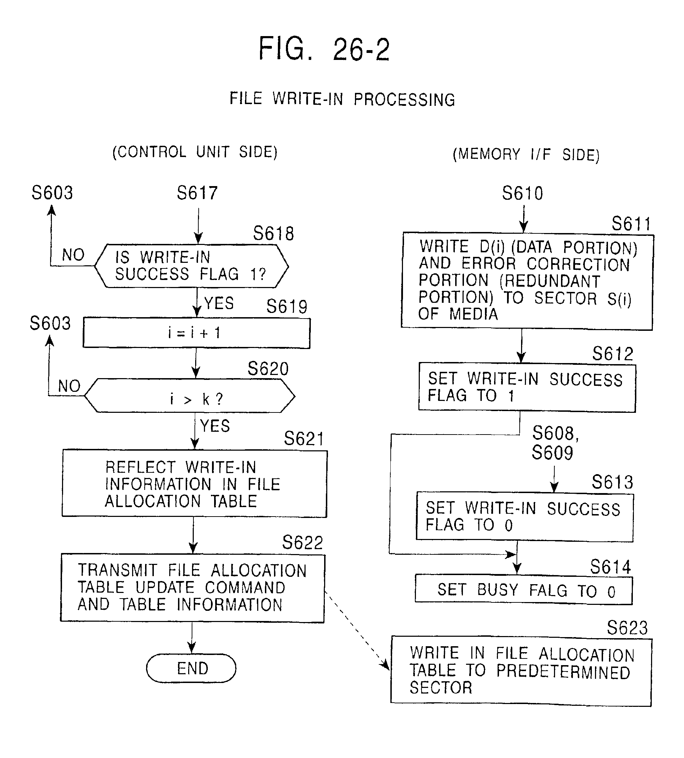

Next, the processing for writing in data files will be described with reference to the flowchart in Fig. 26. The flowchart shown in Fig. 26 is the processing flow common to writing data files to any of the internal memory or external memory (media 1 and media 2). In Fig. 26, the left side is the control unit of the device, and the right side, the memory interface of the device.

First, the control unit divides the file which is the object of writing into sectors. Let us say that the divided data is D(1) through D(k). The control unit next sets the writing sector S(i) for each data D(i), and sequentially transmits sector S(i) write-in commands and data D(i) to the memory interface (S602 through S604). Upon receiving a the sector S(i) write-in commands (S605), the memory interface sets the busy flag to 1 (busy) (S606), judges whether the receiving sector S(i) is internal memory or external memory (S607), and in the event that this is external memory, judges whether or not the set flag of the media 1 or media 2 is one (indicating that the media is set to valid) (S608), and in the event that the set flag is 1, further makes reference to the block permission table (BPT), and judges whether or not the BPT has set the sector S(i) which is the object of writing as a write-in permitted block (S609). In the event that there are settings as the write-in permitted block in the BPT, a correcting code to be set corresponding to the sector is generated (S610), a redundant portion having error correcting code is written into the sector S(i) and data D(i), the write-in success flag is set to 1 (success), and the busy flag is set to 0 (ready) (S614).

Now, in the event that the data to be written in is write-in processing to the internal memory which is not managed by the BPT, the steps S608 and S609 are skipped. In the event that the judgment made in steps S608 and S609 is No, i.e., in the event that the set flag of the media is not 1, or in the event that a write-in permission is not set in the BPT for the sector S(i), the flow proceeds to step S613, and the write-in success flag is set to 0, as a read-out error.

Also, in steps S616 through S620, the status of the memory interface is read out, and in the state that the busy flag is 0, the addresses are sequentially incremented and the write-in data is sequentially transmitted to the memory interface under the condition that the write-in success flag is 1. Following ending of all processing, updating processing of the file allocation table is executed (S621), the updated file allocation table is transmitted to the memory interface along with an updating command (S622), and the memory interface executes the processing of writing in the file allocation table according to the command (S623).

### [Encryption processing applying encryption keys corresponding to sector position]

Next, description will be made regarding encryption processing applying encryption keys that correspond to sector positions. There are cases wherein encryption is performed on contents portions for protecting copyrights and the like, but in the event that the entirety of the contents portion is encrypted with a single encryption key, this means that great amounts of ciphertext are generated under a single key, increasing the danger of being vulnerable to attack. It can be said that normally, the contents portion is preferably divided as much as possible, with each being encrypted with different keys. Sectors can be given that as the minimum unit for encrypting contents with the present system, but in the case that saving the keys in the header area is object, key information of eight bytes (in the case of DES) or 16 bytes (in the case of triple-DES) is necessary for each sector, so the header size becomes massive which reduces the data area in the limited memory area, which is undesirable in practice. Also, employing a method wherein a key for encrypting a sector is stored in the data portion of that sector does not affect the header size, but the data size is cut back since no data can be placed in the key area, and further, in the case of the system wherein the control unit side has a file system, the file system itself needs to be greatly changed.

Thus, according to the present invention, M pieces of key information corresponding to the M number of sectors per block of media are stored in a security header (see Fig. 7) which is the above-described attributes information of the contents, and these are applied as encryption keys for each of the sectors (see Fig. 8). Kc_Encrypted0 through Kc_Encrypted31 within the security header shown in Fig. 7 indicate the 32 encryption keys Kc. Note that [Encrypted] indicates that each key Kc is encrypted and stored. The configuration is such that keys are selected, according to the position of the sector in the block, from these multiple keys, and used as encryption keys corresponding to the sectors.

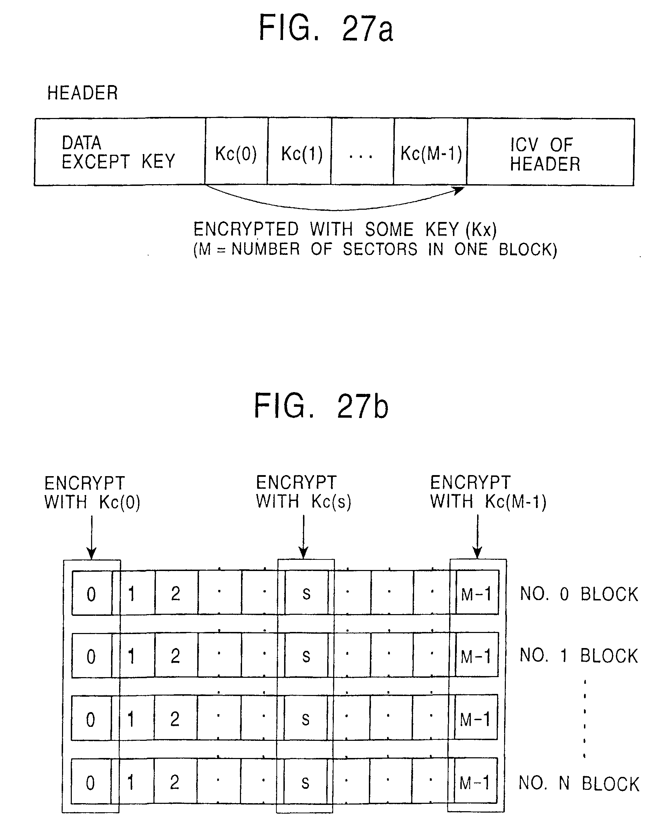

Fig. 27 shows a diagram illustrating the key storage configuration in a security header generated corresponding to contents as header information of the contents, and the correlation between the stored keys and the sectors within the memory which are the object of application of the keys. Fig. 27(a) is a diagram illustrating the key storage configuration within the security header described earlier with reference to Fig. 7, in a simplified manner. An M number of keys (content keys) from Kc(0) through Kc(M-1) are stored in the security header shown in Fig. 27(a). In addition to the keys, various types of information such as version, contents type, and so forth are stored in the header, and further, the ICV for tampering checking of the header information is also stored.

The M number of contents keys are each correlated with each of the sectors and are used for encryption of data to be stored in the sectors, as shown in Fig. 27(b), for example. As described earlier with reference to Fig. 3, flash memory which performs erasing in increments of blocks has the data storing area thereof divided into block increments as shown in Fig. 27(b), with each block being further divided into multiple sectors. For example, the key Kc(0) is applied as the encryption key for data to be stored in sector 0 of the blocks in the memory, and the key Kc(s) is applied as the encryption key for data to be stored in sector s of the blocks in the memory. Further, the key Kc(M-1) is applied as the encryption key for data to be stored in sector M-1 of the blocks in the memory.

Thus, the security of the stored data (e.g., contents) is heightened by storing the data by applying different encryption keys corresponding to sectors. That is, while in the event that the entire contents are encrypted with a single key, the entire contents can be decrypted by a key leak, but with the present configuration, it is impossible to decrypt the entire data from a single key leak.

Single DES which executes DES encryption processing with a single encryption key, for example, is used for the encryption algorithm. Also, an encryption configuration which applies triple DES using two or more keys for encryption may be applied instead of single DES.

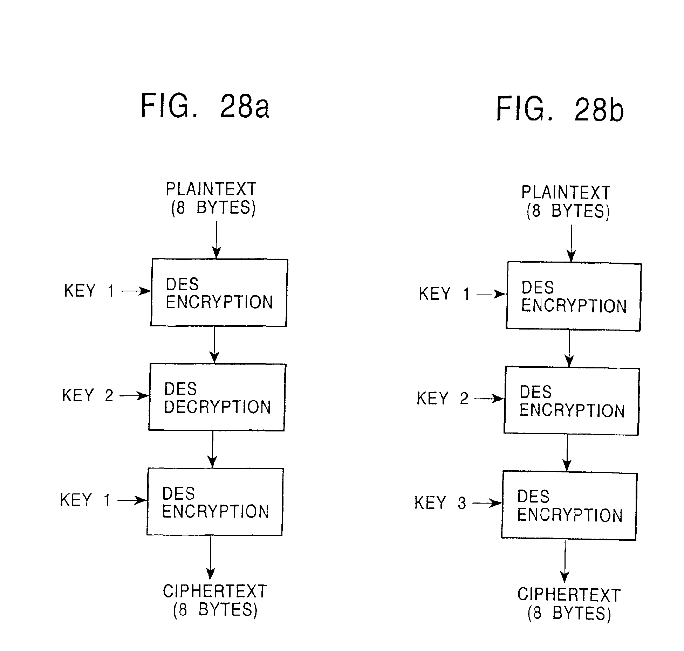

Fig. 28 shows a detailed configuration example of Triple DES. As shown in Fig. 28 (a) and (b), there are the following two different forms as representative configurations of Triple DES. Fig. 28(a) shows an example using 2 encryption keys, with processing been performed in the order of encryption processing by key 1, decryption processing by key 2, and further encryption processing by key 1. Two types of keys are used, in the order of K1, K2, and K1. Fig. 28(b) illustrates an example of using three encryption keys, with processing being performed in the order of encryption processing by key 1, encryption processing by key 2, and further encryption processing by key 3, where an encryption processing is performed each of the three times. Three types of keys are used, in the order of K1, K2, and K3. The strength of security can be improved over that of single DES, by the configuration wherein multiple processes are continued.

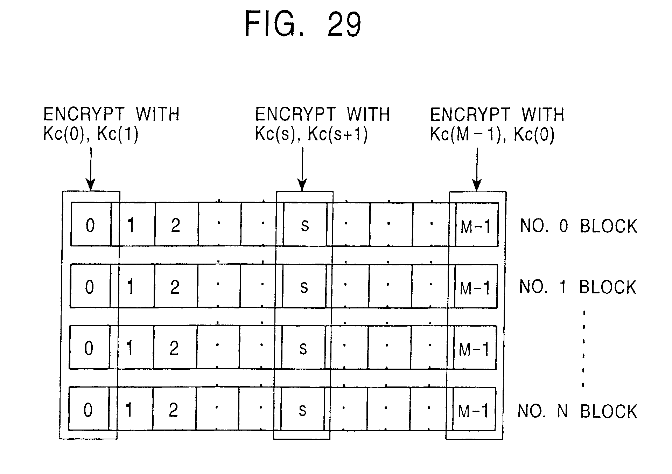

Fig. 29 illustrates the configuration example wherein encryption processing by Triple DES has been performed, applying a pair of two different encryption keys to each sector of the data to be stored in the memory. As shown in Fig. 29, triple DES encryption is performed on sector 0 of each block using the two keys of key Kc(0) and Kc(1), triple DES encryption is performed on sector s of each block using the two keys of key Kc(s) and Kc(s+1), and triple DES encryption is performed on sector M-1 of each block using the two keys of key Kc(M-1) and Kc(0). The number of keys to be stored in the header is M with this case as well, so security can be heightened without the need to increase the number of keys stored shown in Fig. 27(a).

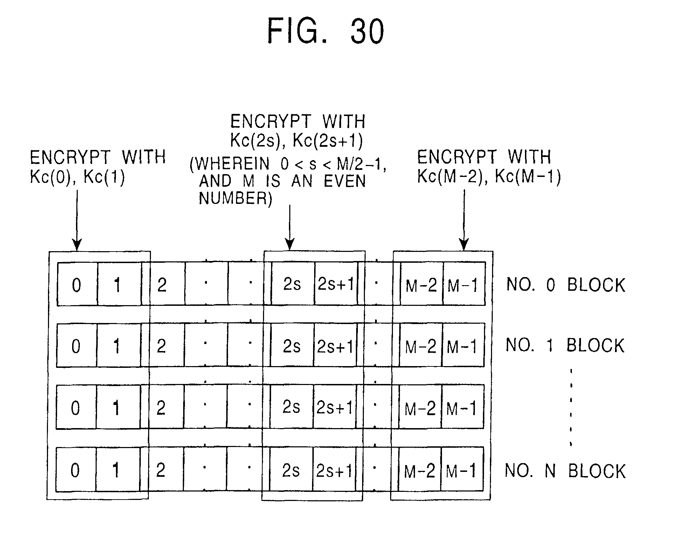

Further, a data encryption configuration example according to a different form is shown in Fig. 30. Fig. 30 is a form wherein triple DES encryption has been performed using 2 keys, with two consecutive sectors areas in each block of the memory as one encryption block. As shown in Fig. 30, Triple DES encryption is performed for sector 0 and sector 1 of each block using the two keys of key Kc(0) and Kc(1), Triple DES encryption is performed for sector 2s and sector 2s+1 of each block using the two keys Kc(2s) and Kc(2s+1), and Triple DES encryption is performed for sector M-2 and sector M-1 of each block using the two keys Kc(M-2) and Kc(M-1). Thus, the processing load for the encryption process or decryption process can be lightened by applying the same encryption processing to multiple sectors.

In addition to the examples shown in Fig. 27, Fig. 29, and Fig. 30, various configurations can be made as configurations for executing encryption for each sector using keys selected from multiple keys stored in the header. For example, in Figs. 27, 29, and 30, the configuration has and the same number of keys as the number of sectors stored in the header, but in the event that the number of sectors is M, for example, a configuration may be used wherein the number of stored keys is N (wherein N < M), so that the sector 0 and sector s are encrypted with the same key, and so forth. Or, a configuration may be made wherein the number of stored keys is L (wherein L > M), so as to apply a triple DES with entirely different multiple key sets for each sector.

### [Configuration for adding integrity check value (ICV) in increments of sectors]

Next, the configuration whereby the integrity check value (ICV) is added in increments of sectors will be described. In the event of confirming the validity of data configured over multiple sectors, generally, a configuration wherein the above-described integrity check value (ICV) is added to the end or the like of the entire contents data, has been common. With such an ICV adding configuration for the entire data, the validity cannot be confirmed in increments of sectors making up the data.

Also, in the event of storing the ICV, placing the ICV in the same area as the storage area of the contents which are the actual data reduces the area usable as a data portion by that much. If an ICV for each sector were to be put in the data in each sector, this would necessitate processing for separating and extracting the actually-used data from the ICVs, i.e., processing for removing the ICV within the sector of the data portion that has been read out, and processing for linking multiple sectors of data within the extracted sector, for the file system of the device to execute processing wherein data is read out in increments of data portions, necessitating the file system to be newly constructed to execute this processing. Further, performing the ICV checks at the control unit places that much load of processing on the control unit.

With the data processing device according to the present invention, ICVs are set in each sector in order to enable data tampering checks for each sector, and the ICVs are set not in the actual data area, but are positioned in a redundant portion area set beforehand as an area which is not read by the file system of the device. With the configuration wherein the ICV is placed in the redundant portion, there is no need to place the ICV is within the data, so more area of the data portion can be used. Also, placing ICVs in the redundant portion does away with the need to separate the data portion and ICV ease, and the processing for linking the data, so continuity of the data read-out is maintained.

At the time of reading the data, an ICV check process is executed for each sector at the memory interface unit 300 (see Fig. 2), and in the event that judgement is made that there is tampering, and the data is invalid, transfer to the control unit 205 (see Fig. 2) is not executed. Also, at the time of writing data, the ICV is calculated for each sector of the memory interface unit 300, and processing for writing this into the redundant portion is-executed.

Also, whether or not to add an ICV to each sector is specified by describing in the security header. With regard to this configuration, as indicated in the description of the security header configuration in Fig. 7, the ICV flag within the security header has as many flags as the number of sectors in the block (32 sectors), indicating ICV addition/non-addition for each sector within the block. For example 0: no ICV, 1: ICV added, is set.

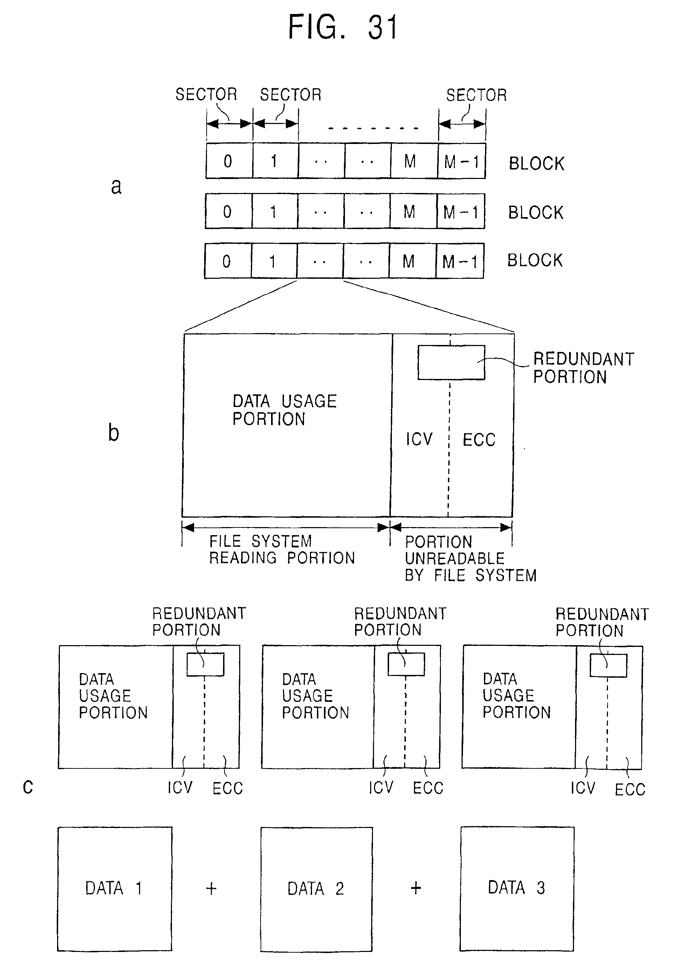

Fig. 31 illustrates the data usage portion and redundant portion configuration. As shown in Fig. 31(a), the data stored in the memory (flash memory) is divided into block increment areas having multiple sector areas, and is stored. As shown in (b), each sector is configured of 512 or 1024 bytes, for example, the data usage portion which is read by the file system of the device as actual data (e.g., contents), and the redundant portion storing information such as ECC (Error Correction Code) which is not read by the file system.

The capacity of this redundant portion is an area predetermined as 16 bytes or 20 bytes, for example, with the file system of the device recognizing this redundant portion as a non-data area, and does not read in the data (contents) reading processing. Generally, ECC stored in a redundant portion does not use the entirety of the redundant portion, and a non-usage area (reserved area) exist within the redundant portion. The integrity check values (ICV) of the sectors are stored in this reserved area.

As shown in Fig. 31(c), the linking processing of the data portions by the file system of the device in the event that the ICVs are stored in the redundant portion can be made the same as the conventional data linking processing wherein data portions storing only that which is purely used as data are simply linked. Accordingly, all that the file system of the device has to do is to simply link the data portion areas excluding the redundant portion, so no new processing whatsoever is necessary.

According to the present configuration, the validity of data can be verified in increments of sectors of the data which is made up of multiple sectors. Also, placing the ICVs for tampering checking into the redundant portion allows the data area which can be used for data, to be used as it is. Also, only sectors that have been judged to be proper (not tampered with) as a result of ICV checking are transmitted to the control unit. Also, the ICV checking is performed at the memory interface unit, so advantages are had such as there being no load on the control unit.

### [Contents key storing processing by individual keys within media]

Next, the configuration for processing for saving contents keys by individual keys with in the media will be described. As described with reference to Fig. 7, multiple contents keys (Kc_Encryptedxx) serving as encryption keys corresponding to sectors, and a contents check value generating key (Kicv_Encrypted), are encrypted and stored in the security header configured corresponding to the contents.

One of the forms of encryption of these keys is a configuration wherein these are encrypted by a distribution key Kdist which is stored in the memory unit 321 (see Fig. 4) of the memory interface of the device beforehand and stored. For example, Kc_Encrypted0 = Enc(Kdist, Kc(0)). Here, Enc(a, b) indicates that the data is b encrypted by a. In this way, a configuration wherein the keys are encrypted using the distribution key Kdist of the device and stored in the security header, is one configuration.

Further, with media 2, i.e., media which has an encryption processing unit and executes contents processing by executing mutual authentication with the device, there is a form wherein a contents key relating to content stored in the media 2, and ICV generating key, are encrypted using a unique key of the media 2. The following is a description of processing for storing the contents key and contents ICV generating key encrypted using a unique key of the media 2, in this case the media 2 storing key Ksto.

The media 2 storing key Ksto is stored in the internal memory 235 of the media 2 controller 231 of the media 2230, as shown in Fig. 2. Accordingly, the encryption processing and decryption processing of the contents key and ICV generating key using the media 2 storing key Ksto is executed at the media 2 side. At the time of the device mounted with the media 2 using contents in the media 2, in the event that obtaining of the contents key and ICV generating key, or storing processing to the security header, is to be executed, there is the need to execute encryption and decryption processing of the keys at the media 2 side. With the data processing device according to the present invention, processing these with a CBC (Cipher Block Chaining) mode has been enabled.

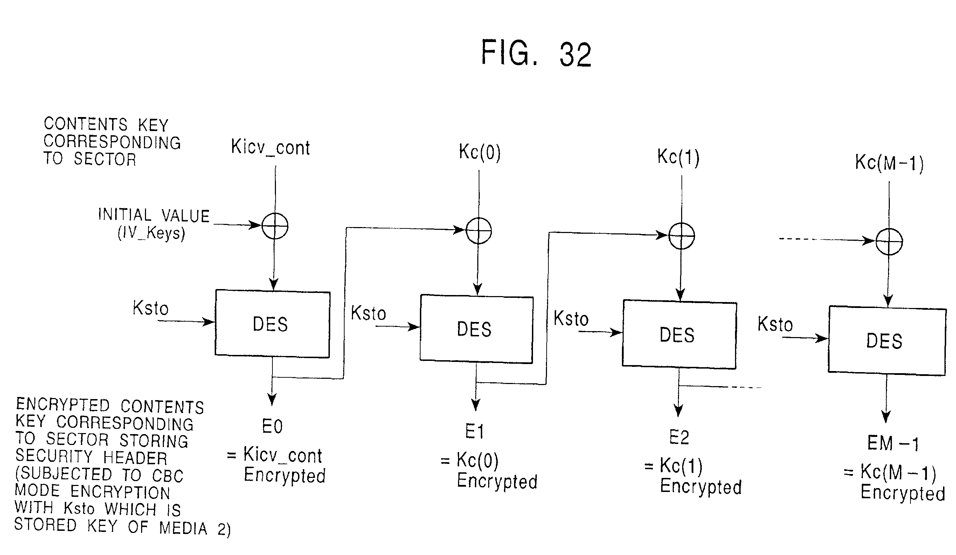

Fig. 32 illustrates the encryption processing configuration of the keys in the CBC mode. This encryption processing is executed in the encryption processing unit 236 (see Fig. 2) of the media 2. The exclusive-OR of the initial value IV_keys stored in the internal memory 235 and the contents check value generating key Kicv_cont is executed, the results thereof are subjected to DES encryption applying the stored key Ksto stored in the internal memory 235 of the media 2, and the results are stored in the header as Kicv_cont Encrypted. Further, the exclusive-OR of Kicv_cont Encrypted and the sector-corresponding contents key Kc(0) corresponding to the sector (0) is executed, the results thereof are subjected to DES encryption applying the stored key Ksto stored in the internal memory 235 of the media 2, and the results are stored in the header as Kc(0) Encrypted, as one encrypted contents key. Further, the exclusive-OR of Kc(0) Encrypted and the sector-corresponding contents key Kc(1) corresponding to the sector (1) is executed, the results thereof are subjected to DES encryption applying the stored key Ksto, and the results are taken as Kc(1) Encrypted. Subsequently, this processing is repeatedly executed, thereby obtaining key data for header storage.

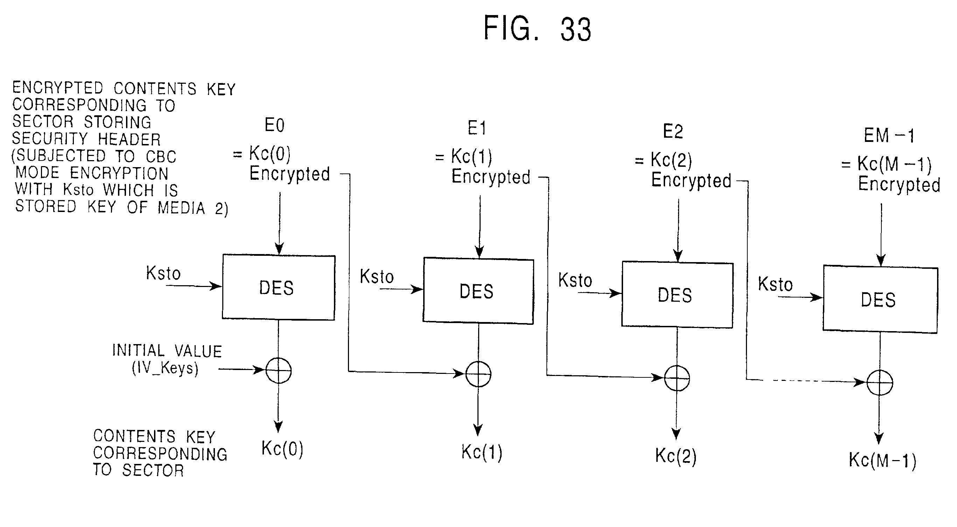

Next, the key decryption processing configuration in the CBC mode is shown in Fig. 33. This decryption processing is executed in the encryption processing unit 236 (see Fig. 2) of the media 2. First, DES decryption processing applying the stored key Ksto stored in the internal memory 235 of the media 2 is performed on Kc(0) Encrypted, and the exclusive-OR of the results thereof with the initial value IV_keys stored in the internal memory 235 outputs the sector-corresponding contents key Kc(0) corresponding to the sector (0). Further, DES decryption processing applying the stored key Ksto is performed on Kc(1) Encrypted, and the exclusive-OR of the results thereof with the contents key Kc(0) Encrypted outputs the sector-corresponding contents key Kc(1) corresponding to the sector (1). These processes are subsequently repeated, thereby obtaining the contents key. Now, while the drawing shows an example of only the contents key being the output data, the same processing can be applied for the contents integrity check value generating key (Kicv_Encrypted), and a contents integrity check value generating key (Kicv) can be generated from the encrypted contents integrity check value generating key (Kicv_Encrypted).

In many cases, encryption and decryption processing of the above-described sector-corresponding contents key Kc(xx) or the contents integrity check value generating key (Kicv) is executed based on commands from the device mounting the media 2. In this case, the above-described mutual authentication is executed between the device and media 2, with various processing such as reproducing, storing, etc., of contents being executed under the condition that the mutual authentication processing has been established, and the above-described contents key encrypting and decrypting processing is executed as one of the series of contents processins. In the event of transferring a decrypted key (e.g., contents key Kc(xx)) between the device and media 2, this is encrypted with a session key Kses generated at the time of performing mutual authentication. The security of the encryption and decryption processing using this session key Kses can also be heightened by applying the CBC mode.

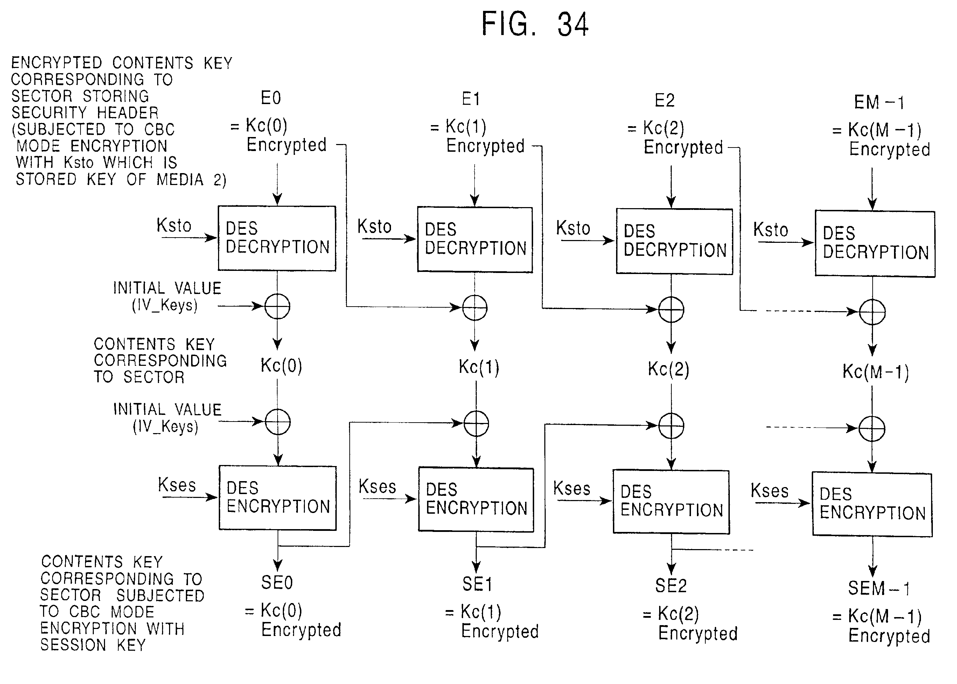

Fig. 34 illustrates the processing configuration for decrypting the key stored in the security header in the DES-CBC mode, and further encrypting the decrypted key data in the DES-CBC mode applying the session key Kses, in the media 2. The upper part of Fig. 34 is the same configuration as that of Fig. 33, wherein the encrypted contents keys extracted from the security header are sequentially input to the DES decrypting unit where decrypting processing is performed applying the stored key Ksto of the media 2, the exclusive-OR is taken between the output results and an initial value or the previous data in the input data string, thereby obtaining a contents key as output results.

Encryption processing is further executed with regard to the output results, in the DES-CBC mode applying the session key Kses generated at the time of mutual authentication with the device. The SE0 through SEM-1: Kc(0) Encrypted through Kc(M-1) Encrypted thus obtained are transmitted to the device. At the device side, decryption processing in the DES-CBC mode in the same manner as with Fig. 33, applying the session key Kses generated at the time of mutual authentication with the media 2, is executed with regard to the received Kc(0) Encrypted through Kc(M-1) Encrypted, thereby enabling the contents key K(c) to be obtained. Now, while the figure illustrates an example wherein only the contents key is the processed data, the contents integrity check value generating key (Kicv_Encrypted) can be taken as processed data in the same way.

### [Encrypted data read-out process]

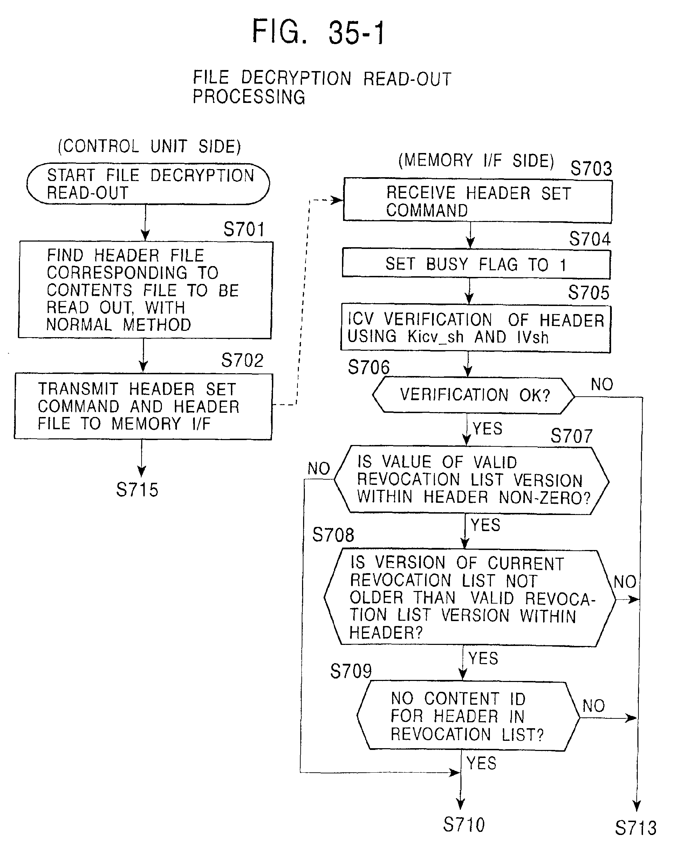

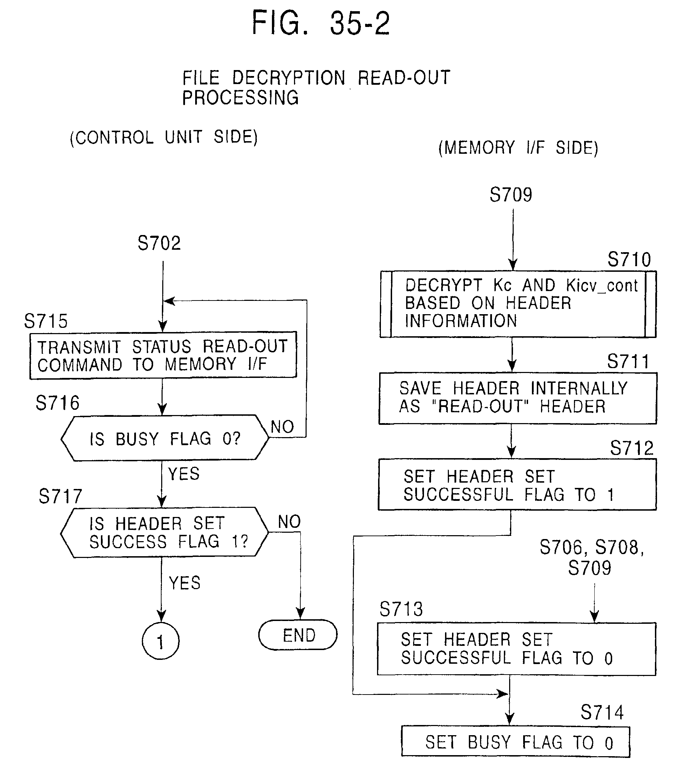

The details of the processing for reading out encrypted data from the media will be described with reference to the flowcharts in Figs 35 on. Now, the data encryption forms include a form wherein encryption is made with different keys for each sector as described above, and the formed wherein the entire contents are encrypted with a single encryption key, these being judged based on the header information. In the flowchart in Fig. 35, the left side is the processing at the control unit of the device, and the right side is that at the memory interface of the device.

First, the control unit reads out the header file of the contents where the object of reading out (S701). This processing is executed as processing following the file read-out processing flow shown in Fig. 25 described above. Next, the header set command and the read out header file are transmitted to the memory interface (S702).

Upon receiving the header set command (S703), the memory interface sets the busy flag to 1 (busy) (S704), and verifies the integrity check value (ICV) of the header (S705). The ICV check of the header is executed by processing wherein the security header verification value generating key Kicv_sh and the initial value IVsh are applied to input the header configuration data in the ICV generating process described with reference to Fig. 14 earlier to generate an ICV', and performing collation between the generated ICV' and the ICV stored in the header beforehand.

Upon a judgment being made by the verification that there is no tampering with the header (S706), a check is made regarding whether the valid revocation list version in the header is not 0 (S707). For example, in the event of storing contents in memory that have been generated and stored in the own device, processing wherein the revocation list version is set to 0 and the revocation list is not referenced at the time of reproducing processing or the like.

In the event that the revocation list version is 0, there is no need to make reference to the revocation list, so the flow proceeds to step S710. In the event that the version is not 0, a check is made regarding whether the revocation list currently set is not older than the header version (S708), and in the event that it is older, the flow proceeds to S713, where the header set success flag is set to 0 (fail), and processing is ended. In the event that the set revocation list is older than the header version, the flow proceeds to step S709, reference is made to the revocation list, and judgment is made whether not there is the contents ID which is the object of reading out. In the event that it is there, the header set success flag is set to 0 (fail) in step S713 as processing for forbidding reading out, and the processing ends.

In the event that the contents ID which is the object of being read out is not recorded in the revocation list, the flow proceeds to step S710, for the contents key Kc and the contents check value generating key Kicv_cont encrypted based on the header information, to be decrypted. Now, as described in that activation flow in Fig. 16 earlier, the revocation list is set up in the memory interface at the time of activation, and following set up, is capable of continuous usage at the memory interface at the time of mounting media or reproducing contents.

First, as described with reference to Fig. 7 and other figures, multiple contents keys Kc(0) through Kc(M-1) are encrypted and stored in the security header, as encryption keys to be applied to each sector as described above. Also, the contents check value generating key Kicv_cont for generating the integrity check value (ICV) of the contents is also encrypted and stored.

Prior to decrypting of the contents, there is the need to perform processing for decrypting of the contents check value generating key Kicv_cont and executing the tampering check of the contents, and also, the processing for decrypting the contents keys Kc(0) through Kc(M-1) is necessary.

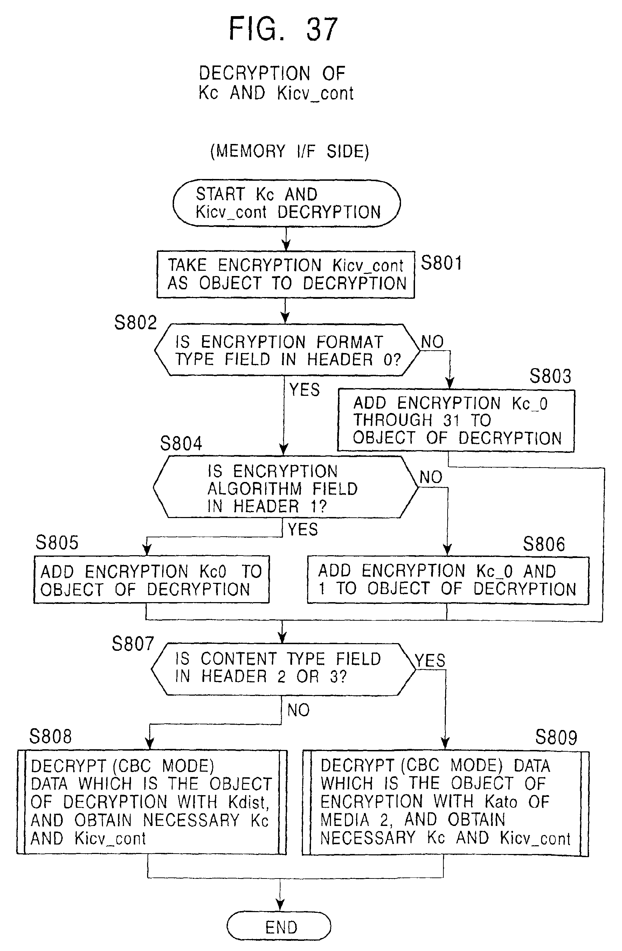

Fig. 37 shows the decryption processing flow for the encrypted contents keys Kc and the contents check value generating key Kicv_cont. Description will proceed following the steps in Fig. 37. The processing in Fig. 37 is processing at the memory interface of the device. This is executed at the encryption processing unit 320 of Fig. 4.

First, the encrypted contents check value generating key Kicv_cont is selected as the object of decryption (S801), and next, judgement is made regarding whether or not the Encryption Format Type field in the header is set to 0 (S802). In the event that the encryption format is 0, the data configuration is of an encryption form wherein the entire contents are one regardless of sectors, and in the event that the setting of the Encryption Format Type field is 1, this is a method using encryption keys for increments of sectors, described above with reference to Fig. 27 and others. In the event of the method using encryption keys for increments of sectors, the flow proceeds to step S803, and sets the encryption contents keys (Kc_Encrypted0 through 31) set for each sector as the object of decryption.

In the event that judgement is made in step S802 that the encryption format is 0, the Encryption Algorithm field in the header is further checked in step S804, and judgment is made regarding whether this is 1 (Triple DES) or 0 (single DES). In the event that this is single DES, only one encryption contents key (Kc_Encrypted0) is added to the object of decryption in step S805, and in the event that this is Triple DES, multiple encryption contents keys (Kc_Encrypted0, 1) are added to the object of decryption in step S806.

Next, in step S807, the settings of the Content Type field in the header are checked, and in the event that the settings are not 2 or 3 (stored contents of the media 2), a distribution key Kdist stored in the memory unit 321 (see Fig. 4) is used to decrypt the data that is the object of decryption, i.e., the encryption contents check value generating key Kicv_cont, and one or more contents keys, in step S808.

In the event that the settings are 2 or 3 (stored contents of the media 2), a stored key Ksto (CBC mode) of the media 2 is used to decrypt the data that is the object of decryption, i.e., the encryption contents check value generating key Kicv_cont, and one or more contents keys, in step S809. The details of this decryption processing is already described with reference to Fig. 32, Fig. 33, and Fig. 34.

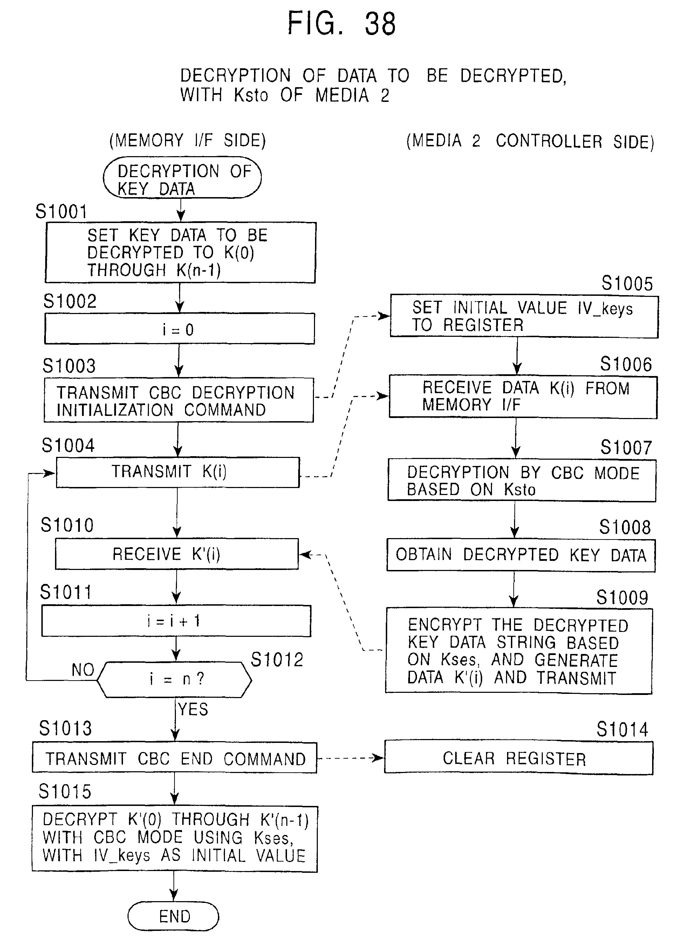

The decryption processing by the stored key of the media 2 to decrypt the encryption contents check value generating key Kicv_cont and one or more contents keys Kc will be described with reference to the flowchart in Fig. 38. In the flowchart in Fig. 38, the left side indicates the processing of the memory interface of the device, and the right side, that at the controller of the media 2 (see Fig. 2).

First, the memory interface sets the data which is the object of decryption K(0) through K(n-1) (the encryption contents check value generating key Kicv_cont and one or more contents keys) (S1001), transmits a CBC decryption initialization command to the media 2 controller (S1003), and the media 2 controller sets IVkeys to the register (S1005). Subsequently, the memory interface sequentially transmits the keys (S1004), and the media 2 controller receives the data that is the object of decryption K(i) (S1005).

Next, the media 2 controller executes decryption processing by the CBC mode, using this stored key Ksto of the media 2 with regard to the received data that is the object of decryption K(i) (51007), and the decrypted key data (e.g., contents keys corresponding to multiple sectors) is obtained (S1008). Next, the media 2 controller executes encryption processing in the CBC mode with the session key generated at the time of mutual authentication with the device, with regard to the decrypted key data stream, generates a data string K'(i), and transmits the results to the device (S1009). The processing in steps S1007 through S1009 is executed based on the processing in the DES-CBC mode described earlier with reference to Fig. 34.

The memory interface of the device sequentially receives K'(i), and following confirmation that all data has been received, transmits a CBC end command to the media 2 controller. Upon receiving the CBC end command, the media 2 controller clears the register (S1014).

The memory interface of the device decrypts K'(i) received from the media 2 in the CBC mode applying the session key Kses generated at the time of mutual authentication with media 2, using the initial value IV_keys stored in the memory unit 321 (see Fig. 4) (S1010 through S1013 and S1015). This decryption processing is processing with the same configuration of that described with reference to Fig. 33 earlier.

The device can decrypt the contents keys Kc and the contents check value generating key Kicv_cont encrypted and stored in the header with the above processing, to obtain the keys of each.

Returning to Fig. 35, the rest of the read-out processing of the encrypted files will be described. Upon ending S710 which is the above-described key decryption processing step, the flow proceeds to step S711. In step S711, the memory interface of the device sets the header internally as a "read-out header", sets the header set success flag to 1 (success), and sets the busy flag to 0 (ready) (S714). At the time of reading out contents, processing based on the information of the set header is executed.

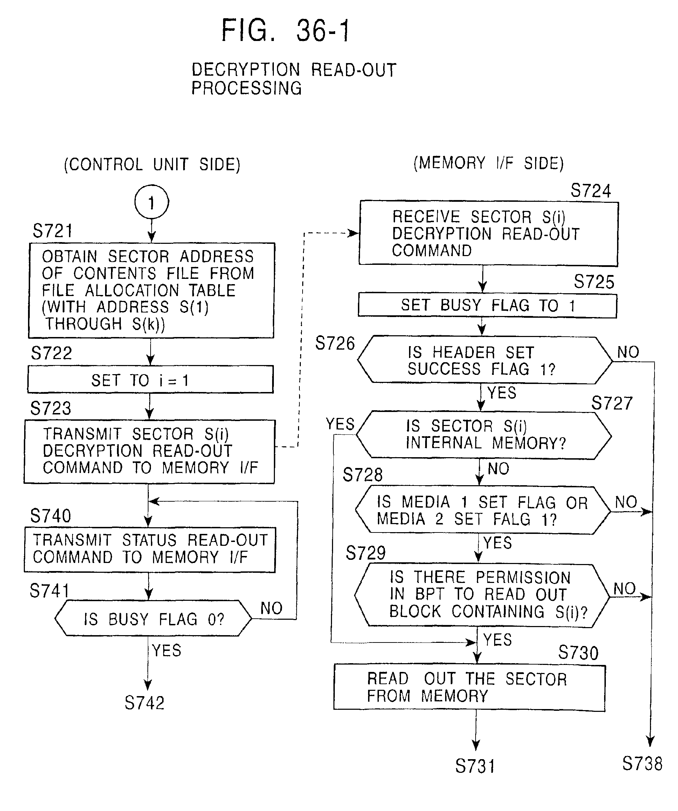

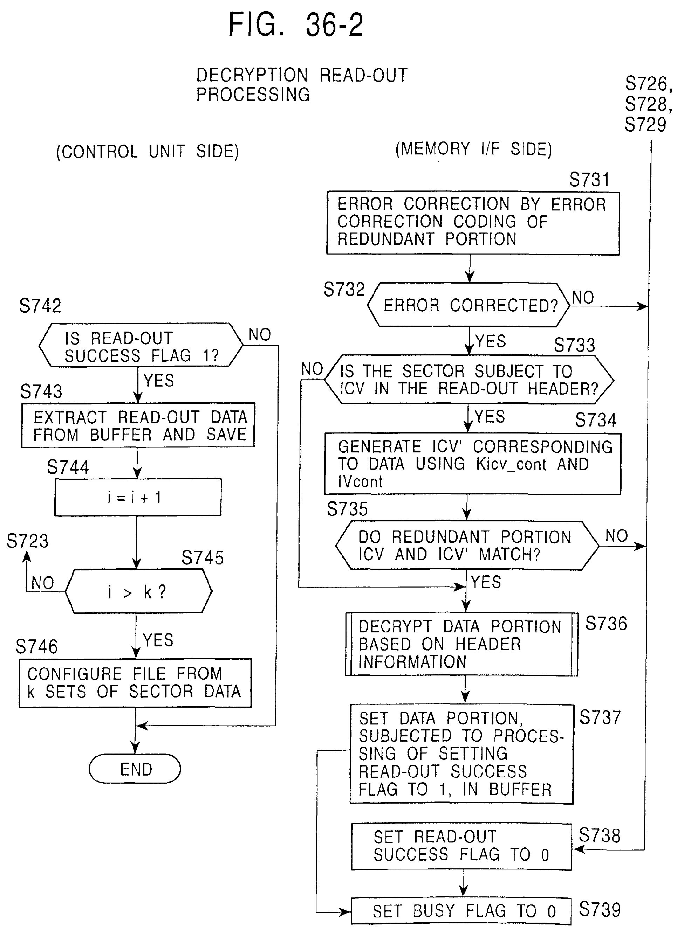

On the other hand, the control unit side transmits a status read-out command to the memory interface in step S715, and proceeds to the next processing (Fig. 36) under the condition that the busy flag is 0 (ready) (S716), and that the header set success flag is 1 (success) (S717).

In step S721, in Fig. 36, the control unit obtains the sector addresses (S(1) through S(k)) of the contents file which is the object of reading out from the file allocation table, and it sequentially transmits sector S(i) read-out commands to the memory interface.

Upon receiving the sector S(i) read-out commands (S724), the memory interface sets the busy flag to 1 (busy) (S725), and moves to the next step under the condition that the headers success flag is 1 (success) (S726). In the event that the header success flag is not 1 (success), the flow proceeds to step S738, and the read-out success flag is set to 0 (fail) and the processing ends.

In the event that the header success flag is 1 (success), judgment is made whether the received sector S(i) is internal memory or external memory (S727), and in the event that this is external memory, the judgment is made whether the set flag of the media 1 or media 2 is 1 (indicating that the media is set to valid) (S728), and in the event that the set flag is 1, further makes reference to the block permission table (BPT), and judgment is made whether or not the BPT has this sector S(i) which is the object of reading out to set as a block regarding which reading out is permitted (S729). In the event that there is the read-out permission block sitting in the BPT, the data at this sector is read out from the external memory (S730).

Now, in the event that the data to be read out is data in the internal memory which is not managed by the BPT, the steps S728 and S729 are skipped. In the event that the judgment made in steps S728 and S729 is No, i.e., in the event that the set flag of the media storing this sector S(i) is not 1, or in the event that a read-out permission is not set in the BPT for the sector S(i), the flow proceeds to step S738, and the read-out success flag is set to 0, as a read-out error.

In the event that judgement is made in the judgment blocking in steps S726 through S729 that reading out of the object sector S(i) is executable, this sector is read out from the memory, error correction processing based on the error correction code in a redundant portion set corresponding to the sector is executed (S731), and confirmation is made that that error correction has succeeded (S732). Next, reference is made to the ICV flag of the header (see Fig. 7), and judgment is made regarding whether or not the sector to be read out is the object of processing by integrity check value (ICV). As described with reference to Fig. 31 earlier, each sector stores an ICV in the redundant portion thereof for tampering checking, so tampering checking in increments of sectors can be performed.

In the event that this is the object of tampering checking by ICV, in step S734 the contents check value generating key Kicv_cont obtained by the decryption processing in step S710 and the initial value IVcont are applied to input data which is the object of tampering checking (sector data) and execute the ICV generation processing described with reference to Fig. 14, ICV' is obtained, collation is performed with the ICV stored in the redundant portion of the sector, and in the event that these match, a no-tampering judgement is passed.

In the event that a no-tampering judgement is passed by the ICV check, the flow proceeds to step S737, processing for decrypting the data based on the header information is executed and the read-out success flag is set to 1 (success), and the decrypted data is stored in the buffer.

Also in steps S740 through S746, the control unit reads out the status of the memory interface, and in the state that the busy flag is 0, the addresses are sequentially incremented and processing of extracting the data sequentially from the buffer and saving is repeatedly executed under the condition that the read-out success flag is 1, and following saving of all sectors to be read out, the file is configured from all of the read out sector data, and the processing ends.

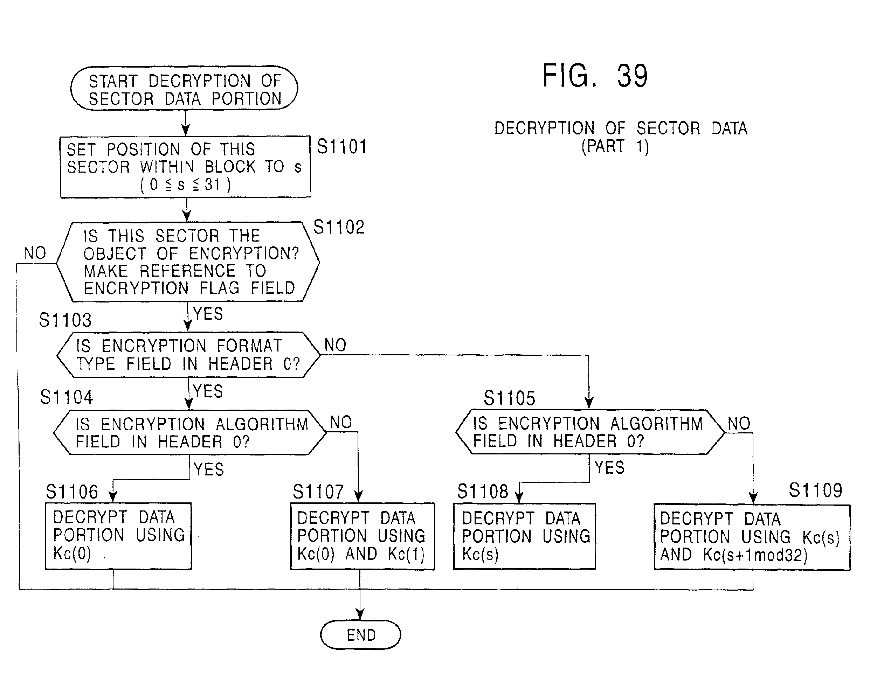

Details of the data portion decrypting processing in step S736 in Fig. 36 will be described with reference to Fig. 39. This decryption processing is executed at the encryption processing unit 320 (see Fig. 4) of the memory interface of the device.

First, the sector position for storing the data which is the object of decrypting is set to s (wherein 0 ≤ s ≤ 31 (in the event that the number of sectors is 32)). Next, whether or not the sector is the object of encryption is checked (S1102). This check is judged based on the Encryption Flag in the security header (see Fig. 7). In the event that this is not the object of encryption, decryption processing is not executed, and the processing ends. In the event that this is the object of encryption, the encryption format type is checked (S1103). This consists of checking the settings of the Encryption Format Type within the security header, and judgment is made regarding whether the encryption format is one for all the contents as described in Fig. 8, or whether the encryption processing uses different keys for each sector.

In the event that the setting value of the Encryption Format Type is 0, this is a case wherein the encryption format is one for all the contents. In this case, the Encryption Algorithm is judged in step S1104. Either single DES or triple DES (see Fig. 28) is set for the encryption algorithm, and in the event that this is judged to be single DES, decryption processing of the encrypted contents is executed using one contents key Kc(0) (S1106). In the event that this is judged to be at Triple DES, decryption processing of the encrypted contents is executed applying two contents keys Kc(0) and Kc(1) (S1107).

On the other hand, in the event that the setting value of Encryption Format Type is 1 in step S1103, this is a case wherein the encryption processing uses different keys for each sector. In this case, the Encryption Algorithm is judged in step S1105. Either single DES or triple DES (see Fig. 28) is set for the encryption algorithm, and in the event that this is judged to be single DES, decryption processing of the encrypted contents is executed applying a contents key Kc(s) set corresponding to each sector (S1108). In the event that this is judged to be at Triple DES, decryption processing of the encrypted contents of each sector is executed applying two contents keys Kc(s) and Kc(s+1mod32) (S1109).

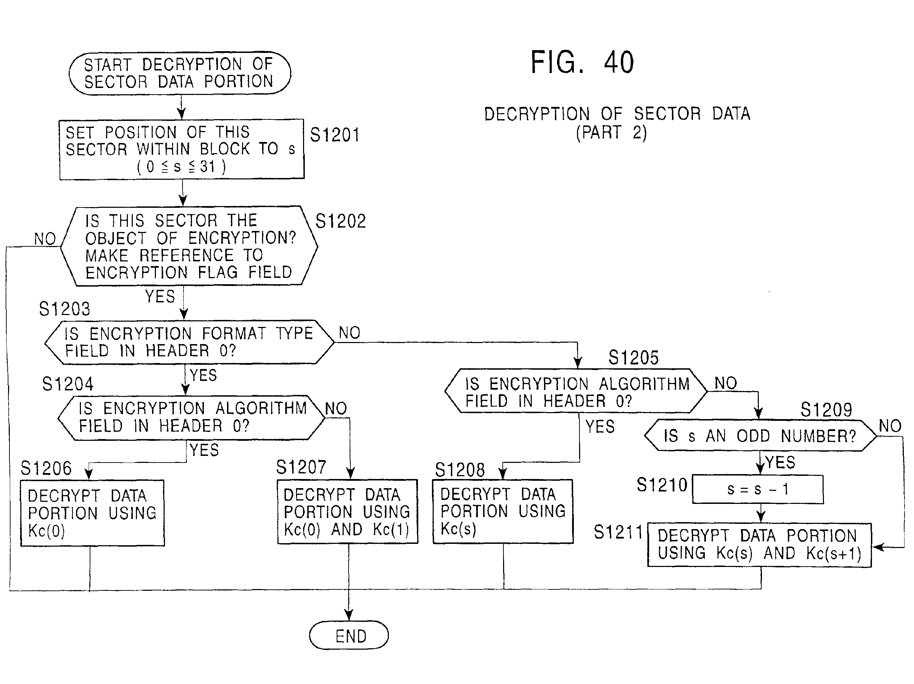

A different processing form of decryption processing of the sector data is shown in Fig. 40. In Fig. 40, steps S1201 through S1208 are the same as the steps S1101 through S1108 in Fig. 39. The steps S1209 through S1211 differ from those in Fig. 39.

In step S1205, in the event that the encryption algorithm is judged to be a triple DES, the sector No. (s) is judged in step S1209, and in the event that s is an odd number, updating of s = s - 1 is executed (S1210), and in encryption processing by triple DES is executed with the keys to be applied to the sectors as Kc(s) and Kc(s+1) (S1211).

Thus, reproduction processing is accompanied by a decryption processing of data that has been encrypted and stored is executed by the processes described with reference to Fig. 35 through Fig. 40.

### [Data encryption write-in processing]

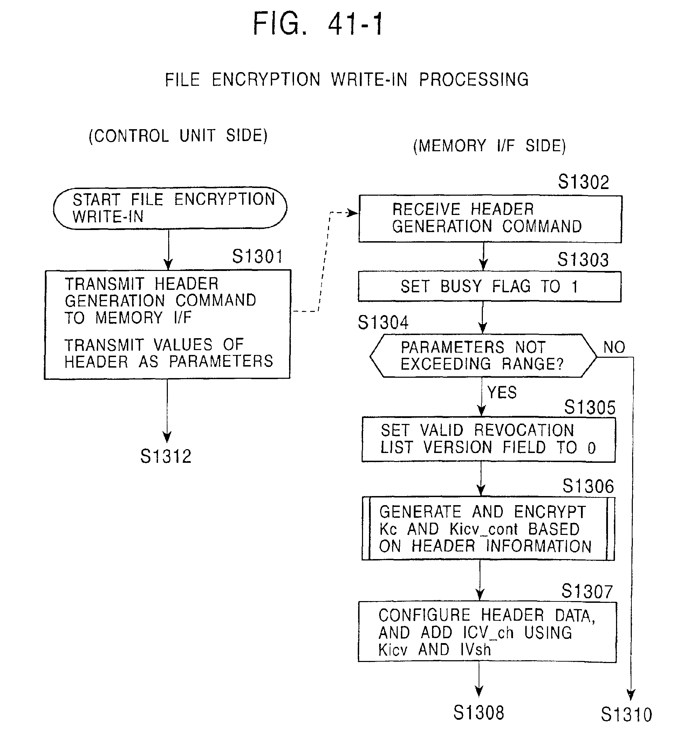

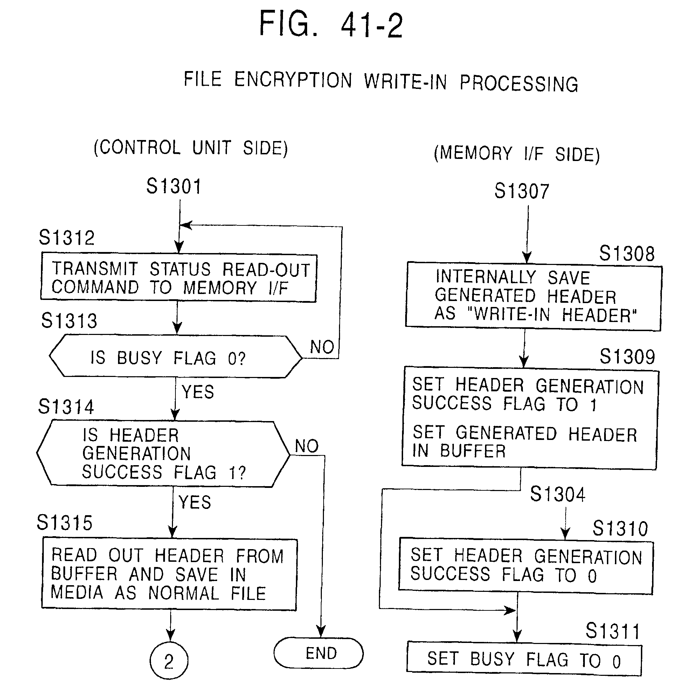

Next, the details of the encryption write-in processing process of data to the media will be described using the flowcharts from Fig. 41 on. Note that, as described above, there is the form of data encryption wherein encryption is performed with a different key for each sector, and the form wherein all contents are encrypted with a single encryption key. These are set in the header information. In the flowchart in Fig. 41, the left side is the processing of the control unit of the device, and the right side is that at the memory interface of the device.

First, the control unit transmits a header generation command corresponding to the stored contents which are the object of reading out, and parameters serving as header information, to the memory interface (S1301).

Upon receiving the header generation command (S1302), the memory interface sets the busy flag to 1 (busy) (S1303), and judges whether not the received parameters are within a tolerance value (S1304). The memory interface has a parameter range that is settable in the header beforehand, so comparison is made with the received parameters, and in the event that received parameters exceed the settable range, in step S1310 sets the header generation success flag to 0 (fail) and ends the processing. In the event that the received parameters are within the tolerance value, the valid revocation list version of the header is set to 0 (S1305), enabling data processing with no reference to the revocation list. The reason that the valid revocation list version is set to 0, is to perform settings enabling data processing (reproduction) with no reference to the revocation list, under the presumption that contents subjected to storage processing with own device are guaranteed to be valid contents.

Also, in the event that the write-in contents are, for example, contents received externally via communication means, and in the event that an identifier is added to the received contents and the revocation list version is stored in the header and collation with a revocation list within the device is possible, identifier collation processing using the revocation list may be performed in the same manner as the steps S707 through S709 executed in the final decryption read-out processing described earlier with reference to Fig. 35, instead of the above-described processing.

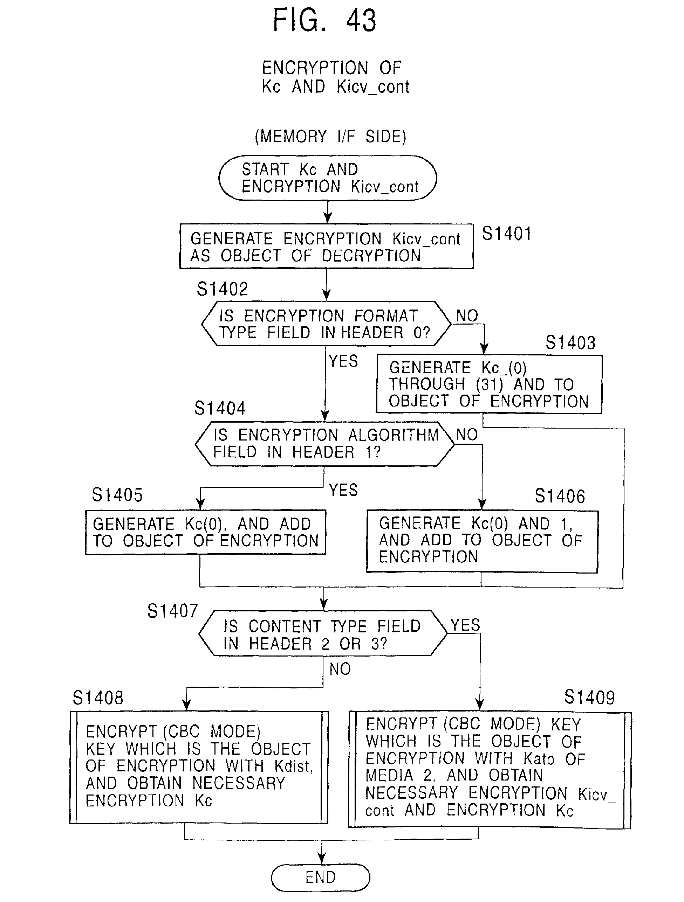

Next, in step S1306, the contents key Kc and the contents integrity check value (ICV) generating key Kicv_cont are generated and encrypted. Fig. 43 illustrate the details of the generation and encryption processing of the contents key Kc and the contents integrity check value (ICV) generating key Kicv_cont in step S1306. The processing in Fig. 43 is executed at the memory interface encryption processing unit 320 (see Fig. 4) of the device. The flowchart in Fig. 43 will be described.

First, an encrypted contents check value generating key Kicv_cont is generated based on a random number, for example, made to be an object of encryption (S1401), and next, judgement is made regarding whether or not the Encryption Format Type field is set to 0 in the header (S1402). In the event that the encryption format is 0, this is a configuration wherein the entire contents are encrypted with one form regardless of sectors, and in the event that the settings of the Encryption Format Type field are 1, this is a method using encryption keys in increments of sectors as described earlier with reference to Fig. 27 and other figures. In the event of using encryption keys in increments of sectors, the flow proceeds to step S1403, and contents keys set for each sector (Kc(0) through Kc(31) (in the event that the number of sectors is 21)) are generated and made to be the object of encryption.

In the event that judgement is made in step S1404 that the encryption format is 0, the Encryption Algorithm field in the header is further checked in step S1404, and judgment is made regarding whether this is 1 (Triple DES) or 0 (single DES). In the event that this is single DES, one encryption contents key (Kc(0)) is generated and added to the object of encryption in step S1405, and in the event that this is Triple DES, multiple encryption contents keys (Kc(0), Kc(1)) are generated and added to the object of encryption in step S1406.

Next, in step S1407, the settings of the Content Type field in the header is checked, and in the event that the settings are not 2 or 3 (media 2 stored contents), in step S1408, the distribution key Kdist stored in the memory unit 321 (see Fig. 4), is used to encrypt the data, i.e., the contents check value generating key Kicv_cont and one or more contents keys.

In the event that the settings are 2 or 3 (media 2 stored contents), the data, i.e., the contents check value generating key Kicv_cont and one or more contents keys are encrypted with the stored key Ksto (CBC mode) of the media 2 in step S1409. The details of this encryption processing are as described with reference to Fig. 32, Figs 33, and Fig. 34.

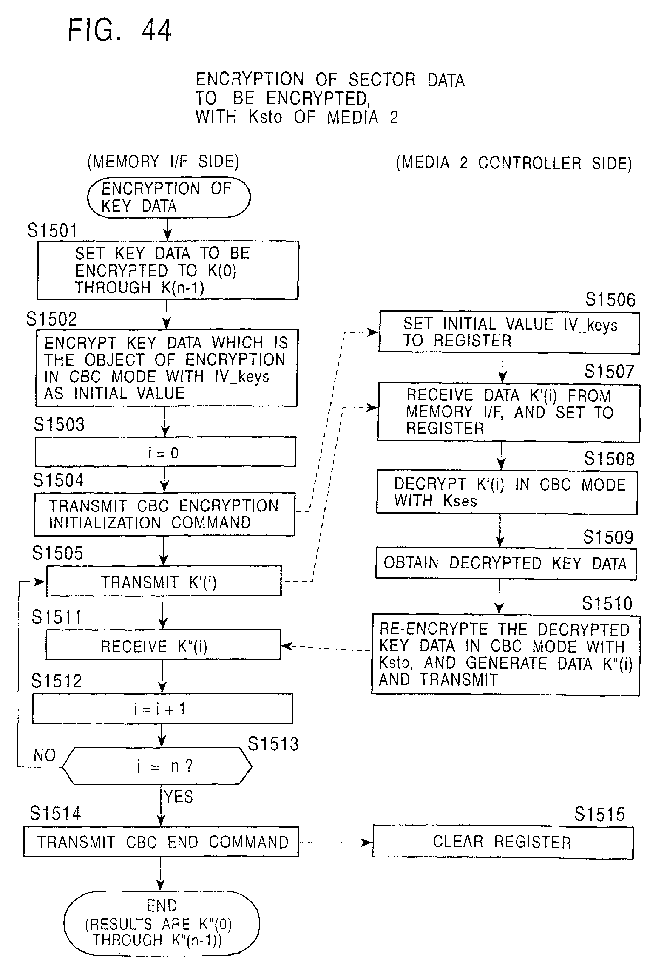

The encryption processing of the contents check value generating key Kicv_cont and one or more contents keys by the stored key of the media 2 in step S1409 will be described with reference to the flowchart shown in Fig. 44. In the flowchart in Fig. 44, the left side indicates the processing of the memory interface of the device, and the right side, that at the controller of the media 2 (see Fig. 2).

First, the memory interface at the device side sets the data to be encrypted K(0) through K(n-1) (the contents check value generating key Kicv_cont and one or more contents keys) (S1501), applies the session key generated at the time with mutual authentication with the media 2, executes encryption of the data to be encrypted K(0) through K(n-1) in the DES-CBC mode using the initial value IV_keys stored in the memory unit 321, and generates data K'(0) through K'(n-1) (S1502). This encryption processing is executed by processing configuration the same as that of Fig. 32 described earlier. Next, a memory interface transmits a CBC encryption initialization command to the media 2 controller. The media 2 sets the initial value IV_keys stored within the media 2, in the register (S1506). Subsequently, the memory interface sequentially transmits the keys (S1505).

The media 2 controller receives the data K'(i) (S1507), executes decryption processing on the received data K'(i) in the CBC mode with a session key generated with mutual authentication with the device (S1508), and obtains the decrypted key data (e.g., contents keys corresponding to multiple sectors) (S1509). Next, the media 2 controller executes encryption processing of the decrypted key data string in the CBC mode using the stored key Ksto of the media 2, generates a data string K"(i), and transmits the results to the device (S1510). The processing in steps S1507 through S1510 is executed based on the processing in the DES-CBC mode in Fig. 34 described earlier.

The memory interface of the device sequentially receives K"(i), and following confirmation that all data has been received, transmits the CBC end command to the media 2 controller (S1511 through S1514). Upon reception of the CBC end command, the media 2 controller clears the register (S1515).

The memory interface of the device takes the K"(0) through K"(n-1) received from the media 2 as the encryption key data for header storage. Due to the above processing, the device can obtain the encrypted contents key Kc and contents check value generating key Kicv_cont to be stored in the header.

Returning to Fig. 41, description of the file encryption write-in processing will be continued. Upon generation and encryption of the above-described header storage keys ending in step S1306, the memory interface generates an integrity check value ICV based on the generated header data (S1307). ICV_sh which is the check value of the security header is generated based on the ICV generating configuration described earlier with reference to Fig. 14, using the initial value IVsh stored in the memory unit 321 (see Fig. 4), and the security header integrity check value generating key Kicv_sh. Next, in step S1308, the generated header is saved internally as a write-in header, and-the processing ends in step S1309 with the header generating its success flag at 1 (success) and the busy flag at 0 (ready).

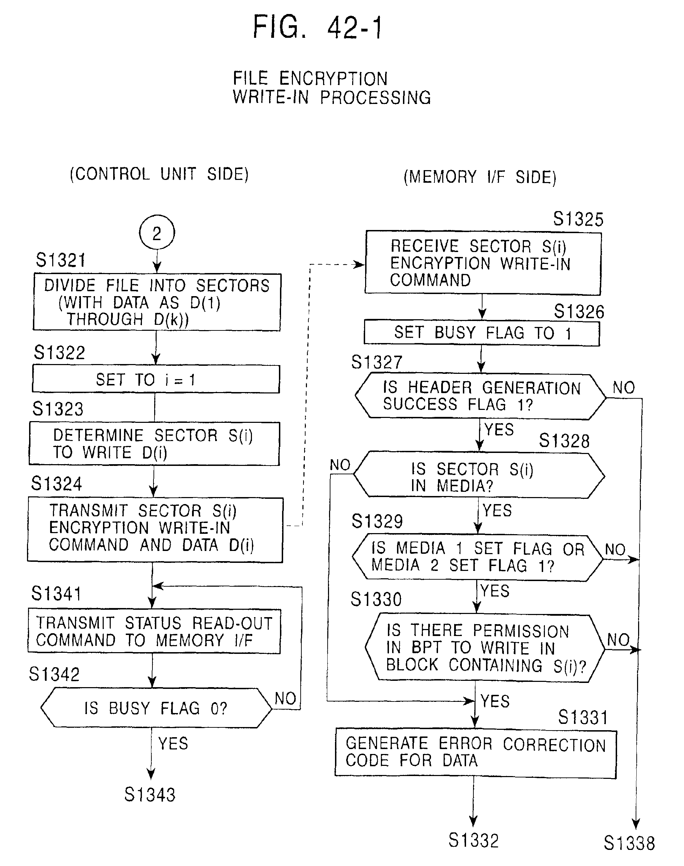

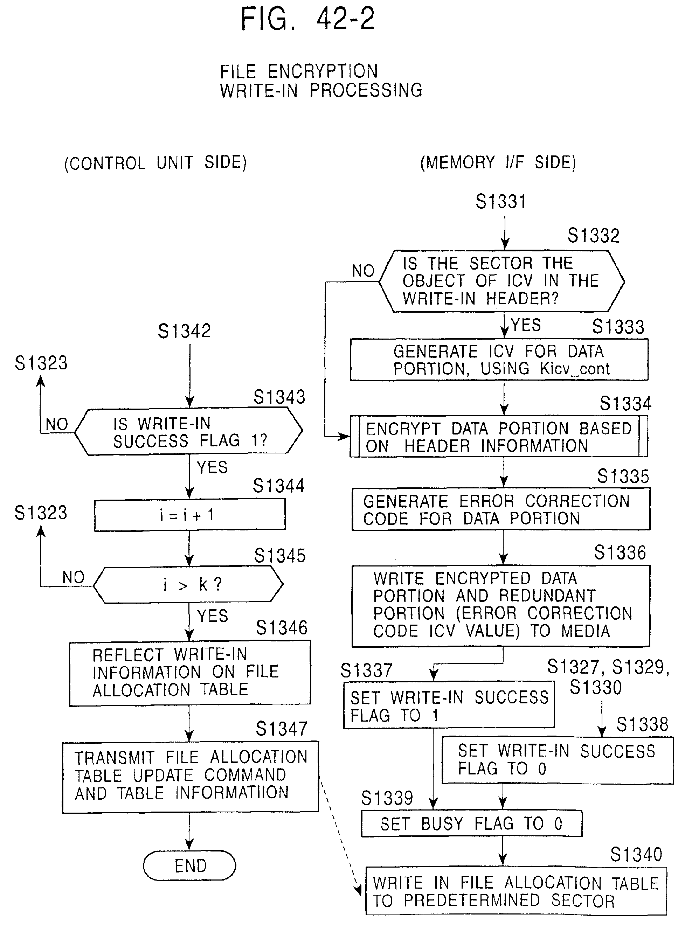

On the other hand, the control unit side transmits the status read-out command to the memory interface in step S1312, reads the header out of the buffer under the conditions that the busy flag is 0 (ready) (S1313) and the header generating success flag is 1 (success) (S1314), and saves to the media as a normal file (S1350), following which the flow proceeds to the next processing (Fig. 42).

In step S1321 in Fig. 42, the control unit divides the contents file to be written in, into sectors. The divided data will be denoted with D(1) through D(k). The control unit sets writing sectors S(i) for the data D(i) next, and sequentially transmits an encryption write-in command for the sector S(i) and the data D(i) to the memory interface (S1312 through S1324). Upon receiving the sector S(i) encryption write-in command (S1325), the memory interface sets the busy flag to 1 (busy) (S1326), and proceeds to the next step under the conditions that the header generating success flag is 1 (success) (S1327).

Next, the memory interface judges whether the received sector S(i) is internal memory or external memory (S1328), and in the event that this is external memory, judgement is made regarding whether the set flag for the media 1 or media 2 is 1 (indicating that the media is set to valid) (S1329), and in the event that the set flag is 1, further, reference is made to the block permission table (BPT), in judgment is made regarding whether or not the BPT has set the sector S(i) which is the object of writing as a write-in permitted block (S1330). In the event that there are settings in the BPT as a write-in permitted block, and error correction code set corresponding to the sector, is generated (S1331).

Next, judgment is made regarding whether or not the write-in sector is an ICV setting sector, based on header information (ICV flag) (S1332), and in the event that this is the object of ICV, the ICV for the sector data is generated based on the contents ICV generating key Kicv_cont (S1333).

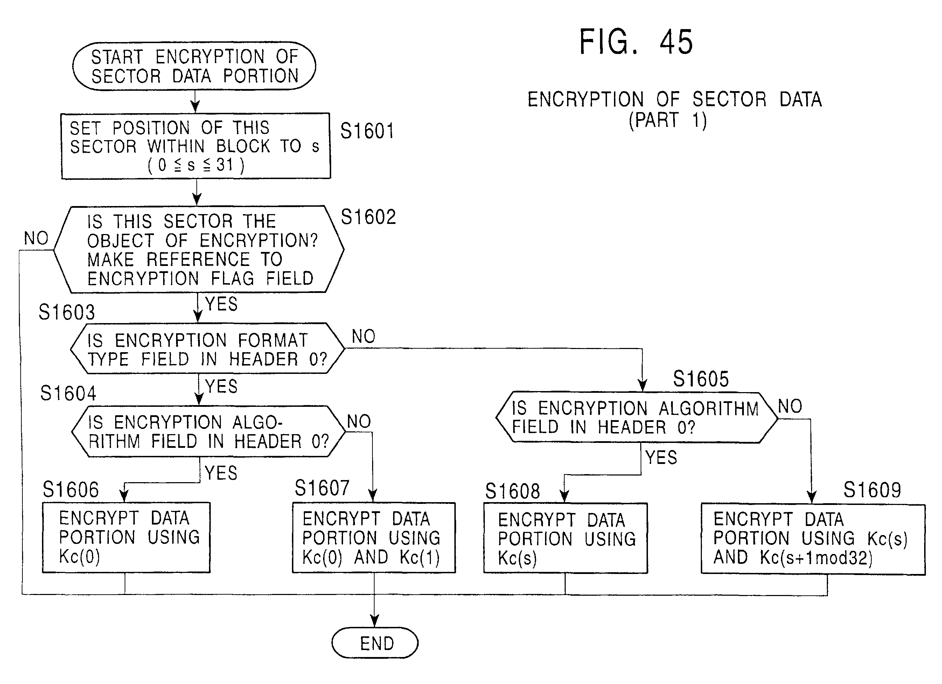

Next, the memory interface executes encryption of data based on the header information (S1334). The details of this data encryption processing in step S1334 will be described with reference to Fig. 45. This encryption processing is executed at the encryption processing unit 320 (see Fig. 4) of the memory interface of the device.

First, the sector position for storing the data which is the object of encrypting is set to s (wherein 0 ≤ s ≤ 31 (in the event that the number of sectors is 32)) (S1601). Next, a check is made regarding whether the sector is the object of encryption (S1602). This check is judged based on the Encryption Flag in the security header (see Fig. 7). In the event that this is not the object of encryption, encryption processing is not executed, and the processing ends. In the event that this is the object of encryption, the encryption format type is checked (S1603). This consists of checking the settings of the Encryption Format Type within the security header, and judgment is made regarding whether the encryption format is one for all the contents as described in Fig. 8, or whether the encryption processing uses different keys for each sector.

In the event that the setting value of the Encryption Format Type is 0, this is a case wherein the encryption format is one for all the contents. In this case, the Encryption Algorithm is judged in step S1604. Either single DES or triple DES (see Fig. 28) is set for the encryption algorithm, and in the event that this is judged to be single DES, encryption processing of the encrypted contents is executed using one contents key Kc(0) (S1606). In the event that this is judged to be Triple DES, encryption processing of the encrypted contents is executed applying two contents keys Kc(0) and Kc(1) (S1607).

On the other hand, in the event that the setting value of Encryption Format Type is 1 in step S1603, this is a case wherein the encryption processing uses different keys for each sector. In this case, the Encryption Algorithm is judged in step S1605. Either single DES or triple DES (see Fig. 28) is set for the encryption algorithm, and in the event that this is judged to be single DES, encryption processing of the encrypted contents is executed applying a contents key Kc(s) set corresponding to each sector (S1608). In the event that this is judged to be Triple DES, encryption processing of the encrypted contents of each sector is executed applying two contents keys Kc(s) and Kc(s+1mod32) (S1609).

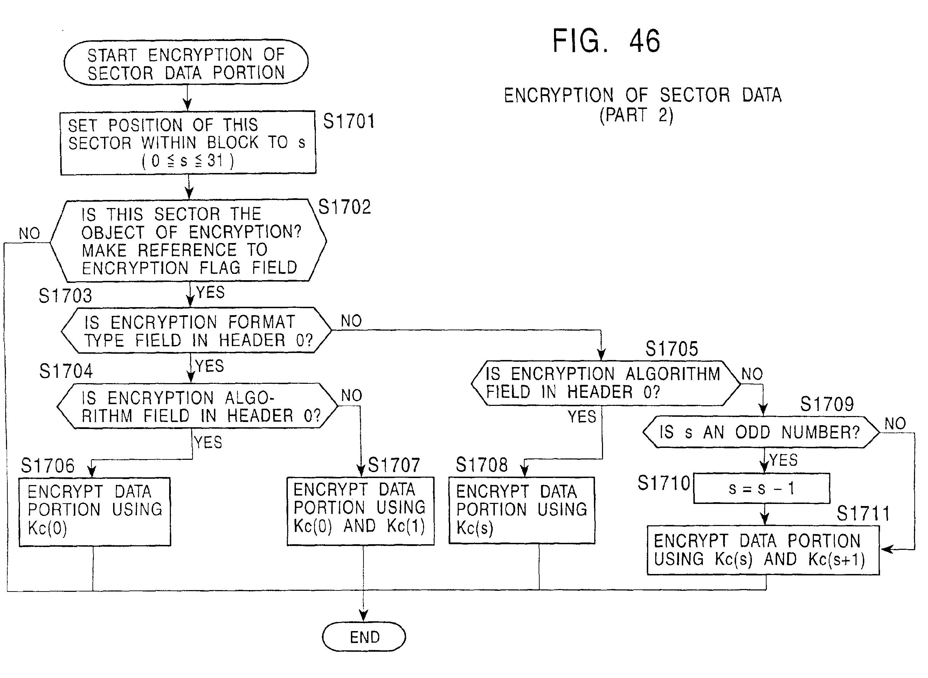

A different processing form of decryption processing of the sector data is shown in Fig. 46. In Fig. 46, steps S1701 through S1708 are the same as the steps S1601 through S1608 in Fig. 45. The steps S1709 through S1711 differ from those in Fig. 45.

In step S1705, in the event that the encryption algorithm is judged to be triple DES, the sector No. (s) is judged in step S1709, and in the event that s is an odd number, updating of s = s - 1 is executed (S1710), and in decryption processing by triple DES is executed with the keys to be applied to the sectors as Kc(s) and Kc(s+1) (S1711).

Returning to fig. 42, description of the file encryption write-in processing flow will be continued. Upon the encryption processing step (S1334) of the data portion ending by the above-described processing, an error correction code is generated for the data portion (S1335), and the redundant portion having the encrypted data D(i) and the integrity check value ICV corresponding to the sector data and the error correction code, is written to the media (S1336), the write-in success flag is set to 1 (success) (S1337), and the busy flag is set to 0 (ready) (S1339).

Now, in the event that the data to be written in is write-in processing to the internal memory which is not managed by the BPT, the steps S1329 and S1330 are skipped. In the event that the judgment made in steps 1329 and S1330 is No, i.e., in the event that the set flag of the media is not 1, or in the event that a write-in permission is not set in the BPT for the sector S(i), the flow proceeds to step S1338, and the write-in success flag is set to 0, as a write-in error.

Also, in steps S1341 through S1345, the status of the memory interface is read out by the control unit, and in the state that the busy flag is 0, the addresses are sequentially incremented and the write-in data is sequentially transmitted to the memory interface under the condition that the write-in success flag is 1. Following ending of all processing, updating processing of the file allocation table is executed (S1346), the updated file allocation table is transmitted to the memory interface along with an updating command (S1347), and the memory interface executes the processing of writing in the file allocation table according to the command (S1340).

Encryption of data and processing for storing to media, is executed by the processing described above with reference to Fig. 41 through Fig. 46.

### [Updating a revocation list]

Next, description will be made regarding the processing for updating a revocation list, as invalid information for unauthorized media and contents. As described above, the revocation list according to the present invention is configured of identifiers (IDs) of multiple types (e.g., media and contents). Multiple types of contents and media can be revoked with a single revocation list, by providing multiple types of IDs in a revocation list which is invalid information of contents and media, and collation thereof is performed as differing operations. Use of unauthorized media and reading out of unauthorized contents can be forbidden executing collation between the identifier (ID) of the media used or contents used, and IDs listed in the revocation list at the memory interface unit, at the time of inserting the media or reading out the contents.

As described earlier, a revocation list version is set in a revocation list, and the revocation list is updated in the event of adding new invalid information of unauthorized media or contents, or the like.

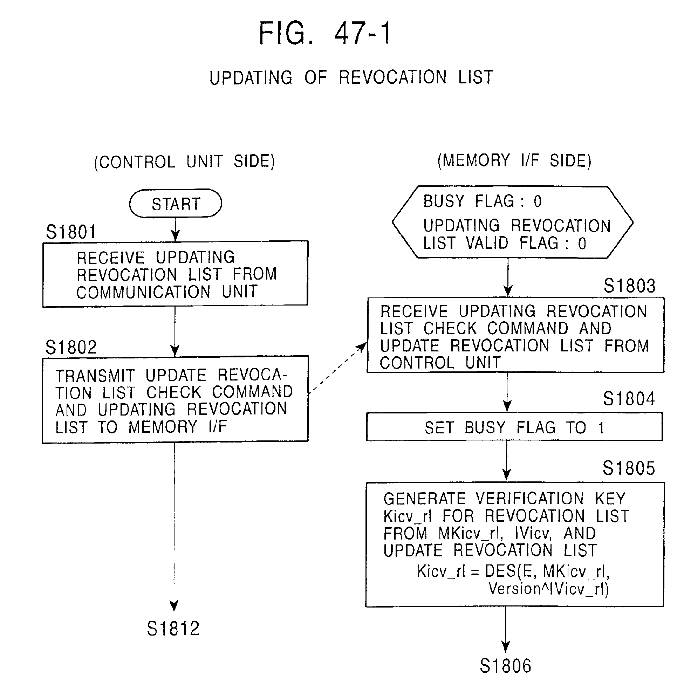

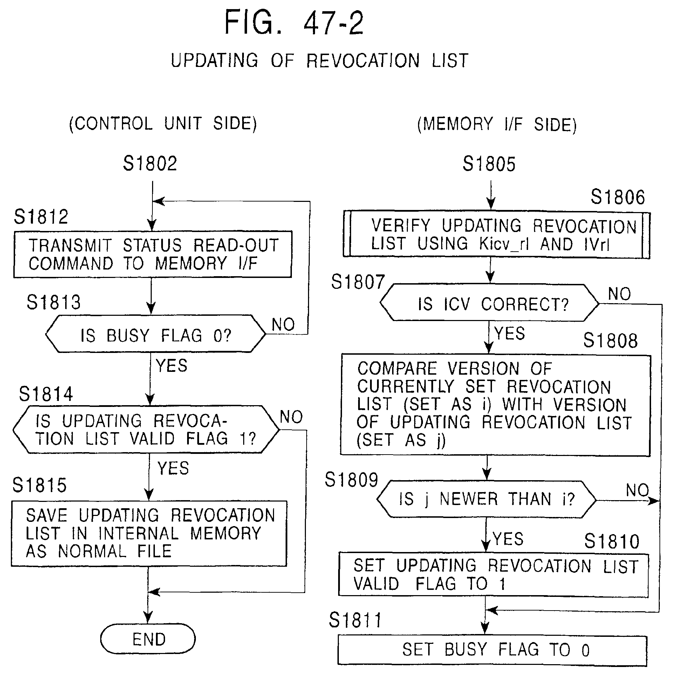

Fig. 47 illustrates a flowchart for the updating processing of the revocation list. In Fig. 47, the left side is the control unit of the device, and the right side is the memory interface of the device.

First, upon receiving the updating revocation list from the communication unit 201 (see Fig. 2) (S1801), the control unit transmits an updating revocation list check command and the received updating revocation list, to the memory interface (S1802).

Upon receiving the updating revocation list check command and updating revocation list from the control unit (S1803), and memory interface sets the busy flag to 1 (busy) (S1804), and generates an integrity check value (ICV) generating key Kicv_rl for the revocation list (S1805).

The integrity check value (ICV) generating key Kicv_rl for tampering checking of the revocation list is generated based on the master key MKicv_rl for generating the ICV key for the revocation list stored within the device beforehand, the initial value IVicv_rl for when generating the ICV key of a revocation list, and the revocation list version contained in the attributes information of the revocation list. Specifically, the integrity check value (ICV) generating key is generated based on the integrity check value (ICV) generating key Kicv_rl = DES (E, MKicv_rl, Version^IVicv_rl). What this equation means is that encryption processing is executed in the DES mode with the master key MKicv_rl, on the exclusive-OR of the Version and the initial value (IVicv_rl).

Next, the memory interface generates an ICV' of the revocation list using the integrity check value (ICV) generating key Kicv_rl (S1806), and executes collation processing ICV' = ICV? with the correct ICV stored in the revocation list beforehand (S1807). The generating processing of the ICV' is performed by processing applying the integrity check value (ICV) generating key Kicv_rl, using the initial value IVrl, based on the DES mode described earlier with Fig. 14.

In the event that ICV' = ICV holds (Yes in S1807), judgement is made that the revocation list is valid with no tampering, the flow proceeds to step S1808, the version (i) of the revocation list currently set is compared with updating revocation list version (j) (S1809), and in the event that the updating revocation list version is newer, the valid flag for the updating revocation list is set to 1(S1810), the busy flag is set to 0 (S1811), and the processing is ended.

On the other hand, the control unit transmits the status read-out command to the memory interface (S1812), confirms that the busy flag is 0(S1813), and in the event that updating revocation list of valid flag is 1 (S1814), saves the updating revocation list in the internal memory as a normal file (S1815). The revocation list stored in the internal memory is read out when checking at the time of processing contents or mounting media.

Now, the present invention has been described with reference to a particular embodiment. However, it is self-evident that one skilled in the art can make various modifications and substitutions to the embodiment without departing from the scope or spirit of the present invention. In other words, the present invention has been disclosed in the form of an example, and the embodiment should not be interpreted restrictively. The scope of the present invention is to be determined solely by the claims given at the beginning.

### Industrial Applicability

Thus, as described above, according to the data reproducing device, data recording device, and data reproducing method, data recording method, and list updating method, according to the present invention, version information is set in the revocation list, so at the time of reading out the contents, the version of the revocation list which the device currently holds and the version of the valid revocation list in the header are compared, and in the event that the version of the revocation list currently being held is older, reading out of the contents is cancelled. Consequently, the contents cannot be read out unless the revocation list is updated, so unauthorized use of contents using an old revocation list can be revoked.

Further, according to the data reproducing device, data recording device, and data reproducing method, data recording method, and list updating method, according to the present invention, an updating revocation list received from a communication path for example, is compared with the version information of the current revocation list, in the updating processing of the revocation list as well, and updating of the revocation list is permitted only in the event that judgment is made that the updating list is a newer revocation list, so processing wherein the list is illegally replaced with an old list can be prevented.

Further, according to the data reproducing device, data recording device, and data reproducing method, data recording method, and program providing medium, according to the present invention, a revocation list is set up to a memory interface, and following the set up can be consecutively used at the memory interface when mounting media or when reproducing contents, which does away with the need for processing such as repeatedly reading out from the internal memory at the time of using contents, so processing is efficiently executed.

Further, according to the data reproducing device, data recording device, and data reproducing method, data recording method, and program providing medium, according to the present invention, a revocation list is set up to a memory interface, and following the set up can be consecutively used at the memory interface when mounting media or when reproducing contents, and also multiple types of IDs which are the object of revoking, i.e., media IDS and contents IDs are provided, with collation processing using a single revocation list being made executable at the device side for each, so multiple contents and media can be revoked with a list that is set in the memory interface once, so the referencing processing of the revocation list at the memory interface unit at the time of inserting media or reading out contents is effectively executed, and use of unauthorized media and reading out of unauthorized contents can be effectively forbidden.

Further, according to the data reproducing device, data recording device, and data reproducing method, data recording method, and program providing medium, according to the present invention, identifiers of both media and contents, which are different categories, are stored in a revocation list, so revocation of both unauthorized media and unauthorized contents can be executed based on a single revocation list, so the revocation lists held at the device side are lessened, and the processing at the device side when mounting media and using contents is lightened.

Further, according to the data reproducing device, data recording device, and data reproducing method, data recording method, and program providing medium, according to the present invention, multiple types of IDs which are the object of revoking, i.e., media IDs and contents IDs are provided to a revocation list which is invalid information of contents and media, and collation processing thereof can be performed as differing operations at the device side of each, e.g., collation with a media identifier at the time of mounting media, and collation with a contents identifier at the time of reproducing contents, so multiple types of media and contents can be revoked with a single revocation list, so the referencing processing of the revocation list at the memory interface unit at the time of inserting media or reading out contents is effectively executed, and use of unauthorized media and reading out of unauthorized contents can be effectively forbidden.

## Claims

1. A data reproducing device for executing reproducing processing of contents stored in data storing means, said data reproducing device comprising:
internal memory for storing a revocation list which is a list storing an identifier of at least one of data storing means or contents which are the object of forbidding processing, said list having version information indicating the newness of the list; and
a controller for executing comparison processing between a valid revocation list version stored in header information of contents which are the object of reproducing, and the version of a revocation list stored in said internal memory, and performs processing accompanying the reproducing of said contents which are the object of reproducing, under the condition of confirmation that the version of the revocation list stored in said internal memory is not older than the version set in the header information of said contents which are the object of reproducing.

2. A data reproducing device according to Claim 1, wherein said controller has a configuration for executing, as processing accompanying said reproducing, comparison processing between an identifier of at least one of data storing means or contents stored in a revocation list stored in said internal memory and an identifier of contents which are the object of reproducing, or an identifier of data storing means storing the contents which are the object of reproducing;
and is of a configuration of executing processing for canceling data reproduction in the event that an identifier of at least one of data storing means or contents stored in a revocation list and an identifier of contents which are the object of reproducing, or an identifier of data storing means storing the contents which are the object of reproducing, match in said comparison processing.

3. A data reproducing device according to Claim 1, wherein said controller has a memory interface for executing accessing to said data storing means, and a control unit for executing control of said memory interface;
and wherein said memory interface is of a configuration for executing comparison processing between a version of a valid revocation list stored in the header information of the contents which are the object of reproducing, and the version of a revocation list stored in said internal memory, based on a data reproduction request command from said control unit.

4. A data reproducing device according to Claim 1, wherein said controller has a configuration for executing comparison processing between the version of an updating revocation list which is externally received, and the version of arevocation list which has already been stored in said internal memory, and executing updating processing of the revocation list by said updating revocation list under the condition of confirmation that the version of the revocation list stored in said internal memory is newer than said updating revocation list.

5. A data reproducing device according to Claim 4, wherein said controller has a configuration for executing a data tampering check with regard to an externally received updating revocation list, based on a data integrity check value (ICV), and for executing updating processing of the revocation list by said updating revocation list, based on a no data tampering judgment.

6. A data recording device for executing recording processing of contents to be stored in data storing means, said data recording device comprising:
internal memory for storing a revocation list which is a list storing an identifier of at least one of data storing means or contents which are the object of forbidding processing, said list having version information indicating the newness of the list; and
a controller for executing processing for setting a setting value specifying reproduction processing execution by non-reference to the revocation list, as a valid revocation list version to be stored in header information of contents which are the object of recording, and executing contents storing processing to said data storing means.

7. A data recording device according to Claim 6, wherein said controller has a memory interface for executing access to said data storing means, and a control unit for executing control of said memory interface;
wherein said memory interface is of a configuration for executing processing for setting the version of a valid revocation list to be stored in the header information of contents which are the object of recording, as a setting value capable of reproduction executing by non-reference to the revocation list, based on a header information generating command accompanying data recording from said control unit.

8. A data recording device according to Claim 6, wherein said controller has a configuration for executing comparison processing between the version of an updating revocation list which is externally received, and the version of a revocation list which has already been stored in said internal memory, and executing updating processing of the revocation list by said updating revocation-list under the condition of confirmation that the version of the revocation list stored in said internal memory is newer than said updating revocation list.

9. A data recording device according to Claim 8, wherein said controller has a configuration for executing a data tampering check with regard to an externally received updating revocation list, based on a data integrity check value (ICV), and for executing updating processing of the revocation list by said updating revocation list, based on a no data tampering judgment.

10. A data reproducing method for a data reproducing device for executing reproducing processing of data stored in data storing means, said method comprising:
a comparing step for executing comparison processing between a valid revocation list version stored in header information of contents which are the object of reproducing, and the version of a revocation list stored in internal memory of said data reproducing device; and
a reproduction-related processing executing step for performing processing accompanying the reproducing of said contents which are the object of reproducing, under the condition of confirmation that the version of the revocation list stored in said internal memory is not older than the version set in the header information of said contents which are the object of reproducing.

11. A data reproducing method according to Claim 10, wherein said reproduction-related processing executing step contains a step for executing comparison processing between an identifier of at least one of data storing means or contents stored in a revocation list stored in said internal memory and an identifier of contents which are the object of reproducing, or an identifier of data storing means storing the contents which are the object of reproducing; and
a step for executing processing for canceling data reproduction in the event that an identifier of at least one of data recording means or contents stored in said revocation list and an identifier of contents which are the object of reproducing, or an identifier of data storing means storing the contents which are the object of reproducing, match in said comparison processing.

12. A data reproducing method according to Claim 10, wherein said data reproducing device has a memory interface for executing accessing to said data storing means, and a control unit for executing control of said memory interface,
said data reproducing method further comprising:
a step for transmitting a data reproduction request command to said memory interface from said control unit; and
a step for executing comparison processing between a version of a valid revocation list stored in the header information of the contents which are the object of reproducing, and the version of a revocation list stored in said internal memory, based on reception of said data reproduction request command at said memory interface.

13. A data recording method for executing recording processing of contents to be stored in data storing means, said method comprising:
a step for executing processing for setting a setting value specifying reproduction processing execution by non-reference to the revocation list, as a valid revocation list version to be stored in header information of contents which are the object of recording;
and a step for executing contents storing processing to said data storing means.

14. A list updating method for a data processing device, storing in internal memory a revocation list which is a list storing an identifier of at least one of data storing means or contents which are the object of forbidding processing, said list having version information indicating the newness of the list;
wherein comparison processing between the version of an updating revocation list which is externally received, and the version of a revocation list which has already been stored in said internal memory, is executed, and updating processing of the revocation list by said updating revocation list is executed under the condition of confirmation that the version of the revocation list stored in said internal memory is newer than said updating revocation list.

15. A list updating method according to Claim 14, further comprising:
a step for executing a data tampering check with regard to an externally received updating revocation list, based on a data integrity check value (ICV);
wherein updating processing of the revocation list by said updating revocation list is executed, based on a no data tampering judgment.

16. A program providing medium for providing a computer program for causing execution on a computer system of data reproducing processing for a data reproducing device which executes reproducing processing of data stored in data storing means, said computer program comprising:
a comparing step for executing comparison processing between a valid revocation list version stored in header information of contents which are the object of reproducing, and the version of a revocation list stored in internal memory of said data reproducing device; and
a reproduction-related processing executing step for performing processing accompanying the reproducing of said contents which are the object of reproducing, under the condition of confirmation that the version of the revocation list stored in said internal memory is not older than the version set in the header information of said contents which are the object of reproducing.

17. A data reproducing device for executing reproducing processing of contents stored in data storing means;
wherein said data reproducing device is of a configuration for reading a revocation list holding identifier data of at least one of data storing means or contents which are the object of forbidding processing into a memory interface which performs access to data storing means, and holding the revocation list in a referable state in consecutively differing processing within the memory interface.

18. A data reproducing device according to Claim 17, further comprising a control unit for executing transmitting processing of a revocation list set command, which is a set command for the revocation list holding identifier data of at least one of data storing means or contents which are the object of forbidding processing as to said memory interface, as processing at the time of activation;
wherein said memory interface is of a configuration for reading the revocation list into the memory interface in response to reception of said revocation list set command, and executing revocation list set processing to enable reference processing within said memory interface.

19. A data reproducing device according to Claim 17, wherein said memory interface is of a configuration for executing a data tampering check based on a data integrity check value (ICV) for the revocation list read into said memory interface, and executing revocation list set processing which enables reference processing within said memory interface, under the condition that a no data tampering judgment has been made.

20. A data reproducing device according to Claim 17, wherein said memory interface is of a configuration wherein a data storing means identifier is received from data storing means wherein data which is the object of reproducing is recorded, collation is executed between said received data storing means identifier and an identifier listed in the revocation list set in said memory interface, and in the event that the identifiers mutually match, the data reproducing processing is cancelled.

21. A data reproducing device according to Claim 17, said memory interface having a configuration wherein an identifier of contents which are the object of reproducing is obtained from header information of the contents stored in the data storing means, collation is executed between the obtained contents identifier and an identifier listed in the revocation list set in said memory interface, and in the event that the identifiers mutually match, the data reproducing processing is cancelled.

22. A data reproducing device according to Claim 17, wherein said revocation list is of a configuration having identifier data for both the data storing means identifier which is the object of forbidding processing and contents which are the object of forbidding processing.

23. A data recording device for executing recording processing of contents to be stored in data storing means;
wherein said data recording device is of a configuration for reading in a revocation list holding identifier data of at least one of data storing means or contents which are the object of forbidding processing into a memory interface which performs access to data storing means, and holding the revocation list in a referable state in consecutively differing processing within the memory interface.

24. A data recording device according to Claim 23, further comprising a control unit for executing transmitting processing of a revocation list set command, which is a set command for the revocation list holding an identifier data of at least one of data storing means or contents which are the object of forbidding processing as to said memory interface, as processing at the time of activation;
wherein said memory interface is of a configuration for reading the revocation list into the memory interface in response to reception of said revocation list set command, and executing revocation list set processing to enable reference processing within said memory interface.

25. A data recording device according to Claim 23, wherein said memory interface is of a configuration for executing a data tampering check based on a data integrity check value (ICV) for the revocation list read into said memory interface, and executing revocation list set processing which enables reference processing within said memory interface, under the condition that a no data tampering judgment has been made.

26. A data recording device according to Claim 23, wherein said memory interface is of a configuration wherein a data storing means identifier is received from data storing means wherein data which is the object of recording is recorded, collation is executed between said received data storing means identifier and an identifier listed in the revocation list set in said memory interface, and in the event that the identifiers mutually match, the data recording processing is cancelled.

27. A data recording device according to Claim 23, wherein said revocation list is of a configuration having identifier data for both the data storing means identifier which is the object of forbidding processing and contents which are the object of forbidding processing.

28. A data reproducing method for executing reproducing processing of contents stored in data storing means, said method comprising:
a step for reading a revocation list holding identifier data of at least one of data storing means or contents which are the object of forbidding processing into a memory interface which performs access to data storing means;
a step for holding the revocation list in a referable state in consecutively differing processing within the memory interface; and
a step for making reference to the revocation list set in said memory interface and judging whether data reproduction processing is permissible or impermissible.

29. A data reproducing method according to Claim 28, further comprising:
a step for executing transmitting processing of a revocation list set command, which is a set command for the revocation list holding an identifier data of at least one of a data recording device or contents which are the object of forbidding processing, as to said memory interface which performs access to data storing means, from a control unit, as processing at the time of activation; and
a step at said memory interface for reading the revocation list into the memory interface in response to reception of said revocation list set command, and executing revocation list set processing to enable reference processing within said memory interface.

30. A data reproducing method according to Claim 28, wherein, further, a data tampering check is executed based on a data integrity check value (ICV) for the revocation list read into said memory interface, and wherein revocation list set processing which enables reference processing within said memory interface is executed under the condition that a no data tampering judgment has been made.

31. A data reproducing method according to Claim 28, further comprising, at said memory interface, a step for receiving a data storing means identifier from data storing means wherein data which is the object of reproducing is recorded, collation is executed between said received data storing means identifier and an identifier listed in the revocation list set in said memory interface, and in the event that the identifiers mutually match, canceling the data reproducing processing.

32. A data reproducing method according to Claim 28, further comprising, at said memory interface, a step for obtaining an identifier of contents which are the object of reproducing from header information of the contents stored in the data storing means, executing collation between the obtained contents identifier and an identifier listed in the revocation list set in said memory interface, and in the event that the identifiers mutually match, canceling the data reproducing processing.

33. A data recording method for executing recording processing of contents to be recorded in data storing means, said method comprising:
a step for reading in a revocation list holding identifier data of at least one of data storing means or contents which are the object of forbidding processing into a memory interface which performs access to data storing means;
a step for holding the revocation list in a referable state in consecutively differing processing within the memory interface; and
a step for making reference to the revocation list set in said memory interface and judging whether data recording processing is permissible or impermissible.

34. A data recording method according to Claim 33, further comprising:
a step for executing transmitting processing of a revocation list set command, which is a set command for the revocation list holding identifier data of at least one of data storing means or contents which are the object of forbidding processing, as to said memory interface, which performs access to data storing means, from a control unit, as processing at the time of activation;
a step at said memory interface for reading the revocation list into the memory interface in response to reception of said revocation list set command, and executing revocation list set processing to enable reference processing within said memory interface; and
a step for making reference to the revocation list set in said memory interface and judging whether data recording processing is permissible or impermissible.

35. A data recording method according to Claim 33, wherein, further, a data tampering check is executed based on a data integrity check value (ICV) for the revocation list read into said memory interface, and revocation list set processing which enables reference processing within said memory interface is executed under the condition that a no data tampering judgment has been made.

36. A data recording method according to Claim 33, further comprising, at said memory interface, a step for receiving a data storing means identifier from data storing means wherein data which is the object of reproducing is recorded, collation is executed between said received data storing means identifier and an identifier listed in the revocation list set in said memory interface, and in the event that the identifiers mutually match, canceling the data recording processing.

37. A program providing medium for providing a computer program for causing execution on a computer system for reproduction processing of contents stored in data storing means, said computer program comprising:
a step for reading a revocation list holding identifier data of at least one of data storing means or contents which are the object of forbidding processing into a memory interface which performs access to data storing means;
a step for holding the revocation list in a referable state in consecutively differing processing within the memory interface; and
a step for making reference to the revocation list set in said memory interface and judging whether data reproduction processing is permissible or impermissible.

38. A program providing medium for providing a computer program for causing execution on a computer system for recording processing for contents to be recorded in data storing means, said computer program comprising:
a step for reading in a revocation list holding identifier data of at least one of data storing means or contents which are the object of forbidding processing into a memory interface which performs access to data storing means;
a step for holding the revocation list in a referable state in consecutively differing processing within the memory interface; and
a step for making reference to the revocation list set in said memory interface and judging whether data recording processing is permissible or impermissible.

39. A data reproducing device for executing reproducing processing of contents stored in data storing means, said data reproducing device having:
a memory interface for executing accessing to said data storing means, and a control unit for executing control of said memory interface;
said memory interface having internal memory storing a revocation list holding identifier data for each of data storing device and contents which are the object of forbidding processing;
wherein said memory interface has a configuration wherein a data storing means identifier is received from data storing means wherein data which is the object of reproducing is recorded, collation is executed between said received data storing means identifier and an identifier listed in said revocation list, and in the event that the identifiers mutually match, the data reproducing processing is cancelled;
and wherein an identifier of contents which are the object of reproducing is obtained from header information of the contents stored in the data storing means, collation is executed between the obtained contents identifier and an identifier listed in said revocation list, and in the event that the identifiers mutually match, the data reproducing processing is cancelled.

40. A data reproducing device according to Claim 39, having a configuration wherein said memory interface receives an identifier of data storing means which are media, based on a media recognition command from said control unit, and executes collation processing between said received data storing means identifier and an identifier listed in said revocation list.

41. A data reproducing device according to Claim 39, having a configuration wherein said memory interface performs mutual authentication processing with data storing means which are media, based on a media recognition command from said control unit, receives a data storing means identifier in said mutual authentication processing, and executes collation processing between said received data storing means identifier and an identifier listed in said revocation list.

42. A data reproducing device according to Claim 39, having a configuration wherein said memory interface obtains a contents identifier stored in header information of contents to be reproduced, based on a data reproduction request command from said control unit, and executes collation processing between said obtained contents identifier and an identifier listed in said revocation list.

43. A data reproducing device according to Claim 39, wherein said memory interface has a configuration for executing a data tampering check based on a data integrity check value (ICV) with regard to an updating revocation list which is externally received, whereby a no data tampering judgment is made;
and wherein comparison processing between the version of an updating revocation list which is externally received, and the version of a revocation list which has already been stored in said internal memory, is executed, and updating processing of the revocation list by said updating revocation list is executed under the condition of confirmation that the version of the revocation list stored in said internal memory is newer than said updating revocation list.

44. A data recording device for executing recording processing of contents stored in data storing-means, said data recording device having:
a memory interface for executing accessing to said data storing means, and a control unit for executing control of said memory interface;
said memory interface having internal memory storing a revocation list holding identifier data for each of data storing device and contents which are the object of forbidding processing;
wherein said memory interface has a configuration wherein a data storing means identifier which is the object of recording data is received, collation is executed between said received data storing means identifier and a list identifier in said revocation list, and in the event that the identifiers mutually match, the data recording processing is cancelled.

45. A data recording device according to Claim 44, having a configuration wherein said memory interface receives an identifier of data storing means which are media, based on a media recognition command from said-control unit, and executes collation processing between said received data storing means identifier and an identifier listed in said revocation list.

46. A data recording device according to Claim 44, having a configuration wherein said memory interface performs mutual authentication processing with data storing means which are media, based on a media recognition command from said control unit, receives a data storing means identifier in said mutual authentication processing, and executes collation processing between said received data storing means identifier and an identifier listed in said revocation list.

47. A data reproducing method for executing reproducing processing of contents stored in data storing means;
wherein, at a memory interface for executing accessing to said data storing means, a data storing means identifier is received from data storing means wherein data which is the object of reproducing is recorded, collation is executed between said received data storing means identifier and an identifier listed in said revocation list, and in the event that the identifiers mutually match, the data reproducing processing is cancelled;
and wherein an identifier of contents which are the object of reproducing is obtained from header information of the contents stored in the data storing means, collation is executed between the obtained contents identifier and an identifier listed in said revocation list, and in the event that the identifiers mutually match, the data reproducing processing is cancelled.

48. A data reproducing method according to Claim 47, having a configuration wherein said memory interface receives an identifier of data storing means which are media, based on a media recognition command from a control unit, and executes collation processing between said received data storing means identifier and an identifier listed in said revocation list.

49. A data reproducing method according to Claim 47, having a configuration wherein said memory interface performs mutual authentication processing with data storing means which are media, based on a media recognition command from a control unit, receives a data storing means identifier in said mutual authentication processing, and executes collation processing between said received data storing means identifier and an identifier listed in said revocation list.

50. A data reproducing method according to Claim 47, having a configuration wherein said memory interface obtains a contents identifier stored in header information of contents to be reproduced, based on a data reproduction-request command from a control unit, and executes collation processing between said obtained contents identifier and an identifier listed in said revocation list.

51. A data recording method for executing recording processing of contents stored in data storing means;
wherein, at a memory interface for executing accessing to said data storing means, an identifier of said data storing means which is the object of recording data is received, collation is executed between said received data storing means identifier and a list identifier in said revocation list, and in the event that the identifiers mutually match, processing for canceling data recording is executed.

52. A data recording method according to Claim 51, having a configuration wherein said memory interface receives an identifier of data storing means which are media, based on a media recognition command from a control unit, and executes collation processing between said received data storing means identifier and an identifier listed in said revocation list.

53. A data recording method according to Claim 51, wherein said memory interface performs mutual authentication processing with data storing means which are media, based on a media recognition command from said control unit, receives a data storing means identifier in said mutual authentication processing, and executes collation processing between said received data storing means identifier and an identifier listed in said revocation list.

54. A program providing medium for providing a computer program for causing execution on a computer system for reproducing processing of contents stored in data storing means, said computer program comprising:
a step for, at a memory interface for executing accessing to said data storing means, receiving a data storing means identifier from data storing means wherein data which is the object of reproducing is recorded, executing collation between said received data storing means identifier and an identifier listed in the revocation list, and in the event that the identifiers mutually match, canceling the data reproducing processing; and
a step for obtaining an identifier of contents which are the object of reproducing from header information of the contents stored in the data storing means, executing collation between the obtained contents identifier and an identifier listed in said revocation list, and in the event that the identifiers mutually match, canceling the data reproducing processing.

55. A program providing medium for providing a computer program for causing execution on a computer system for recording processing of contents to be stored in data storing means, said computer program comprising:
a step for, at a memory interface for executing accessing to said data storing means, receiving an identifier of said data storing means which is the object of recording data, executing collation between said received data storing means identifier and a list identifier in said revocation list, and in the event that the identifiers mutually match, canceling the data recording.
